(19) Europäisches Patentamt
European Patent Office
Office européen des brevets

(11) **EP 4 668 644 A1**

(12) **EUROPEAN PATENT APPLICATION**
published in accordance with Art. 153(4) EPC

(43) Date of publication:
**24.12.2025 Bulletin 2025/52**

(21) Application number: **24756051.9**

(22) Date of filing: **04.02.2024**

(51) International Patent Classification (IPC):
**H04L 5/00** (2006.01)

(52) Cooperative Patent Classification (CPC):
**H04L 5/00; H04W 72/0446; H04W 72/0453; H04W 72/21**

(86) International application number:
**PCT/CN2024/075730**

(87) International publication number:
**WO 2024/169677 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.02.2023 CN 202310181174**

(71) Applicant: **Datang Mobile Communications Equipment Co., Ltd.**
**Beijing 100085 (CN)**

(72) Inventor: **HUANG, Qiuping**
**Beijing 100085 (CN)**

(74) Representative: **Studio Torta S.p.A.**
**Via Viotti, 9**
**10121 Torino (IT)**

(54) **SRS TRANSMISSION METHOD, DEVICE AND APPARATUS, AND STORAGE MEDIUM**

(57) Embodiments of the present disclosure provide an SRS transmission method, device and apparatus, and a storage medium. The method comprises: a terminal determining, on the basis of first information, time domain resources and/or frequency domain resources to which multiple antenna ports of an SRS resource are mapped, wherein at least two antenna ports among the multiple antenna ports of the SRS resource are mapped to different time domain resources; and on the basis of the time domain resources and/or the frequency domain resources, sending to a network device an SRS corresponding to the SRS resource.

Determining, based on first information, a time domain resource and/or a frequency domain resource to which multiple antenna ports of an SRS resource are mapped, wherein at least two antenna ports among the multiple antenna ports of the SRS resource are mapped to different time domain resources ⟿ 100

Sending, based on the time domain resource and/or the frequency domain resource, an SRS corresponding to the SRS resource to a network device ⟿ 101

FIG. 1

## Description

CROSS-REFERENCES TO RELATED APPLICATIONS

The present application claims priority to Chinese patent application No. 202310181174.1 filed on February 17, 2023, entitled "SRS Transmission Method, Device and Apparatus, and Storage Medium", which is hereby incorporated by reference in its entirety.

## FIELD

The present application relates to the field of radio communications, and in particular, to methods and apparatuses for sounding reference signal (SRS) transmission, devices and a storage medium.

## BACKGROUND

In a new radio (NR) system, a sounding reference signal (SRS) may be used for uplink channel state information (CSI) obtaining, downlink CSI obtaining, beam management, etc.

A traditional NR system only supports SRS resources for 1, 2 or 4 antenna ports. As a number of terminal types increases, some terminals may support up to 8 transmit antennas. How to map SRS resources to ensure reception performance in case that SRS resources include more antenna ports (for example, more than 4 antenna ports) is a problem that needs to be solved.

## BRIEF SUMMARY

In view of the problems existing in the related art, embodiments of the present application provide methods and apparatuses for sounding reference signal (SRS) transmission, devices and a storage medium.

An embodiment of the present application provides a method for sounding reference signal (SRS) transmission, performed by a terminal, including:

> determining, based on first information, a time domain resource and/or a frequency domain resource to which multiple antenna ports of an SRS resource are mapped, where at least two antenna ports among the multiple antenna ports of the SRS resource are mapped to different time domain resources; and
> sending, based on the time domain resource and/or the frequency domain resource, an SRS corresponding to the SRS resource to a network device, where the first information includes one or more of:
>
> > a number of antenna ports of the SRS resource; or
> > a number of second time units occupied by the SRS resource within a single first time unit; or
a repetition factor of the SRS resource; or
a number of SRS antenna ports mapped on a single third time unit, or a number of SRS antenna ports respectively mapped on multiple third time units; or
a number of antenna ports of the SRS resource mapped on a single third time unit, or a number of antenna ports of the SRS resource respectively mapped on multiple third time units; or
a number of second time units to which a single antenna port of the SRS resource is mapped within a single first time unit, or a number of second time units to which multiple antenna ports of the SRS resource are respectively mapped within a single first time unit; or
a number of antenna port groups included in the SRS resource; or
a number of third time unit groups to which all antenna ports of the SRS resource are mapped; or
a minimum number of third time units required for all antenna ports of the SRS resource being mapped once; or
a number of frequency hops of a single antenna port of the SRS resource within a single third time unit, or a number of frequency hops of multiple antenna ports of the SRS resource within a single third time unit respectively; or
a number of frequency hops included in a single frequency hopping period of the SRS resource; or
a second time unit to which one or more antenna ports of the SRS resource are mapped within a single first time unit.

In some embodiments, a number of second time units to which each antenna port of the SRS resource is mapped within a single first time unit is the same.

In some embodiments, the number of second time units to which each antenna port of the SRS resource is mapped within a single first time unit is a first value, and the first value is any of:

> a value determined based on the number of second time units occupied by the SRS resource within a single first time unit and the number of third time unit groups to which all antenna ports of the SRS resource are mapped; or
> a value determined based on the number of second time units occupied by the SRS resource within a single first time unit and the minimum number of third time units required for all antenna ports of the SRS resource being mapped once; or
> a value determined based on the number of second time units occupied by the SRS resource within a single first time unit and a value agreed by a protocol;

or

the number of second time units to which a single antenna port of the SRS resource is mapped within a single first time unit; or

a value determined based on the number of second time units to which multiple antenna ports of the SRS resource are respectively mapped within a single first time unit; or

a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops included in a single frequency hopping period of the SRS resource; or

a value determined based on the repetition factor of the SRS resource and a value agreed by a protocol.

In some embodiments, at least two antenna ports of the SRS resource are mapped to different numbers of second time units within a single first time unit.

In some embodiments, a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops included in a single frequency hopping period of the SRS resource; or

a value determined based on the repetition factor of the SRS resource and a value agreed by a protocol.

In some embodiments, a number of second time units to which a second part of antenna ports of the SRS resource are mapped within a single first time unit is a third value, and the third value is any of:

a value determined based on the number of second time units occupied by the SRS resource within a single first time unit, the number of antenna port groups included in the SRS resource, and the second value; or

a value determined based on the number of second time units occupied by the SRS resource within a single first time unit, the number of third time unit groups to which all antenna ports of the SRS resource are mapped, and the second value; or

a value determined based on the number of second time units occupied by the SRS resource within a single first time unit, the minimum number of third time units required for all antenna ports of the SRS resource being mapped once, and the second value; or

a value determined based on the number of second time units occupied by the SRS resource within a single first time unit, the number of antenna ports of the SRS resource, the number of SRS antenna ports mapped on a single third time unit, and the second value; or

a value determined based on the number of second time units occupied by the SRS resource within a single first time unit, the number of antenna ports of the SRS resource, the number of SRS antenna ports respectively mapped on multiple third time units, and the second value; or

a value determined based on the number of second time units occupied by the SRS resource within a single first time unit, the number of antenna ports of the SRS resource, the number of antenna ports of the SRS resource mapped on a single third time unit, and the second value; or

a value determined based on the number of second time units occupied by the SRS resource within a single first time unit, the number of antenna ports of the SRS resource, the number of antenna ports of the SRS resource respectively mapped on multiple third time units, and the second value.

In some embodiments, a first antenna port of the SRS resource is mapped to a same set of frequency domain units on all second time units being mapped to within a single first time unit.

In some embodiments, a first antenna port of the SRS resource is mapped to different sets of frequency domain units on different second time units being mapped to within a single first time unit.

In some embodiments, all second time units to which a first antenna port of the SRS resource is mapped within a single first time unit are divided into multiple symbol groups, each symbol group includes R second time units, and the first antenna port is mapped to different sets of frequency domain units on different symbol groups, and is mapped to a same set of frequency domain units on R second time units within a same symbol group, where R is a value of the repetition factor of the SRS resource.

In some embodiments, the same set of frequency domain units is a set consisting of frequency domain units included in a full hopping bandwidth of the SRS resource.

In some embodiments, the first antenna port of the SRS resource is mapped to different sets of frequency domain units on multiple first time units, and is mapped to the same set of frequency domain units on all second time units being mapped to within the same first time unit.

In some embodiments, the different sets of frequency domain units include a same number of frequency domain units.

In some embodiments, a number of frequency domain units included in any set of frequency domain units is equal to a ratio of a number of frequency domain units included in a full hopping bandwidth of the SRS resource to a number of second time units to which the first antenna port is mapped within a single first time unit.

In some embodiments, the SRS resource is not configured for performing frequency hopping transmission, and/or a value of the repetition factor of the SRS resource is equal to the number of second time units occupied by the SRS resource within a single first time unit.

In some embodiments, the SRS resource is configured for performing frequency hopping transmission, and a value of the repetition factor of the SRS resource is equal to a number of second time units to which the first antenna port is mapped within a single first time unit.

In some embodiments, the SRS resource is configured for performing frequency hopping transmission, and/or a value of the repetition factor of the SRS resource is 1.

In some embodiments, the SRS resource is configured for performing frequency hopping transmission, and/or a value of the repetition factor of the SRS resource is greater than or equal to 2.

In some embodiments, a frequency hopping mode used by a frequency domain resource to which a first antenna port of the SRS resource is mapped is a first frequency hopping mode, a second frequency hopping mode, or a third frequency hopping mode,

where the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;
the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and
the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, where R is a value of the repetition factor of the SRS resource.

In some embodiments, the number of antenna port groups included in the SRS resource, or the number of third time unit groups to which all antenna ports of the SRS resource are mapped, or the minimum number of third time units required for all antenna ports of the SRS resource being mapped once, is determined based on any of:

the number of antenna ports of the SRS resource and the number of SRS antenna ports mapped on a single third time unit; or
the number of antenna ports of the SRS resource and the number of SRS antenna ports respectively mapped on multiple third time units; or
the number of antenna ports of the SRS resource and the number of antenna ports of the SRS resource mapped on a single third time unit; or
the number of antenna ports of the SRS resource and the number of antenna ports of the SRS resource respectively mapped on multiple third time units; or
the number of second time units occupied by the SRS resource within a single first time unit, the repetition factor of the SRS resource, and the number of frequency hops of a single antenna port of the SRS resource within a single third time unit; or
the number of second time units occupied by the SRS resource within a single first time unit, the repetition factor of the SRS resource, and the number of frequency hops of multiple antenna ports of the SRS resource within a single third time unit respectively; or
the number of second time units occupied by the SRS resource within a single first time unit, the repetition factor of the SRS resource, and the number of frequency hops included in a single frequency hopping period of the SRS resource; or
the number of second time units occupied by the SRS resource within a single first time unit and the number of second time units to which a single antenna port of the SRS resource is mapped within a single first time unit; or
the number of second time units occupied by the SRS resource within a single first time unit and the number of second time units to which multiple antenna ports of the SRS resource are respectively mapped within a single first time unit.

In some embodiments, the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or
the number of second time units occupied by the SRS resource within a single first time unit, the number of antenna ports of the SRS resource, and the number of SRS antenna ports respectively mapped on multiple third time units; or
the number of antenna ports of the SRS resource mapped on a single third time unit, the number of second time units occupied by the SRS resource within a single first time unit, and the number of antenna ports of the SRS resource; or
the number of antenna ports of the SRS resource respectively mapped on multiple third time units, the number of second time units occupied by the SRS resource within a single first time unit, and the number of antenna ports of the SRS resource; or
the repetition factor of the SRS resource and the number of frequency hops of a single antenna port of the SRS resource within a single third time unit; or
the repetition factor of the SRS resource and the number of frequency hops of multiple antenna ports of the SRS resource within a single third time unit respectively; or
the repetition factor of the SRS resource and the number of frequency hops included in a single frequency hopping period of the SRS resource; or
the number of second time units occupied by the SRS resource within a single first time unit and the number of third time unit groups to which all antenna ports of the SRS resource are mapped; or
the number of second time units occupied by the SRS resource within a single first time unit and the minimum number of third time units required for all antenna ports of the SRS resource being mapped once.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource and the number of antenna port groups included in the SRS resource; or
the number of antenna ports of the SRS resource and the number of third time unit groups to which all antenna ports of the SRS resource are mapped; or
the number of antenna ports of the SRS resource and the minimum number of third time units required for all antenna ports of the SRS resource being mapped once; or
the number of second time units occupied by the SRS resource within a single first time unit, the number of antenna ports of the SRS resource, the repetition factor of the SRS resource, and the number of frequency hops of a single antenna port of the SRS resource within a single third time unit; or
the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or
the number of second time units occupied by the SRS resource within a single first time unit, the number of antenna ports of the SRS resource, the repetition factor of the SRS resource, and the number of frequency hops included in a single frequency hopping period of the SRS resource; or
the number of second time units occupied by the SRS resource within a single first time unit, the number of antenna ports of the SRS resource, and the number of second time units to which a single antenna port of the SRS resource is mapped within a single first time unit; or
the number of second time units occupied by the SRS resource within a single first time unit, the number of antenna ports of the SRS resource, and the number of second time units to which multiple antenna ports of the SRS resource are respectively mapped within a single first time unit.

In some embodiments, determining, based on the first information, the time domain resource and/or the frequency domain resource to which multiple antenna ports of the SRS resource are mapped includes:

based on the number of antenna ports of the SRS resource and/or indication information sent from the network device, determining, based on the first information, the time domain resource and/or the frequency domain resource to which multiple antenna ports of the SRS resource are mapped.

In some embodiments, the method further includes:
receiving second information sent from the network device, where the second information is used to indicate one or more items of the first information.

An embodiment of the present application further provides a method for sounding reference signal (SRS) transmission, performed by a network device, including:

receiving, based on a time domain resource and/or a frequency domain resource to which multiple antenna ports of an SRS resource are mapped, an SRS corresponding to the SRS resource sent from a terminal, where the time domain resource and/or the frequency domain resource is determined based on first information, or the time domain resource and/or the frequency domain resource is used to determine second information, and the second information is used to indicate one or more items of the first information,
where among the multiple antenna ports of the SRS resource, at least two antenna ports are mapped to different time units; and
where the first information includes one or more of:

a number of antenna ports of the SRS resource; or
a number of second time units occupied by the SRS resource within a single first time unit; or
a repetition factor of the SRS resource; or
a number of SRS antenna ports mapped on a single third time unit, or a number of SRS antenna ports respectively mapped on multiple third time units; or
a number of antenna ports of the SRS resource mapped on a single third time unit, or a number of antenna ports of the SRS resource respectively mapped on multiple third time units; or
a number of second time units to which a single antenna port of the SRS resource is mapped within a single first time unit, or a number of second time units to which multiple antenna ports of the SRS resource are respectively mapped within a single first time unit; or
a number of antenna port groups included in the SRS resource; or
a number of third time unit groups to which all antenna ports of the SRS resource are mapped; or
a minimum number of third time units required for all antenna ports of the SRS resource being mapped once; or

a number of frequency hops of a single antenna port of the SRS resource within a single third time unit, or a number of frequency hops of multiple antenna ports of the SRS resource within a single third time unit respectively; or

a number of frequency hops included in a single frequency hopping period of the SRS resource; or

a second time unit to which one or more antenna ports of the SRS resource are mapped within a single first time unit.

In some embodiments, a number of second time units to which each antenna port of the SRS resource is mapped within a single first time unit is the same.

In some embodiments, the number of second time units to which each antenna port of the SRS resource is mapped within a single first time unit is a first value, and the first value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

the number of second time units to which a single antenna port of the SRS resource is mapped within a single first time unit; or

a value determined based on the number of second time units to which multiple antenna ports of the SRS resource are respectively mapped within a single first time unit; or

a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource;

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops included in a single frequency hopping period of the SRS resource; or

a value determined based on the repetition factor of the SRS resource and a value agreed by a protocol.

In some embodiments, at least two antenna ports of the SRS resource are mapped to different numbers of second time units within a single first time unit.

In some embodiments, a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops included in a single frequency hopping period of the SRS resource; or

a value determined based on the repetition factor of the SRS resource and a value agreed by a protocol.

In some embodiments, a number of second time units to which a second part of antenna ports of the SRS resource are mapped within a single first time unit is a third value, and the third value is any of:

a value determined based on the number of second time units occupied by the SRS resource within a single first time unit, the number of antenna port groups included in the SRS resource, and the second value; or

a value determined based on the number of second time units occupied by the SRS resource within a single first time unit, the number of third time unit groups to which all antenna ports of the SRS resource are mapped, and the second value; or

a value determined based on the number of second time units occupied by the SRS resource within a single first time unit, the minimum number of third time units required for all antenna ports of the SRS resource being mapped once, and the second value; or

a value determined based on the number of second time units occupied by the SRS resource within a single first time unit, the number of antenna ports of the SRS resource, the number of SRS antenna ports mapped on a single third time unit, and the second value; or

a value determined based on the number of second time units occupied by the SRS resource within a single first time unit, the number of antenna ports of the SRS resource, the number of SRS antenna ports respectively mapped on multiple third time units, and the second value; or

a value determined based on the number of second time units occupied by the SRS resource within a single first time unit, the number of antenna ports of the SRS resource, the number of antenna ports of the SRS resource mapped on a single third time unit, and the second value; or

a value determined based on the number of second time units occupied by the SRS resource within a single first time unit, the number of antenna ports of the SRS resource, the number of antenna ports of the SRS resource respectively mapped on multiple third time units, and the second value.

In some embodiments, a first antenna port of the SRS resource is mapped to a same set of frequency domain units on all second time units being mapped to within a single first time unit.

In some embodiments, a first antenna port of the SRS resource is mapped to different sets of frequency domain units on different second time units being mapped to within a single first time unit.

In some embodiments, all second time units to which a first antenna port of the SRS resource is mapped within a single first time unit are divided into multiple symbol groups, each symbol group includes R second time units, and the first antenna port is mapped to different sets of frequency domain units on different symbol groups, and is mapped to a same set of frequency domain units on R second time units within a same symbol group, where R is a value of the repetition factor of the SRS resource.

In some embodiments, the same set of frequency domain units is a set consisting of frequency domain units included in a full hopping bandwidth of the SRS resource.

In some embodiments, the first antenna port of the SRS resource is mapped to different sets of frequency domain units on multiple first time units, and is mapped to the same set of frequency domain units on all second time units being mapped to within the same first time unit.

In some embodiments, the different sets of frequency domain units include a same number of frequency domain units.

In some embodiments, a number of frequency domain units included in any set of frequency domain units is equal to a ratio of a number of frequency domain units included in a full hopping bandwidth of the SRS resource to a number of second time units to which the first antenna port is mapped within a single first time unit.

In some embodiments, the SRS resource is not configured for performing frequency hopping transmission, and/or a value of the repetition factor of the SRS resource is equal to the number of second time units occupied by the SRS resource within a single first time unit.

In some embodiments, the SRS resource is configured for performing frequency hopping transmission, and a value of the repetition factor of the SRS resource is equal to a number of second time units to which the first antenna port is mapped within a single first time unit.

In some embodiments, the SRS resource is configured for performing frequency hopping transmission, and/or a value of the repetition factor of the SRS resource is 1.

In some embodiments, the SRS resource is configured for performing frequency hopping transmission, and/or a value of the repetition factor of the SRS resource is greater than or equal to 2.

In some embodiments, a frequency hopping mode used by a frequency domain resource to which a first antenna port of the SRS resource is mapped is a first frequency hopping mode, a second frequency hopping mode, or a third frequency hopping mode,

where the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;

the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and

the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, where R is a value of the repetition factor of the SRS resource.

In some embodiments, the number of antenna port groups included in the SRS resource, or the number of third time unit groups to which all antenna ports of the SRS resource are mapped, or the minimum number of third time units required for all antenna ports of the SRS resource being mapped once, is determined based on any of:

the number of antenna ports of the SRS resource and the number of SRS antenna ports mapped on a single third time unit; or

the number of antenna ports of the SRS resource and the number of SRS antenna ports respectively mapped on multiple third time units; or

the number of antenna ports of the SRS resource and the number of antenna ports of the SRS resource mapped on a single third time unit; or

the number of antenna ports of the SRS resource and the number of antenna ports of the SRS resource respectively mapped on multiple third time units; or

the number of second time units occupied by the SRS resource within a single first time unit, the repetition factor of the SRS resource, and the number of frequency hops of a single antenna port of the SRS resource within a single third time unit; or

the number of second time units occupied by the SRS resource within a single first time unit, the repetition factor of the SRS resource, and the number of frequency hops of multiple antenna ports of the SRS resource within a single third time unit respectively; or

the number of second time units occupied by the SRS resource within a single first time unit, the repetition factor of the SRS resource, and the number of frequency hops included in a single frequency hopping period of the SRS resource; or

the number of second time units occupied by the SRS resource within a single first time unit and the number of second time units to which a single antenna port of the SRS resource is mapped within a single first time unit; or

the number of second time units occupied by the SRS resource within a single first time unit and the number of second time units to which multiple antenna ports of the SRS resource are respectively mapped within a single first time unit.

In some embodiments, the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or

the number of second time units occupied by the SRS resource within a single first time unit, the number of antenna ports of the SRS resource, and the number of SRS antenna ports respectively mapped on multiple third time units; or

the number of antenna ports of the SRS resource mapped on a single third time unit, the number of second time units occupied by the SRS resource within a single first time unit, and the number of antenna ports of the SRS resource; or

the number of antenna ports of the SRS resource respectively mapped on multiple third time units, the number of second time units occupied by the SRS resource within a single first time unit, and the number of antenna ports of the SRS resource; or

the repetition factor of the SRS resource and the number of frequency hops of a single antenna port of the SRS resource within a single third time unit; or

the repetition factor of the SRS resource and the number of frequency hops of multiple antenna ports of the SRS resource within a single third time unit respectively; or

the repetition factor of the SRS resource and the number of frequency hops included in a single frequency hopping period of the SRS resource; or

the number of second time units occupied by the SRS resource within a single first time unit and the number of third time unit groups to which all antenna ports of the SRS resource are mapped; or

the number of second time units occupied by the SRS resource within a single first time unit and the minimum number of third time units required for all antenna ports of the SRS resource being mapped once.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource and the number of antenna port groups included in the SRS resource; or

the number of antenna ports of the SRS resource and the number of third time unit groups to which all antenna ports of the SRS resource are mapped; or

the number of antenna ports of the SRS resource and the minimum number of third time units required for all antenna ports of the SRS resource being mapped once; or

the number of second time units occupied by the SRS resource within a single first time unit, the number of antenna ports of the SRS resource, the repetition factor of the SRS resource, and the number of frequency hops of a single antenna port of the SRS resource within a single third time unit; or

the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or

the number of second time units occupied by the SRS resource within a single first time unit, the number of antenna ports of the SRS resource, the repetition factor of the SRS resource, and the number of frequency hops included in a single frequency hopping period of the SRS resource; or

the number of second time units occupied by the SRS resource within a single first time unit, the number of antenna ports of the SRS resource, and the number of second time units to which a single antenna port of the SRS resource is mapped within a single first time unit; or

the number of second time units occupied by the SRS resource within a single first time unit, the number of antenna ports of the SRS resource, and the number of second time units to which multiple antenna ports of the SRS resource are respectively mapped within a single first time unit.

In some embodiments, determining, based on the first information, the time domain resource and/or the frequency domain resource to which multiple antenna ports of the SRS resource are mapped includes:

based on the number of antenna ports of the SRS resource and/or indication information sent from the network device to the terminal, determining, based on the first information, the time domain resource and/or the frequency domain resource to which multiple antenna ports of the SRS resource are mapped.

In some embodiments, before receiving the SRS corresponding to the SRS resource sent from the terminal, the method further includes:

determining, based on the time domain resource and/or the frequency domain resource to which multiple antenna ports of the SRS resource are mapped, the second information; and

sending the second information to the terminal.

An embodiment of the present application further provides a terminal, including a memory, a transceiver and a processor,

where the memory is used for storing a computer program, the transceiver is used for receiving and sending data under control of the processor, and the processor is used for reading the computer program in the memory and performing the following operations:

determining, based on first information, a time domain resource and/or a frequency domain resource to which multiple antenna ports of a sounding reference signal (SRS) resource are mapped, where at least two antenna ports among the multiple antenna ports of the SRS resource are mapped to different time domain resources; and

sending, based on the time domain resource and/or the frequency domain resource, an SRS corresponding to the SRS resource to a network device, where the first information includes one or more of:

a number of antenna ports of the SRS resource; or

a number of second time units occupied by the SRS resource within a single first time unit; or

a repetition factor of the SRS resource; or

a number of SRS antenna ports mapped on a single third time unit, or a number of SRS antenna ports respectively mapped on multiple third time units; or

a number of antenna ports of the SRS resource mapped on a single third time unit, or a number of antenna ports of the SRS resource respectively mapped on multiple third time units; or

a number of second time units to which a single antenna port of the SRS resource is mapped within a single first time unit, or a number of second time units to which multiple antenna ports of the SRS resource are respectively mapped within a single first time unit; or

a number of antenna port groups included in the SRS resource; or

a number of third time unit groups to which all antenna ports of the SRS resource are mapped; or

a minimum number of third time units required for all antenna ports of the SRS resource being mapped once; or

a number of frequency hops of a single antenna port of the SRS resource within a single third time unit, or a number of frequency hops of multiple antenna ports of the SRS resource within a single third time unit respectively; or

a number of frequency hops included in a single frequency hopping period of the SRS resource; or

a second time unit to which one or more antenna ports of the SRS resource are mapped within a single first time unit.

In some embodiments, a number of second time units to which each antenna port of the SRS resource is mapped within a single first time unit is the same.

In some embodiments, the number of second time units to which each antenna port of the SRS resource is mapped within a single first time unit is a first value, and the first value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

the number of second time units to which a single antenna port of the SRS resource is mapped within a single first time unit; or

a value determined based on the number of second time units to which multiple antenna ports of the SRS resource are respectively mapped within a single first time unit; or

a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops included in a single frequency hopping period of the SRS resource; or

a value determined based on the repetition factor of the SRS resource and a value agreed by a protocol.

In some embodiments, at least two antenna ports of the SRS resource are mapped to different numbers of second time units within a single first time unit.

In some embodiments, a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops included in a single frequency hopping period of the SRS resource; or

a value determined based on the repetition factor of the SRS resource and a value agreed by a protocol.

In some embodiments, a number of second time units to which a second part of antenna ports of the SRS resource are mapped within a single first time unit is a third value, and the third value is any of:

a value determined based on the number of second time units occupied by the SRS resource within a single first time unit, the number of antenna port groups included in the SRS resource, and the second value; or

a value determined based on the number of second time units occupied by the SRS resource within a single first time unit, the number of third time unit groups to which all antenna ports of the SRS resource are mapped, and the second value; or

a value determined based on the number of second time units occupied by the SRS resource within a single first time unit, the minimum number of third time units required for all antenna ports of the SRS resource being mapped once, and the second value; or

a value determined based on the number of second time units occupied by the SRS resource within a single first time unit, the number of antenna ports of the SRS resource, the number of SRS antenna ports mapped on a single third time unit, and the second value; or

a value determined based on the number of second time units occupied by the SRS resource within a single first time unit, the number of antenna ports of the SRS resource, the number of SRS antenna ports respectively mapped on multiple third time units, and the second value; or

a value determined based on the number of second time units occupied by the SRS resource within a single first time unit, the number of antenna ports of the SRS resource, the number of antenna ports of the SRS resource mapped on a single third time unit, and the second value; or

a value determined based on the number of second time units occupied by the SRS resource within a single first time unit, the number of antenna ports of the SRS resource, the number of antenna ports of the SRS resource respectively mapped on multiple third time units, and the second value.

In some embodiments, a first antenna port of the SRS resource is mapped to a same set of frequency domain units on all second time units being mapped to within a single first time unit.

In some embodiments, a first antenna port of the SRS resource is mapped to different sets of frequency domain units on different second time units being mapped to within a single first time unit.

In some embodiments, all second time units to which a first antenna port of the SRS resource is mapped within a single first time unit are divided into multiple symbol groups, each symbol group includes R second time units, and the first antenna port is mapped to different sets of frequency domain units on different symbol groups, and is mapped to a same set of frequency domain units on R second time units within a same symbol group, where R is a value of the repetition factor of the SRS resource.

In some embodiments, the same set of frequency domain units is a set consisting of frequency domain units included in a full hopping bandwidth of the SRS resource.

In some embodiments, the first antenna port of the SRS resource is mapped to different sets of frequency domain units on multiple first time units, and is mapped to the same set of frequency domain units on all second time units being mapped to within the same first time unit.

In some embodiments, the different sets of frequency domain units include a same number of frequency domain units.

In some embodiments, a number of frequency domain units included in any set of frequency domain units is equal to a ratio of a number of frequency domain units included in a full hopping bandwidth of the SRS resource to a number of second time units to which the first antenna port is mapped within a single first time unit.

In some embodiments, the SRS resource is not configured for performing frequency hopping transmission, and/or a value of the repetition factor of the SRS resource is equal to the number of second time units occupied by the SRS resource within a single first time unit.

In some embodiments, the SRS resource is configured for performing frequency hopping transmission, and a value of the repetition factor of the SRS resource is equal to a number of second time units to which the first antenna port is mapped within a single first time unit.

In some embodiments, the SRS resource is configured for performing frequency hopping transmission, and/or a value of the repetition factor of the SRS resource is 1.

In some embodiments, the SRS resource is configured for performing frequency hopping transmission, and/or a value of the repetition factor of the SRS resource is greater than or equal to 2.

In some embodiments, a frequency hopping mode used by a frequency domain resource to which a first antenna port of the SRS resource is mapped is a first frequency hopping mode, a second frequency hopping mode, or a third frequency hopping mode,

where the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;

the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and

the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, where R is a value of the repetition factor of the SRS resource.

In some embodiments, the number of antenna port groups included in the SRS resource, or the number of third time unit groups to which all antenna ports of the SRS resource are mapped, or the minimum number of third time units required for all antenna ports of the SRS resource being mapped once, is determined based on any of:

the number of antenna ports of the SRS resource and the number of SRS antenna ports mapped on a single third time unit; or

the number of antenna ports of the SRS resource and the number of SRS antenna ports respectively mapped on multiple third time units; or

the number of antenna ports of the SRS resource and the number of antenna ports of the SRS resource mapped on a single third time unit; or

the number of antenna ports of the SRS resource and the number of antenna ports of the SRS resource respectively mapped on multiple third time units; or

the number of second time units occupied by the SRS resource within a single first time unit, the repetition factor of the SRS resource, and the number of frequency hops of a single antenna port of the SRS resource within a single third time unit; or

the number of second time units occupied by the SRS resource within a single first time unit, the repetition factor of the SRS resource, and the number of frequency hops of multiple antenna ports of the SRS resource within a single third time unit respectively; or

the number of second time units occupied by the SRS resource within a single first time unit, the repetition factor of the SRS resource, and the number of frequency hops included in a single frequency hopping period of the SRS resource; or

the number of second time units occupied by the SRS resource within a single first time unit and the number of second time units to which a single antenna port of the SRS resource is mapped within a single first time unit; or

the number of second time units occupied by the SRS resource within a single first time unit and the number of second time units to which multiple antenna ports of the SRS resource are respectively mapped within a single first time unit.

In some embodiments, the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or

the number of second time units occupied by the SRS resource within a single first time unit, the number of antenna ports of the SRS resource, and the number of SRS antenna ports respectively mapped on multiple third time units; or

the number of antenna ports of the SRS resource mapped on a single third time unit, the number of second time units occupied by the SRS resource within a single first time unit, and the number of antenna ports of the SRS resource; or

the number of antenna ports of the SRS resource respectively mapped on multiple third time units, the number of second time units occupied by the SRS resource within a single first time unit, and the number of antenna ports of the SRS resource; or

the repetition factor of the SRS resource and the number of frequency hops of a single antenna port of the SRS resource within a single third time unit; or

the repetition factor of the SRS resource and the number of frequency hops of multiple antenna ports of the SRS resource within a single third time unit respectively; or

the repetition factor of the SRS resource and the number of frequency hops included in a single frequency hopping period of the SRS resource; or

the number of second time units occupied by the SRS resource within a single first time unit and the number of third time unit groups to which all antenna ports of the SRS resource are mapped; or

the number of second time units occupied by the SRS resource within a single first time unit and the minimum number of third time units required for all antenna ports of the SRS resource being mapped once.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource and the number of antenna port groups included in the SRS resource; or

the number of antenna ports of the SRS resource and the number of third time unit groups to which all antenna ports of the SRS resource are mapped; or

the number of antenna ports of the SRS resource and the minimum number of third time units required for all antenna ports of the SRS resource being mapped once; or

the number of second time units occupied by the SRS resource within a single first time unit, the number of antenna ports of the SRS resource, the repetition factor of the SRS resource, and the number of frequency hops of a single antenna port of the SRS resource within a single third time unit; or

the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or

the number of second time units occupied by the SRS resource within a single first time unit, the number of antenna ports of the SRS resource, the repetition factor of the SRS resource, and the number of frequency hops included in a single frequency hopping period of the SRS resource; or

the number of second time units occupied by the SRS resource within a single first time unit, the number of antenna ports of the SRS resource, and the number of second time units to which a single antenna port of the SRS resource is mapped within a single first time unit; or

the number of second time units occupied by the SRS resource within a single first time unit, the number of antenna ports of the SRS resource, and the number of second time units to which multiple antenna ports of the SRS resource are respectively mapped within a single first time unit.

In some embodiments, determining, based on the first information, the time domain resource and/or the frequency domain resource to which multiple antenna ports of the SRS resource are mapped includes:

based on the number of antenna ports of the SRS resource and/or indication information sent from the network device, determining, based on the first information, the time domain resource and/or the frequency domain resource to which multiple antenna ports of the SRS resource are mapped.

In some embodiments, the operations further include:

receiving second information sent from the network device, where the second information is used to indicate one or more items of the first information.

An embodiment of the present application further provides a network device, including a memory, a transceiver and a processor,

where the memory is used for storing a computer program, the transceiver is used for receiving and sending data under control of the processor, and the processor is used for reading the computer program in the memory and performing the following operations:

receiving, based on a time domain resource and/or a frequency domain resource to which multiple antenna ports of a sounding reference signal (SRS) resource are mapped, an SRS corresponding to the SRS resource sent from a terminal, where the time domain resource and/or the frequency domain resource is determined based on first information, or the time domain resource and/or the frequency domain resource is used to determine second information, and the second information is used to indicate one or more items of the first information,

where among the multiple antenna ports of the SRS resource, at least two antenna ports are mapped to different time units; and

where the first information includes one or more of:

a number of antenna ports of the SRS resource; or

a number of second time units occupied by the SRS resource within a single first time unit; or

a repetition factor of the SRS resource; or

a number of SRS antenna ports mapped on a single third time unit, or a number of SRS antenna ports respectively mapped on multiple third time units; or

a number of antenna ports of the SRS resource mapped on a single third time unit, or a number of antenna ports of the SRS resource respectively mapped on multiple third time units; or

a number of second time units to which a single antenna port of the SRS resource is mapped within a single first time unit, or a number of second time units to which multiple antenna ports of the SRS resource are respectively mapped within a single first time unit; or

a number of antenna port groups included in the SRS resource; or

a number of third time unit groups to which all antenna ports of the SRS resource are mapped; or

a minimum number of third time units required for all antenna ports of the SRS resource being mapped once; or

a number of frequency hops of a single antenna port of the SRS resource within a single third time unit, or a number of frequency hops of multiple antenna ports of the SRS resource within a single third time unit respectively; or

a number of frequency hops included in a single frequency hopping period of the SRS resource; or

a second time unit to which one or more antenna ports of the SRS resource are mapped within a single first time unit.

In some embodiments, a number of second time units to which each antenna port of the SRS resource is mapped within a single first time unit is the same.

In some embodiments, the number of second time units to which each antenna port of the SRS resource is mapped within a single first time unit is a first value, and the first value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

the number of second time units to which a single antenna port of the SRS resource is mapped within a single first time unit; or

a value determined based on the number of second time units to which multiple antenna ports of the SRS resource are respectively mapped within a single first time unit; or

a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops included in a single frequency hopping period of the SRS resource; or

a value determined based on the repetition factor of the SRS resource and a value agreed by a protocol.

In some embodiments, at least two antenna ports of the SRS resource are mapped to different numbers of second time units within a single first time unit.

In some embodiments, a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops included in a single frequency hopping period of the SRS resource; or

a value determined based on the repetition factor of the SRS resource and a value agreed by a protocol.

In some embodiments, a number of second time units to which a second part of antenna ports of the SRS resource are mapped within a single first time unit is a third value, and the third value is any of:

a value determined based on the number of second time units occupied by the SRS resource within a single first time unit, the number of antenna port groups included in the SRS resource, and the second value; or

a value determined based on the number of second time units occupied by the SRS resource within a single first time unit, the number of third time unit groups to which all antenna ports of the SRS resource are mapped, and the second value; or

a value determined based on the number of second time units occupied by the SRS resource within a single first time unit, the minimum number of third time units required for all antenna ports of the SRS resource being mapped once, and the second value; or

a value determined based on the number of second time units occupied by the SRS resource within a single first time unit, the number of antenna ports of the SRS resource, the number of SRS antenna ports mapped on a single third time unit, and the second value; or

a value determined based on the number of second time units occupied by the SRS resource within a single first time unit, the number of antenna ports of the SRS resource, the number of SRS antenna ports respectively mapped on multiple third time units, and the second value; or

a value determined based on the number of second time units occupied by the SRS resource within a single first time unit, the number of antenna ports of the SRS resource, the number of antenna ports of the SRS resource mapped on a single third time unit, and the second value; or

a value determined based on the number of second time units occupied by the SRS resource within a single first time unit, the number of antenna ports of the SRS resource, the number of antenna ports of the SRS resource respectively mapped on multiple third time units, and the second value.

In some embodiments, a first antenna port of the SRS resource is mapped to a same set of frequency domain units on all second time units being mapped to within a single first time unit.

In some embodiments, a first antenna port of the SRS resource is mapped to different sets of frequency domain units on different second time units being mapped to within a single first time unit.

In some embodiments, all second time units to which a first antenna port of the SRS resource is mapped within a single first time unit are divided into multiple symbol groups, each symbol group includes R second time units, and the first antenna port is mapped to different sets of frequency domain units on different symbol groups, and is mapped to a same set of frequency domain units on R second time units within a same symbol group, where R is a value of the repetition factor of the SRS resource.

In some embodiments, the same set of frequency domain units is a set consisting of frequency domain units included in a full hopping bandwidth of the SRS resource.

In some embodiments, the first antenna port of the SRS resource is mapped to different sets of frequency domain units on multiple first time units, and is mapped to the same set of frequency domain units on all second time units being mapped to within the same first time unit.

In some embodiments, the different sets of frequency domain units include a same number of frequency domain units.

In some embodiments, a number of frequency domain units included in any set of frequency domain units is equal to a ratio of a number of frequency domain units included in a full hopping bandwidth of the SRS resource to a number of second time units to which the first antenna port is mapped within a single first time unit.

In some embodiments, the SRS resource is not configured for performing frequency hopping transmission, and/or a value of the repetition factor of the SRS resource is equal to the number of second time units occupied by the SRS resource within a single first time unit.

In some embodiments, the SRS resource is configured for performing frequency hopping transmission, and a value of the repetition factor of the SRS resource is equal to a number of second time units to which the first antenna port is mapped within a single first time unit.

In some embodiments, the SRS resource is configured for performing frequency hopping transmission, and/or a value of the repetition factor of the SRS resource is 1.

In some embodiments, the SRS resource is configured for performing frequency hopping transmission, and/or a value of the repetition factor of the SRS resource is greater than or equal to 2.

In some embodiments, a frequency hopping mode used by a frequency domain resource to which a first antenna port of the SRS resource is mapped is a first frequency hopping mode, a second frequency hopping mode, or a third frequency hopping mode,

where the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;

the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and

the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, where R is a value of the repetition factor of the SRS resource.

In some embodiments, the number of antenna port groups included in the SRS resource, or the number of third time unit groups to which all antenna ports of the SRS resource are mapped, or the minimum number of third time units required for all antenna ports of the SRS resource being mapped once, is determined based on any of:

the number of antenna ports of the SRS resource and the number of SRS antenna ports mapped on a single third time unit; or

the number of antenna ports of the SRS resource and the number of SRS antenna ports respectively mapped on multiple third time units; or

the number of antenna ports of the SRS resource and the number of antenna ports of the SRS resource mapped on a single third time unit; or

the number of antenna ports of the SRS resource and the number of antenna ports of the SRS resource respectively mapped on multiple third time units; or

the number of second time units occupied by the SRS resource within a single first time unit, the repetition factor of the SRS resource, and the number of frequency hops of a single antenna port of the SRS resource within a single third time unit; or

the number of second time units occupied by the SRS resource within a single first time unit, the repetition factor of the SRS resource, and the number of frequency hops of multiple antenna ports of the SRS resource within a single third time unit respectively; or

the number of second time units occupied by the SRS resource within a single first time unit, the repetition factor of the SRS resource, and the number of frequency hops included in a single frequency hopping period of the SRS resource; or

the number of second time units occupied by the SRS resource within a single first time unit and the number of second time units to which a single antenna port of the SRS resource is mapped within a single first time unit; or

the number of second time units occupied by the SRS resource within a single first time unit and the number of second time units to which multiple antenna ports of the SRS resource are respectively mapped within a single first time unit.

In some embodiments, the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or

the number of second time units occupied by the SRS resource within a single first time unit, the number of antenna ports of the SRS resource, and the number of SRS antenna ports respectively mapped on multiple third time units; or

the number of antenna ports of the SRS resource mapped on a single third time unit, the number of second time units occupied by the SRS resource within a single first time unit, and the number of antenna ports of the SRS resource; or

the number of antenna ports of the SRS resource respectively mapped on multiple third time units, the number of second time units occupied by the SRS resource within a single first time unit, and the number of antenna ports of the SRS resource; or

the repetition factor of the SRS resource and the number of frequency hops of a single antenna port of the SRS resource within a single third time unit; or

the repetition factor of the SRS resource and the number of frequency hops of multiple antenna ports of the SRS resource within a single third time unit respectively; or

the repetition factor of the SRS resource and the number of frequency hops included in a single frequency hopping period of the SRS resource; or

the number of second time units occupied by the SRS resource within a single first time unit and the number of third time unit groups to which all antenna ports of the SRS resource are mapped; or

the number of second time units occupied by the SRS resource within a single first time unit and the minimum number of third time units required for all antenna ports of the SRS resource being mapped once.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource and the number of antenna port groups included in the SRS resource; or

the number of antenna ports of the SRS resource and the number of third time unit groups to which all antenna ports of the SRS resource are mapped; or

the number of antenna ports of the SRS resource and the minimum number of third time units required for all antenna ports of the SRS resource being mapped once; or

the number of second time units occupied by the SRS resource within a single first time unit, the number of antenna ports of the SRS resource, the repetition factor of the SRS resource, and the number of frequency hops of a single antenna port of the SRS resource within a single third time unit; or

the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or

the number of second time units occupied by the SRS resource within a single first time unit, the number of antenna ports of the SRS resource, the repetition factor of the SRS resource, and the number of frequency hops included in a single frequency hopping period of the SRS resource; or

the number of second time units occupied by the SRS resource within a single first time unit, the number of antenna ports of the SRS resource, and the number of second time units to which a single antenna port of the SRS resource is mapped within a single first time unit; or

the number of second time units occupied by the SRS resource within a single first time unit, the number of antenna ports of the SRS resource, and the number of second time units to which multiple antenna ports of the SRS resource are respectively mapped within a single first time unit.

In some embodiments, determining, based on the first information, the time domain resource and/or the frequency domain resource to which multiple antenna ports of the SRS resource are mapped includes:
based on the number of antenna ports of the SRS resource and/or indication information sent from the network device to the terminal, determining, based on the first information, the time domain resource and/or the frequency domain resource to which multiple antenna ports of the SRS resource are mapped.

In some embodiments, before receiving the SRS corresponding to the SRS resource sent from the terminal, the operations further include:

determining, based on the time domain resource and/or the frequency domain resource to which multiple antenna ports of the SRS resource are mapped, the second information; and
sending the second information to the terminal.

An embodiment of the present application further provides an apparatus for sounding reference signal (SRS) transmission, including:

a first determining unit, used for determining, based on first information, a time domain resource and/or a frequency domain resource to which multiple antenna ports of an SRS resource are mapped, where at least two antenna ports among the multiple antenna ports of the SRS resource are mapped to different time domain resources; and
a first sending unit, used for sending, based on the time domain resource and/or the frequency domain resource, an SRS corresponding to the SRS resource to a network device,
where the first information includes one or more of:

a number of antenna ports of the SRS resource; or
a number of second time units occupied by the SRS resource within a single first time unit; or
a repetition factor of the SRS resource; or
a number of SRS antenna ports mapped on a single third time unit, or a number of SRS antenna ports respectively mapped on multiple third time units; or
a number of antenna ports of the SRS resource mapped on a single third time unit, or a number of antenna ports of the SRS resource respectively mapped on multiple third time units; or
a number of second time units to which a single antenna port of the SRS resource is mapped within a single first time unit, or a number of second time units to which multiple antenna ports of the SRS resource are respectively mapped within a single first time unit; or
a number of antenna port groups included in the SRS resource; or
a number of third time unit groups to which all antenna ports of the SRS resource are mapped; or
a minimum number of third time units required for all antenna ports of the SRS resource being mapped once; or
a number of frequency hops of a single antenna port of the SRS resource within a single third time unit, or a number of frequency hops of multiple antenna ports of the SRS resource within a single third time unit respectively; or
a number of frequency hops included in a single frequency hopping period of the SRS resource; or
a second time unit to which one or more antenna ports of the SRS resource are mapped within a single first time unit.

An embodiment of the present application further provides an apparatus for sounding reference signal (SRS) transmission, including:

a receiving unit, used for receiving, based on a time domain resource and/or a frequency domain resource to which multiple antenna ports of an SRS resource are mapped, an SRS corresponding to the SRS resource sent from a terminal, where the time domain resource and/or the frequency domain resource is determined based on first information, or the time domain resource and/or the frequency domain resource is used to determine second information, and the second information is used to indicate one or more items of the first information,
where among the multiple antenna ports of the SRS resource, at least two antenna ports are mapped to different time units; and
where the first information includes one or more of:

a number of antenna ports of the SRS resource; or
a number of second time units occupied by the SRS resource within a single first time unit; or
a repetition factor of the SRS resource; or
a number of SRS antenna ports mapped on a single third time unit, or a number of SRS antenna ports respectively mapped on multiple third time units; or
a number of antenna ports of the SRS resource mapped on a single third time unit, or a number of antenna ports of the SRS resource respectively mapped on multiple third time units; or
a number of second time units to which a single antenna port of the SRS resource is mapped within a single first time unit, or a number of second time units to which multiple antenna ports of the SRS resource are respectively mapped within a single first time unit; or
a number of antenna port groups included in the SRS resource; or
a number of third time unit groups to which all antenna ports of the SRS resource are mapped; or
a minimum number of third time units required for all antenna ports of the SRS resource being mapped once; or
a number of frequency hops of a single antenna port of the SRS resource within a single third time unit, or a number of frequency hops of multiple antenna ports of the SRS resource within a single third time unit respectively; or
a number of frequency hops included in a single frequency hopping period of the SRS resource; or
a second time unit to which one or more antenna ports of the SRS resource are mapped within a single first time unit.

An embodiment of the present application further provides a computer-readable storage medium, where the computer-readable storage medium stores a computer program, and the computer program is used to cause a computer to perform the method for SRS transmission performed by a terminal as described above, or to perform the method for SRS transmission performed by a network device as described above.

An embodiment of the present application further provides a communication device, where the communication device stores a computer program, and the computer program is used to cause the communication device to perform the method for SRS transmission performed by a terminal as described above, or to perform the method for SRS transmission performed by a network device as described above.

An embodiment of the present application further provides a processor-readable storage medium, where the processor-readable storage medium stores a computer program, and the computer program is used to cause a processor to perform the method for SRS transmission performed by a terminal as described above, or to perform the method for SRS transmission performed by a network device as described above.

An embodiment of the present application further provides a chip product, where the chip product stores a computer program, and the computer program is used to cause the chip product to perform the method for SRS transmission performed by a terminal as described above, or to perform the method for SRS transmission performed by a network device as described above.

In the methods and apparatuses for SRS transmission, devices and the storage medium, provided by the embodiments of the present application, the terminal may determine, based on one or more pieces of information included in the first information, the time domain resource and/or the frequency domain resource to which multiple antenna ports of the SRS resource are mapped, and map at least two antenna ports to different time domain resources. After determining the time domain resource and/or the frequency domain resource to which multiple antenna ports of the SRS resource are mapped, the terminal may send the SRS corresponding to the SRS resource to the network device. As such, in case that the SRS resource includes too many antenna ports, the multiple antenna ports of the SRS resource may be mapped to different time domain resources, which improves reception performance of the network device.

BRIEF DESCRIPTION OF THE DRAWINGS

To clearly illustrate the solutions in the embodiments of the present application, the drawings used in the description of the embodiments are briefly described below. The drawings in the following description are only some embodiments of the present application, and other drawings may be obtained according to these drawings without any creative work for those skilled in the art.

FIG. 1 is a first schematic flowchart of a method for sounding reference signal (SRS) transmission according to an embodiment of the present application;
FIG. 2 is a second schematic flowchart of a method for SRS transmission according to an embodiment of the present application;
FIG. 3 is a schematic structural diagram of a terminal according to an embodiment of the present application;
FIG. 4 is a schematic structural diagram of a network device according to an embodiment of the present application;
FIG. 5 is a first schematic structural diagram of an apparatus for SRS transmission according to an embodiment of the present application; and
FIG. 6 is a second schematic structural diagram of an apparatus for SRS transmission according to an embodiment of the present application.

DETAILED DESCRIPTION

In embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In embodiments of the present application, the term "multiple" refers to two or more than two, and other quantifiers are similar to it.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a skilled person in the art based on the embodiments of the present application without any creative effort belong to the scope of the present application.

In order to facilitate a clearer understanding of solutions of embodiments of the present application, some contents related to embodiments of the present application are first introduced.

In traditional wireless communication systems, all sounding reference signal (SRS) ports of one SRS resource are mapped to all orthogonal frequency division multiplexing (OFDM) symbols configured by the base station for an SRS. In a frequency domain, one SRS resource may be configured for frequency hopping transmission or non-frequency hopping transmission. In case that the SRS resource is configured for frequency hopping transmission, it may be configured as intra-slot frequency hopping or inter-slot frequency hopping.

For two SRS ports mapped to a same time-frequency resource, the greater the difference between their cyclic shifts is, the smaller the mutual interference between them is, and thus the better the reception performance is. However, in case that a number of ports included in an SRS resource is large, there are not so many cyclic shifts in one OFDM symbol to ensure performance. It may be considered to map different SRS ports to different OFDM symbols. On this basis, an embodiment of the present application provides a method for SRS transmission for mapping different SRS ports to different OFDM symbols.

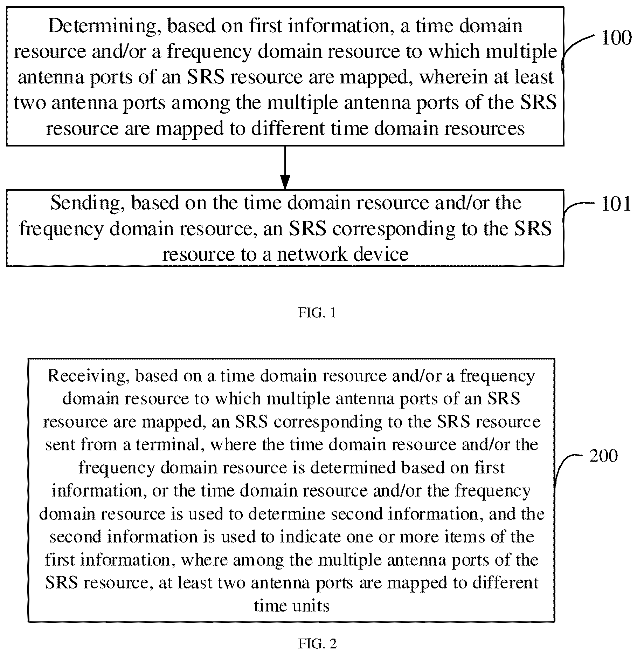

FIG. 1 is a first schematic flowchart of a method for sounding reference signal (SRS) transmission according to an embodiment of the present application. The method is performed by a terminal. As shown in FIG. 1, the method includes the following steps.

Step 100: determining, based on first information, a time domain resource and/or a frequency domain resource that multiple antenna ports of an SRS resource are mapped to, where at least two antenna ports among the multiple antenna ports of the SRS resource are mapped to different time domain resources.

Step 101: sending, based on the time domain resource and/or the frequency domain resource, an SRS corresponding to the SRS resource to a network device.

In some embodiments, in case that the terminal needs to perform SRS transmission, the time domain resource and/or the frequency domain resource to which antenna ports of the SRS resource are mapped may be determined based on the first information.

The first information may include one or more of the following.

(1) A number of antenna ports of the SRS resource. That is, the number of antenna ports included in the SRS resource. To facilitate description, in this embodiment, $N_{ap}$ is used to represent the number of antenna ports included in the SRS resource.

For example, a number of OFDM symbols occupied by the SRS resource within a single slot is 4, the SRS resource includes 8 antenna ports, and the terminal may map each antenna port to 2 OFDM symbols within one slot.

In some embodiments, in case that the number of antenna ports of the SRS resource is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of antenna ports of the SRS resource is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource). For example, for an SRS resource including 8 antenna ports, in case that the SRS resource is configured with 4 OFDM symbols, each of its antenna ports is mapped to 2 OFDM symbols; and for an SRS resource including 4 antenna ports, each of its antenna ports is mapped to all OFDM symbols configured for the SRS resource.

In some embodiments, a number of time units to which at least one antenna port in the SRS resource is mapped is a function of the number of antenna ports of the SRS resource.

For example, a number of OFDM symbols configured by the network device for the SRS resource is $N_s$, the SRS resource includes $N_{ap}$ antenna ports, and the terminal may map each antenna port to $\frac{CN_s}{N_{ap}}$ OFDM symbols within one slot, where C is a positive integer and may be a given value or a value indicated to the terminal by the network device. For example, C is 1, 2, 4, etc.

(2) A number of second time units occupied by the SRS resource within a single first time unit.

In each embodiment of the present application, the first time unit may be a radio frame, a subframe, a slot, a mini-slot or other time unit, and the second time unit may be a radio frame, a subframe, a slot, a mini-slot, an OFDM symbol or other time unit, which is not limited here. The second time unit is a more subdivided time unit within the first time unit. Concepts of the first time unit and the second time unit remain consistent throughout the description and are not repeated later.

In some embodiments, the first time unit is a slot, and the second time unit may be an OFDM symbol in the slot. In this case, the number of second time units occupied by the SRS resource within a single first time unit may be the number of OFDM symbols occupied by the SRS resource within a single slot. The number of OFDM symbols occupied by the SRS resource within a single slot may also be represented by $N_s$, which may be a number of OFDM symbols configured by the network device for the SRS resource.

For example, the number of OFDM symbols occupied by the SRS resource within a single slot is 4, the SRS resource includes 4 antenna ports, and the terminal may map each antenna port to 2 OFDM symbols within one slot.

In some embodiments, in case that the number of second time units occupied by the SRS resource within a single first time unit is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of second time units occupied by the SRS resource within a single first time unit is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource). For example, for an SRS resource including 8 antenna ports, in case that the SRS resource is configured with 4 OFDM symbols, each of its antenna ports is mapped to 2 OFDM symbols; and in case that the SRS resource is configured with 2 OFDM symbols, each of its antenna ports is mapped to all OFDM symbols configured for the SRS resource.

In some embodiments, a number of time units to which at least one antenna port in the SRS resource is mapped is a function of the number of second time units occupied by the SRS resource within a single first time unit.

For example, a number of OFDM symbols configured by the network device for the SRS resource is $N_s$, and the terminal may map each antenna port to $rN_s$ OFDM symbols within one slot, where $r$ is a non-zero coefficient, which may be a given value, or indicated to the terminal by the network device. For example, $r$ is 1, 0.5, etc.

For another example, a number of OFDM symbols configured by the network device for the SRS resource is $N_s$, the SRS resource includes $N_{ap}$ antenna ports, and the terminal may map each antenna port to $\frac{CN_s}{N_{ap}}$ OFDM symbols within one slot, where C is a positive integer and may be a given value or a value indicated to the terminal by the network device. For example, C is 1, 2, 4, etc.

(3) A repetition factor (or a number of repetitions) of the SRS resource. To facilitate description, in this embodiment, R is used to represent the repetition factor of the SRS resource.

In some embodiments, the repetition factor of the SRS resource is R, and each antenna port of the SRS is repeatedly transmitted for R times on the same frequency domain resource within one slot. That is, each antenna port of the SRS is mapped to the same frequency domain resource on R OFDM symbols within one slot.

In some embodiments, in case that the SRS performs frequency hopping transmission, the repetition factor of the SRS resource may be a number of OFDM symbols occupied by each hop of each antenna port of the SRS resource.

In some embodiments, in case that the network device configures a parameter for indicating the repetition factor of the SRS resource, the repetition factor of the SRS resource may be determined based on the parameter configured by the network device; and in case that the network device does not configure any parameter for indicating the repetition factor of the SRS resource, the repetition factor of the SRS resource may be equal to the number of OFDM symbols configured by the network device for the SRS resource.

For example, in case that the SRS resource includes 4 antenna ports, the SRS resource is not configured for frequency hopping transmission, and the SRS resource is configured with 4 OFDM symbols, it may be determined that the repetition factor of the SRS resource is 4, that is, the SRS resource will be mapped to the same frequency domain resource for transmission on these 4 OFDM symbols.

In some embodiments, in case that the repetition factor of the SRS resource is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the repetition factor of the SRS resource is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the repetition factor of the SRS resource.

(4) A number of SRS antenna ports mapped on a single third time unit, or a number of SRS antenna ports respectively mapped on multiple third time units.

In each embodiment of the present application, the third time unit may be a radio frame, a subframe, a slot, a mini-slot, an OFDM symbol or other time unit, which is not limited here. The third time unit is not necessarily associated with the first time unit and the second time unit. The third time unit may be the same as any of the first time unit or the second time unit, or may be different from both the first time unit and the second time unit. A concept of the third time unit remains consistent throughout the description and is not repeated later.

For example, the first time unit is a slot, the second time unit is an OFDM symbol within the slot, and the third time unit may be a slot; or, the first time unit is a slot, the second time unit is an OFDM symbol within the slot, and the third time unit may be an OFDM symbol; or, the first time unit is a slot, the second time unit is an OFDM symbol within the slot, and the third time unit may be other time units other than the slot and OFDM symbol, and so on.

In some embodiments, the number of SRS antenna ports mapped on a single third time unit may refer to a number of antenna ports of all SRS resources mapped on a single OFDM symbol. The number of SRS antenna ports respectively mapped on multiple third time units may refer to a number of antenna ports of all SRS resources respectively mapped on multiple OFDM symbols. Numbers of antenna ports of all SRS resources mapped on respective OFDM symbols may be the same or different.

In some embodiments, the number of SRS antenna ports mapped on a single third time unit may refer to a number of antenna ports of a single SRS resource mapped on a single OFDM symbol. The number of antenna ports of the single SRS resource respectively mapped on multiple third time units may refer to a number of antenna ports of a certain SRS resource mapped on multiple OFDM symbols respectively. Numbers of antenna ports of a single SRS resource mapped on respective OFDM symbols may be the same or different.

For example, the number of OFDM symbols configured by the network device for the SRS resource is 4, the SRS resource includes 8 antenna ports, and the number of antenna ports of a single SRS resource mapped on a single OFDM symbol is equal to 4. The terminal may map first 4 antenna ports on first 2 OFDM symbols, and may map last 4 antenna ports on last 2 OFDM symbols.

For example, the number of OFDM symbols configured by the network device for the SRS resource is 4, and there are two SRS resources that need to be mapped. The numbers of antenna ports of these two SRS resources are 2 and 4, and the number of antenna ports of all SRS resources mapped on a single OFDM symbol is equal to 3. The terminal may map the first antenna port of the SRS resource with an antenna port number of 2, and the first antenna port and the second antenna port of the SRS resource with an antenna port number of 4 on the first two OFDM symbols; and may map the second antenna port of the SRS resource with an antenna port number of 2, and the third antenna port and the fourth antenna port of the SRS resource with an antenna port number of 4 on the last two OFDM symbols.

In some embodiments, in case that the number of SRS antenna ports mapped on a single third time unit, or the number of SRS antenna ports respectively mapped on multiple third time units is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of SRS antenna ports mapped on a single third time unit, or the number of SRS antenna ports respectively mapped on multiple third time units is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of SRS antenna ports mapped on a single third time unit, or the number of SRS antenna ports respectively mapped on multiple third time units.

(5) A number of antenna ports of the SRS resource mapped on a single third time unit, or a number of antenna ports of the SRS resource respectively mapped on multiple third time units.

In some embodiments, the number of antenna ports of the SRS resource mapped on a single third time unit may refer to a number of antenna ports of the SRS resource mapped on a single OFDM symbol. The number of antenna ports of the SRS resource respectively mapped on multiple third time units may refer to a number of antenna ports of the SRS resource respectively mapped on multiple OFDM symbols. Numbers of antenna ports of the SRS resource mapped on respective OFDM symbols may be the same or different.

For example, the number of OFDM symbols configured by the network device for a certain SRS resource is 8, and the SRS resource includes 4 antenna ports. The number of antenna ports of the SRS resource mapped on a single OFDM symbol is equal to 1. The terminal may map the first antenna port of the SRS resource on the first OFDM symbol and the second OFDM symbol, map the second antenna port of the SRS resource on the third OFDM symbol and the fourth OFDM symbol, map the third antenna port of the SRS resource on the fifth OFDM symbol and the sixth OFDM symbol, and map the fourth antenna port of the SRS resource on the seventh OFDM symbol and the eighth OFDM symbol.

For example, the number of OFDM symbols configured by the network device for a certain SRS resource is 4, and the SRS resource includes 12 antenna ports. The number of antenna ports of the SRS resource mapped on the first OFDM symbol and the second OFDM symbol is equal to 2, and the number of antenna ports of the SRS resource mapped on the third OFDM symbol and the fourth OFDM symbol is equal to 4. The terminal may map the first antenna port and the second antenna port of the SRS resource on the first OFDM symbol, map the third antenna port and the fourth antenna port on the second OFDM symbol, map the fifth antenna port to the eighth antenna port on the third OFDM symbol, and map the ninth antenna port to the twelfth antenna port on the fourth OFDM symbol.

In some embodiments, in case that the number of antenna ports of the SRS resource mapped on a single third time unit, or the number of antenna ports of the SRS resource respectively mapped on multiple third time units is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of antenna ports of the SRS resource mapped on a single third time unit, or the number of antenna ports of the SRS resource respectively mapped on multiple third time units is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of antenna ports of the SRS resource mapped on a single third time unit, or the number of antenna ports of the SRS resource respectively mapped on multiple third time units.

(6) A number of second time units to which a single antenna port of the SRS resource is mapped within a single first time unit, or a number of second time units to which multiple antenna ports of the SRS resource are respectively mapped within a single first time unit.

In some embodiments, the number of second time units to which a single antenna port of the SRS resource is mapped within a single first time unit may refer to a number of OFDM symbols to which a single antenna port of the SRS resource is mapped within a single slot. The number of second time units to which multiple antenna ports of the SRS resource are respectively mapped within a single first time unit may refer to a number of OFDM symbols to which multiple antenna ports of the SRS resource are respectively mapped within a single slot. Numbers of OFDM symbols to which respective antenna ports of an SRS resource are mapped within a single slot may be the same or different.

For example, the number of OFDM symbols configured by the network device for the SRS resources is 4, the SRS resource includes 8 antenna ports, and the number of OFDM symbols to which a single antenna port of the SRS resource is mapped within a single slot is equal to 2. The terminal may map the first antenna port to the fourth antenna port to the first 2 OFDM symbols within one slot, and map the fifth antenna port to the eighth antenna port to the last 2 OFDM symbols within one slot.

For example, the network device configures 8 OFDM symbols for the SRS resource, and the SRS resource includes 8 antenna ports. The numbers of OFDM symbols to which these 8 antenna ports are respectively mapped within a single slot are 2, 2, 2, 2, 4, 4, 4, and 4. The terminal may map both the first antenna port and the second antenna port to the first OFDM symbol and the second OFDM symbol within a single slot, map both the third antenna port and the fourth antenna port to the third OFDM symbol and the fourth OFDM symbol within a single slot, and map the fifth antenna port to the eighth antenna port to the fifth OFDM symbol to the eighth OFDM symbol within a single slot.

In some embodiments, in case that the number of second time units to which a single antenna port of the SRS resource is mapped within a single first time unit, or the number of second time units to which multiple antenna ports of the SRS resource are respectively mapped within a single first time unit is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of second time units to which a single antenna port of the SRS resource is mapped within a single first time unit, or the number of second time units to which multiple antenna ports of the SRS resource are respectively mapped within a single first time unit is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of second time units to which a single antenna port of the SRS resource is mapped within a single first time unit, or a function of the number of second time units to which multiple antenna ports of the SRS resource are respectively mapped within a single first time unit.

(7) A number of antenna port groups included in the SRS resource.

In some embodiments, the antenna ports of the SRS resource may be grouped based on the time domain resource and/or the frequency domain resource to which the antenna ports of the SRS resource are mapped. Antenna ports mapped to the same time domain resource and/or frequency domain resource may be determined to belong to the same number of antenna port groups, and antenna ports mapped to different time domain resources and/or frequency domain resources may be determined to belong to different numbers of antenna port groups.

For example, antenna ports mapped to the same OFDM symbol may be determined to belong to the same number of antenna port groups, and antenna ports mapped to different OFDM symbols may be determined to belong to different numbers of antenna port groups.

For example, the number of OFDM symbols configured by the network device for the SRS resource is 4, and the SRS resource includes 8 antenna ports, which are correspondingly divided into 2 antenna port groups. The terminal may map the first antenna port to the fourth antenna port to the first 2 OFDM symbols within one slot, and map the fifth antenna port to the eighth antenna port to the last 2 OFDM symbols within one slot.

In some embodiments, in case that the number of antenna port groups included in the SRS resource is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of antenna port groups included in the SRS resource is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of antenna port groups included in the SRS resource.

(8) A number of third time unit groups to which all antenna ports of the SRS resource are mapped.

In some embodiments, one or more third time units (such as OFDM symbols) mapped to the same antenna port may be determined to belong to the same third time unit group, and third time units mapped to different antenna ports may be determined to belong to different third time unit groups.

Taking the third time unit as an OFDM symbol as an example, it is assumed that there are 4 antenna ports, where the first antenna port and the second antenna port are mapped to 2 OFDM symbols, and the third antenna port and the fourth antenna port are mapped to another 2 OFDM symbols. The 2 OFDM symbols to which the first antenna port and the second antenna port are mapped may be determined as an OFDM symbol group, and the 2 OFDM symbols to which the third antenna port and the fourth antenna port are mapped may be determined as another OFDM symbol group. A number of OFDM groups to which all antenna ports of the SRS resource are mapped is equal to 2.

For example, the number of OFDM symbols configured by the network device for the SRS resource is 4, the number of OFDM groups to which all antenna ports of the SRS resource are mapped is equal to 2, and the SRS resource includes 8 antenna ports. The terminal may map the first antenna port to the fourth antenna port to the first 2 OFDM symbols within one slot, and map the fifth antenna port to the eighth antenna port to the last 2 OFDM symbols within one slot.

In some embodiments, in the third time units mapped with the same antenna port, third time units having the same order are the same group, third time units having different orders are different groups, and OFDM symbols mapped with different antenna ports are different groups. In some embodiments, the order is an order obtained by sorting the third time units in an order of time, or an order obtained by sorting the third time units in an order of sequence numbers.

In some embodiments, in case that the number of third time unit groups to which all antenna ports of the SRS resource are mapped is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of third time unit groups to which all antenna ports of the SRS resource are mapped is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of third time unit groups to which all antenna ports of the SRS resource are mapped.

(9) A minimum number of third time units required for all antenna ports of the SRS resource being mapped once.

In some embodiments, in case that multiple antenna ports of the SRS resource are mapped once, the multiple antenna ports may be mapped to the same OFDM symbol or to different OFDM symbols. A minimum number of OFDM symbols required for each antenna port being mapped once is one. The minimum number of third time units required for all antenna ports of the SRS resource being mapped once may refer to a minimum number of OFDM symbols required for all antenna ports of the SRS resource being mapped once.

For one SRS resource, there are many ways to map all antenna ports of the SRS resource once. Among various ways, a number of OFDM symbols occupied when all antenna ports that may be mapped to the same OFDM symbol are mapped to the same OFDM symbol is a minimum number of OFDM symbols required for each antenna port of the SRS resource being mapped once.

For example, one SRS resource including 8 antenna ports is taken as an example, where a number of OFDM symbols occupied by the SRS resource within a single slot is 8. In case that the first antenna port and the second antenna port of the SRS resource are mapped to the first OFDM symbol and the second OFDM symbol, the third antenna port and the fourth antenna port of the SRS resource are mapped to the third OFDM symbol and the fourth OFDM symbol, the fifth antenna port and the sixth antenna port of the SRS resource are mapped to the fifth OFDM symbol and the sixth OFDM symbol, and the seventh antenna port and the eighth antenna port of the SRS resource are mapped to the seventh OFDM symbol and the eighth OFDM symbol. In case that all antenna ports of the SRS resource are mapped once, there are many ways. For example, the first antenna port may be mapped to the first OFDM symbol, the second antenna port may be mapped to the second OFDM symbol, the third antenna port and the fourth antenna port may be mapped to the third OFDM symbol, the fifth antenna port and the sixth antenna port may be mapped to the fifth OFDM symbol, and the seventh antenna port and the eighth antenna port may be mapped to the eighth OFDM symbol; or, the first antenna port and the second antenna port may be mapped to the second OFDM symbol, the third antenna port and the fourth antenna port may be mapped to the third OFDM symbol, the fifth antenna port and the sixth antenna port may be mapped to the fifth OFDM symbol, the seventh antenna port and the eighth antenna port may be mapped to the eighth OFDM symbol, and so on. In various ways, the minimum number of OFDM symbols required for each antenna port of the SRS resource being mapped once is the number of OFDM symbols occupied when the first antenna port and the second antenna port are mapped to the same OFDM symbol, the third antenna port and the fourth antenna port are mapped to the same OFDM symbol, the fifth antenna port and the sixth antenna port are mapped to the same OFDM symbol, and the seventh antenna port and the eighth antenna port are mapped to the same OFDM symbol, that is, the minimum number of OFDM symbols required for each antenna port of the SRS resource being mapped once is 4.

In some embodiments, in case that the minimum number of third time units required for all antenna ports of the SRS resource being mapped once is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the minimum number of third time units required for all antenna ports of the SRS resource being mapped once is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the minimum number of third time units required for all antenna ports of the SRS resource being mapped once.

(10) A number of third time units to which all antenna ports of the SRS resource are mapped in case that one repetition is performed on the all antenna ports.

In some embodiments, the number of third time units to which all antenna ports of the SRS resource are mapped in case that one repetition is performed on the all antenna ports may refer to a number of OFDM symbols to which all antenna ports of the SRS resource are mapped in case that one repetition is performed on the all antenna ports.

The number of OFDM symbols to which all antenna ports of the SRS resource are mapped in case that one repetition is performed on the all antenna ports may also be interpreted as a number of OFDM symbols for one repetition of the SRS resource. For example, in case that R=1 (i.e., non-repetition transmission), the number of OFDM symbols to which all antenna ports of the SRS resource are mapped in case that one repetition is performed on the all antenna ports is equal to the number of OFDM symbols configured by the network device for the SRS resource (i.e., the number of OFDM symbols occupied by the SRS resource within one slot).

In some embodiments, in case that the number of third time units to which all antenna ports of the SRS resource are mapped in case that one repetition is performed on the all antenna ports is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of third time units to which all antenna ports of the SRS resource are mapped in case that one repetition is performed on the all antenna ports is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of third time units to which all antenna ports of the SRS resource are mapped in case that one repetition is performed on the all antenna ports.

(11) A number of frequency hops of a single antenna port of the SRS resource within a single third time unit, or a number of frequency hops of multiple antenna ports of the SRS resource within a single third time unit respectively.

In some embodiments, in case that the SRS performs intra-slot frequency hopping transmission, the number of frequency hops of a single antenna port of the SRS resource within a single third time unit may refer to a number of frequency hops of a single antenna port of the SRS resource within a single slot; and the number of frequency hops of multiple antenna ports of the SRS resource within a single third time unit respectively may refer to a number of frequency hops of multiple antenna ports of the SRS resource within a single slot respectively. Numbers of frequency hops of each antenna port of the SRS resource within a single slot may be the same or different.

In some embodiments, the number of frequency hops of any antenna port of the SRS resource is a number of frequency domain resource groups to which the antenna port is mapped.

For example, the number of OFDM symbols configured by the network device for the SRS resource is 4, the SRS resource includes 8 antenna ports, and the number of frequency hops of a single antenna port of the SRS resource within a single slot is equal to 2. The terminal may map each antenna port to 2 different frequency domain resource groups (i.e., different physical resource block (PRB) sets or different subcarrier sets) within one slot.

In some embodiments, the number of frequency hops of each antenna port of the SRS resource within a single third time unit is the same.

In some embodiments, the network device configures numbers of frequency hops for multiple antenna ports of the SRS resource within a single third time unit respectively. For example, the SRS resource includes 8 antenna ports, and numbers of frequency hops of the 8 antenna ports within a single slot are 2, 1, 1, 2, 2, 2, 2, 1 respectively. For another example, the network device groups the multiple antenna ports of the SRS resource to indicate numbers of frequency hops. For example, the SRS resource includes 8 antenna ports, where 2 antenna ports are taken as one group, the network device indicates numbers of frequency hops for four groups of antenna ports respectively.

In some embodiments, in case that the number of frequency hops of a single antenna port of the SRS resource within a single third time unit, or the number of frequency hops of multiple antenna ports of the SRS resource within a single third time unit respectively is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of frequency hops of a single antenna port of the SRS resource within a single third time unit, or the number of frequency hops of multiple antenna ports of the SRS resource within a single third time unit respectively is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of frequency hops of a single antenna port of the SRS resource within a single third time unit, or the number of frequency hops of multiple antenna ports of the SRS resource within a single third time unit respectively.

(12) A number of frequency hops included in a single frequency hopping period of the SRS resource.

For example, the number of OFDM symbols configured by the network device for the SRS resource is 4, the SRS resource includes 8 antenna ports, and the number of frequency hops included in a single frequency hopping period of the SRS resource is equal to 2. The terminal may map each antenna port to 2 different frequency domain resource groups (i.e., different PRB sets, or different subcarrier sets) within one frequency hopping period.

In some embodiments, in case that the number of frequency hops included in a single frequency hopping period of the SRS resource is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of frequency hops included in a single frequency hopping period of the SRS resource is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of frequency hops included in a single frequency hopping period of the SRS resource.

(13) A second time unit to which one or more antenna ports of the SRS resource are mapped within a single first time unit.

In some embodiments, the second time unit to which one or more antenna ports of the SRS resource are mapped within a single first time unit may further refer to an OFDM symbol to which one or more antenna ports of the SRS resource are mapped within a single slot. The OFDM symbol to which each antenna port is mapped within a single slot may be the same or different. This information may be directly indicated by the network device.

For example, the SRS resource includes 4 antenna ports. The network device directly indicates that antenna port 0# and antenna port 1# are mapped to OFDM symbol 10# and OFDM symbol 11#, and antenna port 2# and antenna port 3# are mapped to OFDM symbol 12# and OFDM symbol 13#. The terminal may directly map these 4 antenna ports to the corresponding OFDM symbols based on an indication of the network device.

The method for SRS transmission provided by the embodiments of the present application may be applied to various communication systems, which includes but is not limited to a fifth generation mobile communication (5G) system (such as a new radio (NR) system), future network system (such as sixth generation mobile communication (6G)) or other OFDM systems (such as a discrete Fourier transform-spread OFDM (DFT-S-OFDM) system), etc.

The port in the embodiments of the present application, that is, the antenna port, refers to an antenna port of the SRS, and may also be called an SRS port, an SRS antenna port, etc.

The SRS resource in the embodiments of the present application may be a periodic SRS resource, a semi-persistent SRS resource, an aperiodic SRS resource, etc.

In the method for SRS transmission provided by the embodiment of the present application, the terminal may determine, based on one or more pieces of information included in the first information, the time domain resource and/or the frequency domain resource to which multiple antenna ports of the SRS resource are mapped, and map at least two antenna ports to different time domain resources. After determining the time domain resource and/or the frequency domain resource to which multiple antenna ports of the SRS resource are mapped, the terminal may send the SRS corresponding to the SRS resource to the network device. As such, in case that the SRS resource includes too many antenna ports, the multiple antenna ports of the SRS resource may be mapped to different time domain resources, which improves reception performance of the network device.

In some embodiments, the number of second time units to which each antenna port of the SRS resource is mapped within a single first time unit is the same.

In some embodiments, in case of determining the time domain resource and/or the frequency domain resource to which multiple antenna ports of the SRS resource are mapped, the terminal may map each antenna port of the SRS resource to the same number of second time units within a single first time unit.

In some embodiments, the terminal may map each antenna port of the SRS resource to the same number of OFDM symbols within a single slot.

In some embodiments, the number of second time units to which each antenna port of the SRS resource is mapped within a single first time unit is a first value, and the first value may be any of the following.

(1) A value determined based on the number of second time units occupied by the SRS resource within a single first time unit and the number of antenna port groups included in the SRS resource.

In some embodiments, the first value may be determined based on a ratio of the number of second time units occupied by the SRS resource within a single first time unit to the number of antenna port groups included in the SRS resource, where the number of second time units occupied by the SRS resource within a single first time unit is an integer multiple of the number of antenna port groups included in the SRS resource.

For example, the first value may be calculated as:

$$X = \frac{N_S}{M},$$

where X is the first value, $N_s$ is the number of second time units occupied by the SRS resource within a single first time unit, M is the number of antenna port groups included in the SRS resource, and $N_s$ may be divisible by M.

(2) A value determined based on the number of second time units occupied by the SRS resource within a single first time unit and the number of third time unit groups to which all antenna ports of the SRS resource are mapped.

In some embodiments, the first value may be determined based on a ratio of the number of second time units occupied by the SRS resource within a single first time unit to the number of third time unit groups to which all antenna ports of the SRS resource are mapped, where the number of second time units occupied by the SRS resource within a single first time unit is an integer multiple of the number of third time unit groups to which all antenna ports of the SRS resource are mapped.

For example, the first value may be calculated as:

$$X = \frac{N_S}{M},$$

where $X$ is the first value, $N_s$ is the number of second time units occupied by the SRS resource within a single first time unit, $M$ is the number of third time unit groups to which all antenna ports of the SRS resource are mapped, and $N_s$ may be divisible by $M$.

(3) A value determined based on the number of second time units occupied by the SRS resource within a single first time unit and the minimum number of third time units required for all antenna ports of the SRS resource being mapped once.

In some embodiments, the first value may be determined based on a ratio of the number of second time units occupied by the SRS resource within a single first time unit to the minimum number of third time units required for all antenna ports of the SRS resource being mapped once, where the number of second time units occupied by the SRS resource within a single first time unit is an integer multiple of the minimum number of third time units required for all antenna ports of the SRS resource being mapped once.

For example, the first value may be calculated as:

$$X = \frac{N_S}{M},$$

where $X$ is the first value, $N_s$ is the number of second time units occupied by the SRS resource within a single first time unit, $M$ is the minimum number of third time units required for all antenna ports of the SRS resource being mapped once, and $N_s$ may be divisible by $M$.

(4) A value determined based on the number of second time units occupied by the SRS resource within a single first time unit and the number of third time units to which all antenna ports of the SRS resource are mapped in case that one repetition is performed on the all antenna ports.

In some embodiments, the first value may be determined based on the number of second time units occupied by the SRS resource within a single first time unit and the number of third time units to which all antenna ports of the SRS resource are mapped in case that one repetition is performed on the all antenna ports, where the number of second time units occupied by the SRS resource within a single first time unit is an integer multiple of the number of third time units to which all antenna ports of the SRS resource are mapped in case that one repetition is performed on the all antenna ports.

For example, the first value may be calculated as:

$$X = \frac{N_S}{M},$$

where $X$ is the first value, $N_s$ is the number of second time units occupied by the SRS resource within a single first time unit, $M$ is the number of third time units to which all antenna ports of the SRS resource are mapped in case that one repetition is performed on the all antenna ports, and $N_s$ may be divisible by $M$.

(5) A value determined based on the number of second time units occupied by the SRS resource within a single first time unit and a value agreed by a protocol.

In some embodiments, the first value may be determined based on a ratio of the number of second time units occupied by the SRS resource within a single first time unit to the value agreed by the protocol, where the number of second time units occupied by the SRS resource within a single first time unit is an integer multiple of the value agreed by the protocol.

For example, the first value may be calculated as:

$$X = \frac{N_s}{M},$$

where $X$ is the first value, $N_s$ is the number of second time units occupied by the SRS resource within a single first time unit, $M$ is the value agreed by the protocol, and $N_s$ may be divisible by $M$.

(6) The number of second time units to which a single antenna port of the SRS resource is mapped within a single first time unit.

In some embodiments, the number of second time units to which a single antenna port of the SRS resource is mapped within a single first time unit may be directly used as the first value. That is:

$$X = N_s^{ap},$$

where X is the first value, and $N_s^{ap}$ is the number of second time units to which a single antenna port of the SRS resource is mapped within a single first time unit.

(7) A value determined based on the number of second time units to which multiple antenna ports of the SRS resource are respectively mapped within a single first time unit.

In some embodiments, a maximum value or a minimum value of the number of second time units to which multiple antenna ports of the SRS resource are respectively mapped within a single first time unit may be used as the first value. That is:

$$X = N_s^{ap},$$

where $X$ is the first value, and $N_s^{ap}$ is the maximum value or the minimum value of the number of second time units to which multiple antenna ports of the SRS resource are respectively mapped within a single first time unit.

(8) A value agreed by a protocol.

In some embodiments, the protocol may directly agree the value of the first value.

(9) A value determined based on the number of SRS antenna ports mapped on a single third time unit, the number of second time units occupied by the SRS resource within a single first time unit, and the number of antenna ports of the SRS resource.

In some embodiments, the first value may be determined by dividing a first product of the number of SRS antenna ports mapped on a single third time unit and the number of second time units occupied by the SRS resource within a single first time unit by the number of antenna ports of the SRS resource, where the first product is an integer multiple of the number of antenna ports of the SRS resource.

For example, the first value may be calculated as:

$$X = \frac{N_{ap}^S * N_s}{N_{ap}},$$

where $X$ is the first value, $N_{ap}^S$ is the number of SRS antenna ports mapped on a single third time unit, $N_s$ is the number of second time units occupied by the SRS resource within a single first time unit, $N_{ap}$ is the number of antenna ports of the SRS resource, and $N_{ap}^S * N_s$ may be divisible by $N_{ap}$.

(10) A value determined based on the number of SRS antenna ports respectively mapped on multiple third time units, the number of second time units occupied by the SRS resource within a single first time unit, and the number of antenna ports of the SRS resource.

In some embodiments, the first value may be determined by dividing a second product of a maximum value or a minimum value of the number of SRS antenna ports respectively mapped on multiple third time units and the number of second time units occupied by the SRS resource within a single first time unit by the number of antenna ports of the SRS resource, where the second product is an integer multiple of the number of antenna ports of the SRS resource.

For example, the first value may be calculated as:

$$X = \frac{N_{ap}^S * N_s}{N_{ap}},$$

where $X$ is the first value, $N_{ap}^S$ is the maximum value or the minimum value of the number of SRS antenna ports respectively mapped on multiple third time units, $N_s$ is the number of second time units occupied by the SRS resource within a single first time unit, $N_{ap}$ is the number of antenna ports of the SRS resource, and $N_{ap}^S * N_s$ may be divisible by $N_{ap}$.

(11) A value determined based on the number of antenna ports of the SRS resource mapped on a single third time unit, the number of second time units occupied by the SRS resource within a single first time unit, and the number of antenna ports of the SRS resource.

In some embodiments, the first value may be determined by dividing a third product of the number of antenna ports of the SRS resource mapped on a single third time unit and the number of second time units occupied by the SRS resource within a single first time unit by the number of antenna ports of the SRS resource, where the third product is an integer multiple of the number of antenna ports of the SRS resource.

For example, the first value may be calculated as:

$$X = \frac{N_{ap}^S * N_s}{N_{ap}},$$

where $X$ is the first value, $N_{ap}^S$ is the number of antenna ports of the SRS resource mapped on a single third time unit, $N_s$ is the number of second time units occupied by the SRS resource within a single first time unit, $N_{ap}$ is the number of antenna ports of the SRS resource, and $N_{ap}^S * N_s$ may be divisible by $N_{ap}$.

(12) A value determined based on the number of antenna ports of the SRS resource respectively mapped on multiple third time units, the number of second time units occupied by the SRS resource within a single first time unit, and the number of antenna ports of the SRS resource.

In some embodiments, the first value may be determined by dividing a fourth product of a maximum value or a minimum value of the number of antenna ports of the SRS resource respectively mapped on multiple third time units and the number of second time units occupied by the SRS resource within a single first time unit by the number of antenna ports of the SRS resource, where the fourth product is an integer multiple of the number of antenna ports of the SRS resource.

For example, the first value may be calculated as:

$$X = \frac{N_{ap}^S * N_s}{N_{ap}},$$

where X is the first value, $N_{ap}^S$ is the maximum value or the minimum value of the number of antenna ports of the SRS resource respectively mapped on multiple third time units, $N_s$ is the number of second time units occupied by the SRS resource within a single first time unit, $N_{ap}$ is the number of antenna ports of the SRS resource, and $N_{ap}^S * N_s$ may be divisible by $N_{ap}$.

(13) A value determined based on a value agreed by a protocol, the number of second time units occupied by the SRS resource within a single first time unit, and the number of antenna ports of the SRS resource.

In some embodiments, the first value may be determined by dividing a fifth product of the value agreed by the protocol and the number of second time units occupied by the SRS resource within a single first time unit by the number of antenna ports of the SRS resource, where the fifth product is an integer multiple of the number of antenna ports of the SRS resource.

For example, the first value may be calculated as:

$$X = \frac{N_{ap}^S * N_s}{N_{ap}},$$

where $X$ is the first value, $N_{ap}^S$ is the value agreed by the protocol, $N_s$ is the number of second time units occupied by the SRS resource within a single first time unit, $N_{ap}$ is the number of antenna ports of the SRS resource, and $N_{ap}^S * N_s$ may be divisible by $N_{ap}$.

(14) A value determined based on the repetition factor of the SRS resource and the number of frequency hops of a single antenna port of the SRS resource within a single third time unit.

In some embodiments, the first value may be determined based on a product of the repetition factor of the SRS resource and the number of frequency hops of a single antenna port of the SRS resource within a single third time unit.

For example, the first value may be calculated as:

$$X = R * N_{hop},$$

where X is the first value, R is the repetition factor of the SRS resource, and $N_{hop}$ is the number of frequency hops of a single antenna port of the SRS resource within a single third time unit.

(15) A value determined based on the repetition factor of the SRS resource and the number of frequency hops of multiple antenna ports of the SRS resource within a single third time unit respectively.

In some embodiments, the first value may be determined based on a product of the repetition factor of the SRS resource and a maximum value or a minimum value of the number of frequency hops of multiple antenna ports of the SRS resource within a single third time unit respectively.

For example, the first value may be calculated as:

$$X = R * N_{hop},$$

where $X$ is the first value, $R$ is the repetition factor of the SRS resource, and $N_{hop}$ is the maximum value or the minimum value of number of frequency hops of multiple antenna ports of the SRS resource within a single third time unit.

(16) A value determined based on the repetition factor of the SRS resource and the number of frequency hops included in a single frequency hopping period of the SRS resource.

In some embodiments, the first value may be determined based on a product of the repetition factor of the SRS resource and the number of frequency hops included in a single frequency hopping period of the SRS resource.

For example, the first value may be calculated as:

$$X = R * N_{hop},$$

where $X$ is the first value, $R$ is the repetition factor of the SRS resource, and $N_{hop}$ is the number of frequency hops included in a single frequency hopping period of the SRS resource.

(17) A value determined based on the repetition factor of the SRS resource and a value agreed by a protocol.

In some embodiments, the first value may be determined based on a product of the repetition factor of the SRS resource and the value agreed by the protocol.

For example, the first value may be calculated as:

$$X = R * N_{hop},$$

where $X$ is the first value, $R$ is the repetition factor of the SRS resource, and $N_{hop}$ is the value agreed by the protocol.

In some embodiments, at least two antenna ports of the SRS resource are mapped to different numbers of second time units within a single first time unit.

In some embodiments, in case of determining the time domain resource and/or the frequency domain resource to which multiple antenna ports of the SRS resource are mapped, the terminal may map at least two antenna ports of the SRS resource to different numbers of second time units within a single first time unit.

In some embodiments, the terminal may map at least two antenna ports of the SRS resource to different numbers of OFDM symbols within a single slot.

In some embodiments, the number of second time units to which a first part of antenna ports of the SRS resource are mapped within a single first time unit is a second value, and the second value may be any of the following.

(1) A value determined based on the number of second time units occupied by the SRS resource within a single first time unit and the number of antenna port groups included in the SRS resource.

In some embodiments, the second value may be determined based on a ratio of the number of second time units occupied by the SRS resource within a single first time unit to the number of antenna port groups included in the SRS resource.

For example, the second value may be calculated as:

$$Y = \left\lfloor \frac{N_s}{M} \right\rfloor,$$

where $Y$ is the second value, $N_s$ is the number of second time units occupied by the SRS resource within a single first time unit, $M$ is the number of antenna port groups included in the SRS resource, and $\lfloor \cdots \rfloor$ refers to round down.

(2) A value determined based on the number of second time units occupied by the SRS resource within a single first time unit and the number of third time unit groups to which all antenna ports of the SRS resource are mapped.

In some embodiments, the second value may be determined based on a ratio of the number of second time units occupied by the SRS resource within a single first time unit to the number of third time unit groups to which all antenna ports of the SRS resource are mapped.

For example, the second value may be calculated as:

$$Y = \left\lfloor \frac{N_s}{M} \right\rfloor,$$

where $Y$ is the second value, $N_s$ is the number of second time units occupied by the SRS resource within a single first time unit, $M$ is the number of third time unit groups to which all antenna ports of the SRS resource are mapped, and $\lfloor \cdots \rfloor$ refers to round down.

(3) A value determined based on the number of second time units occupied by the SRS resource within a single first time unit and the minimum number of third time units required for all antenna ports of the SRS resource being mapped once.

In some embodiments, the second value may be determined based on a ratio of the number of second time units occupied by the SRS resource within a single first time unit to the minimum number of third time units required for all antenna ports of the SRS resource being mapped once.

For example, the second value may be calculated as:

$$Y = \left\lfloor \frac{N_s}{M} \right\rfloor,$$

where $Y$ is the second value, $N_s$ is the number of second time units occupied by the SRS resource within a single first time unit, $M$ is the minimum number of third time units required for all antenna ports of the SRS resource being mapped once, and $\lfloor \cdots \rfloor$ refers to round down.

(4) A value determined based on the number of second time units occupied by the SRS resource within a single first time unit and the number of third time units to which all antenna ports of the SRS resource are mapped in case that one repetition is performed on the all antenna ports.

In some embodiments, the second value may be determined based on the number of second time units occupied by the SRS resource within a single first time unit and the number of third time units to which all antenna ports of the SRS resource are mapped in case that one repetition is performed on the all antenna ports.

For example, the second value may be calculated as:

$$Y = \left\lfloor \frac{N_s}{M} \right\rfloor,$$

where $Y$ is the second value, $N_s$ is the number of second time units occupied by the SRS resource within a single first time unit, $M$ is the number of third time units to which all antenna ports of the SRS resource are mapped in case that one repetition is performed on the all antenna ports, and $\lfloor \cdots \rfloor$ refers to round down.

(5) A value determined based on the number of second time units occupied by the SRS resource within a single first time unit and a value agreed by a protocol.

In some embodiments, the second value may be determined based on a ratio of the number of second time units occupied by the SRS resource within a single first time unit to the value agreed by the protocol.

For example, the second value may be calculated as:

$$Y = \left\lfloor \frac{N_s}{M} \right\rfloor,$$

where $Y$ is the second value, $N_s$ is the number of second time units occupied by the SRS resource within a single first time unit, $M$ is the value agreed by the protocol, and $\lfloor \cdots \rfloor$ refers to round down.

(6) A value determined based on the number of SRS antenna ports mapped on a single third time unit, the number of second time units occupied by the SRS resource within a single first time unit, and the number of antenna ports of the SRS resource.

In some embodiments, the second value may be determined by dividing a first product of the number of SRS antenna ports mapped on a single third time unit and the number of second time units occupied by the SRS resource within a single first time unit by the number of antenna ports of the SRS resource.

For example, the second value may be calculated as:

$$Y = \left\lfloor \frac{N_{ap}^S * N_s}{N_{ap}} \right\rfloor,$$

where $Y$ is the second value, $N_{ap}^S$ is the number of SRS antenna ports mapped on a single third time unit, $N_s$ is the number of second time units occupied by the SRS resource within a single first time unit, $N_{ap}$ is the number of antenna ports of the SRS resource, and $\lfloor \cdots \rfloor$ refers to round down.

(7) A value determined based on the number of SRS antenna ports respectively mapped on multiple third time units, the number of second time units occupied by the SRS resource within a single first time unit, and the number of antenna ports of the SRS resource.

In some embodiments, the second value may be determined by dividing a second product of a maximum value or a minimum value of the number of SRS antenna ports respectively mapped on multiple third time units and the number of second time units occupied by the SRS resource within a single first time unit by the number of antenna ports of the SRS resource.

For example, the second value may be calculated as:

$$Y = \left\lfloor \frac{N_{ap}^S * N_s}{N_{ap}} \right\rfloor,$$

where $Y$ is the second value, $N_{ap}^S$ is the maximum value or the minimum value of the number of SRS antenna ports respectively mapped on multiple third time units, $N_s$ is the number of second time units occupied by the SRS resource within a single first time unit, $N_{ap}$ is the number of antenna ports of the SRS resource, and $\lfloor \cdots \rfloor$ refers to round down.

(8) A value determined based on the number of antenna ports of the SRS resource mapped on a single third time unit, the number of second time units occupied by the SRS resource within a single first time unit, and the number of antenna ports of the SRS resource.

In some embodiments, the second value may be determined by dividing a third product of the number of antenna ports of the SRS resource mapped on a single third time unit and the number of second time units occupied by the SRS resource within a single first time unit by the number of antenna ports of the SRS resource.

For example, the second value may be calculated as:

$$Y = \left\lfloor \frac{N_{ap}^S * N_s}{N_{ap}} \right\rfloor,$$

where $Y$ is the second value, $N_{ap}^S$ is the number of antenna ports of the SRS resource mapped on a single third time unit, $N_s$ is the number of second time units occupied by the SRS resource within a single first time unit, $N_{ap}$ is the number of antenna ports of the SRS resource, and $\lfloor \cdots \rfloor$ refers to round down.

(9) A value determined based on the number of antenna ports of the SRS resource respectively mapped on multiple third time units, the number of second time units occupied by the SRS resource within a single first time unit, and the number of antenna ports of the SRS resource.

In some embodiments, the second value may be determined by dividing a fourth product of a maximum value or a minimum value of the number of antenna ports of the SRS resource respectively mapped on multiple third time units and the number of second time units occupied by the SRS resource within a single first time unit by the number of antenna ports of the SRS resource.

For example, the second value may be calculated as:

$$Y = \left\lfloor \frac{N_{ap}^S * N_s}{N_{ap}} \right\rfloor,$$

where $Y$ is the second value, $N_{ap}^S$ is the maximum value or the minimum value of the number of antenna ports of the SRS resource respectively mapped on multiple third time units, $N_s$ is the number of second time units occupied by the SRS resource within a single first time unit, $N_{ap}$ is the number of antenna ports of the SRS resource, and $\lfloor \cdots \rfloor$ refers to round down.

(10) A value determined based on a value agreed by a protocol, the number of second time units occupied by the SRS resource within a single first time unit, and the number of antenna ports of the SRS resource.

In some embodiments, the second value may be determined by dividing a fifth product of the value agreed by the protocol and the number of second time units occupied by the SRS resource within a single first time unit by the number of antenna ports of the SRS resource.

For example, the second value may be calculated as:

$$Y = \left\lfloor \frac{N_{ap}^S * N_s}{N_{ap}} \right\rfloor,$$

where $Y$ is the second value, $N_{ap}^S$ is the value agreed by the protocol, $N_s$ is the number of second time units occupied by the SRS resource within a single first time unit, $N_{ap}$ is the number of antenna ports of the SRS resource, and $\lfloor \cdots \rfloor$ refers to round down.

(11) A value determined based on the repetition factor of the SRS resource and the number of frequency hops of a single antenna port of the SRS resource within a single third time unit.

In some embodiments, the second value may be determined based on a product of the repetition factor of the SRS resource and the number of frequency hops of a single antenna port of the SRS resource within a single third time unit.

For example, the second value may be calculated as:

$$Y = R * N_{hop},$$

where $Y$ is the second value, $R$ is the repetition factor of the SRS resource, and $N_{hop}$ is the number of frequency hops of a single antenna port of the SRS resource within a single third time unit.

(12) A value determined based on the repetition factor of the SRS resource and the number of frequency hops of multiple antenna ports of the SRS resource within a single third time unit respectively.

In some embodiments, the second value may be determined based on a product of the repetition factor of the SRS resource and a maximum value or a minimum value of the number of frequency hops of multiple antenna ports of the SRS resource within a single third time unit respectively.

For example, the second value may be calculated as:

$$Y = R * N_{hop},$$

where $Y$ is the second value, $R$ is the repetition factor of the SRS resource, and $N_{hop}$ is the maximum value or the minimum value of the number of frequency hops of multiple antenna ports of the SRS resource within a single third time unit respectively.

(13) A value determined based on the repetition factor of the SRS resource and the number of frequency hops included in a single frequency hopping period of the SRS resource.

In some embodiments, the second value may be determined based on a product of the repetition factor of the SRS resource and the number of frequency hops included in a single frequency hopping period of the SRS resource.

For example, the second value may be calculated as:

$$Y = R * N_{hop},$$

where $Y$ is the second value, $R$ is the repetition factor of the SRS resource, and $N_{hop}$ is the number of frequency hops included in a single frequency hopping period of the SRS resource.

(14) A value determined based on the repetition factor of the SRS resource and a value agreed by a protocol.

In some embodiments, the second value may be determined based on a product of the repetition factor of the SRS resource and the value agreed by the protocol.

For example, the second value may be calculated as:

$$Y = R * N_{hop},$$

where *Y* is the second value, *R* is the repetition factor of the SRS resource, and $N_{hop}$ is the value agreed by the protocol.

In some embodiments, a number of second time units to which a second part of antenna ports of the SRS resource are mapped within a single first time unit is a third value, and the third value may be any of the following.

(1) A value determined based on the number of second time units occupied by the SRS resource within a single first time unit, the number of antenna port groups included in the SRS resource, and the second value.

In some embodiments, the third value may be determined by subtracting a product of a fourth value and the second value from the number of second time units occupied by the SRS resource within a single first time unit. The fourth value is the number of antenna port groups included in the SRS resource minus 1.

For example, the third value may be calculated as:

$$Z = N_s - (M - 1)Y,$$

where *Z* is the third value, $N_s$ is the number of second time units occupied by the SRS resource within a single first time unit, *M* is the number of antenna port groups included in the SRS resource, and *Y* is the second value.

(2) A value determined based on the number of second time units occupied by the SRS resource within a single first time unit, the number of third time unit groups to which all antenna ports of the SRS resource are mapped, and the second value.

In some embodiments, the third value may be determined by subtracting a product of a fifth value and the second value from the number of second time units occupied by the SRS resource within a single first time unit. The fifth value is the number of third time unit groups to which all antenna ports of the SRS resource are mapped minus 1.

For example, the third value may be calculated as:

$$Z = N_s - (M - 1)Y,$$

where *Z* is the third value, $N_s$ is the number of second time units occupied by the SRS resource within a single first time unit, *M* is the number of third time unit groups to which all antenna ports of the SRS resource are mapped, and Y is the second value.

(3) A value determined based on the number of second time units occupied by the SRS resource within a single first time unit, the minimum number of third time units required for all antenna ports of the SRS resource being mapped once, and the second value.

In some embodiments, the third value may be determined by subtracting a product of a sixth value and the second value from the number of second time units occupied by the SRS resource within a single first time unit. The sixth value is the minimum number of third time units required for all antenna ports of the SRS resource being mapped once minus 1.

For example, the third value may be calculated as:

$$Z = N_s - (M - 1)Y,$$

where *Z* is the third value, $N_s$ is the number of second time units occupied by the SRS resource within a single first time unit, *M* is the minimum number of third time units required for all antenna ports of the SRS resource being mapped once, and *Y* is the second value.

(4) A value determined based on the number of second time units occupied by the SRS resource within a single first time unit, the number of third time units to which all antenna ports of the SRS resource are mapped in case that one repetition is performed on the all antenna ports, and the second value.

In some embodiments, the third value may be determined by subtracting a product of a seventh value and the second value from the number of second time units occupied by the SRS resource within a single first time unit. The seventh value is the number of third time units to which all antenna ports of the SRS resource are mapped in case that one repetition is performed on the all antenna ports minus 1.

For example, the third value may be calculated as:

$$Z = N_s - (M - 1)Y,$$

where *Z* is the third value, $N_s$ is the number of second time units occupied by the SRS resource within a single first time unit, *M* is the number of third time units to which all antenna ports of the SRS resource are mapped in case that one repetition is performed on the all antenna ports, and *Y* is the second value.

(5) A value determined based on the number of second time units occupied by the SRS resource within a single first time unit, the number of antenna ports of the SRS resource, the number of SRS antenna ports mapped on a single third time unit, and the second value.

In some embodiments, the third value may be determined by subtracting a product of an eighth value and the second value from the number of second time units occupied by the SRS resource within a single first time unit. The eighth value is a ratio of the number of antenna ports of the SRS resource to the number of SRS antenna ports mapped on a single third time unit minus 1. The number of antenna ports of the SRS resource is an integer multiple of the number of SRS antenna ports mapped on a single third time unit.

For example, the third value may be calculated as:

$$Z = N_s - \left(\frac{N_{ap}}{N_{ap}^S} - 1\right) Y,$$

where $Z$ is the third value, $N_s$ is the number of second time units occupied by the SRS resource within a single first time unit, $N_{ap}$ is the number of antenna ports of the SRS resource, $N_{ap}^S$ is the number of SRS antenna ports mapped on a single third time unit, $Y$ is the second value, and $N_{ap}$ may be divisible by $N_{ap}^S$.

(6) A value determined based on the number of second time units occupied by the SRS resource within a single first time unit, the number of antenna ports of the SRS resource, the number of SRS antenna ports respectively mapped on multiple third time units, and the second value.

In some embodiments, the third value may be determined by subtracting a product of a ninth value and the second value from the number of second time units occupied by the SRS resource within a single first time unit. The ninth value is a ratio of the number of antenna ports of the SRS resource to a maximum value or a minimum value of the number of SRS antenna ports respectively mapped on multiple third time units minus 1. The number of antenna ports of the SRS resource is an integer multiple of the maximum value or the minimum value of the number of SRS antenna ports respectively mapped on multiple third time units.

For example, the third value may be calculated as:

$$Z = N_s - \left(\frac{N_{ap}}{N_{ap}^S} - 1\right) Y,$$

where $Z$ is the third value, $N_s$ is the number of second time units occupied by the SRS resource within a single first time unit, $N_{ap}$ is the number of antenna ports of the SRS resource, $N_{ap}^S$ is the maximum value or the minimum value of the number of SRS antenna ports respectively mapped on multiple third time units, $Y$ is the second value, and $N_{ap}$ may be divisible by $N_{ap}^S$.

(7) A value determined based on the number of second time units occupied by the SRS resource within a single first time unit, the number of antenna ports of the SRS resource, the number of antenna ports of the SRS resource mapped on a single third time unit, and the second value.

In some embodiments, the third value may be determined by subtracting a product of a tenth value and the second value from the number of second time units occupied by the SRS resource within a single first time unit. The tenth value is a ratio of the number of antenna ports of the SRS resource to the number of antenna ports of the SRS resource mapped on a single third time unit minus 1. The number of antenna ports of the SRS resource is an integer multiple of the number of antenna ports of the SRS resource mapped on a single third time unit.

For example, the third value may be calculated as:

$$Z = N_s - \left(\frac{N_{ap}}{N_{ap}^S} - 1\right) Y,$$

where $Z$ is the third value, $N_s$ is the number of second time units occupied by the SRS resource within a single first time unit, $N_{ap}$ is the number of antenna ports of the SRS resource, $N_{ap}^S$ is the number of antenna ports of the SRS resource mapped on a single third time unit, $Y$ is the second value, and $N_{ap}$ may be divisible by $N_{ap}^S$.

(8) A value determined based on the number of second time units occupied by the SRS resource within a single first time unit, the number of antenna ports of the SRS resource, the number of antenna ports of the SRS resource respectively mapped on multiple third time units, and the second value.

In some embodiments, the third value may be determined by subtracting a product of an eleventh value and the second value from the number of second time units occupied by the SRS resource within a single first time unit. The eleventh value is a ratio of the number of antenna ports of the SRS resource to a maximum value or a minimum value of the number of antenna ports of the SRS resource respectively mapped on multiple third time units minus 1. The number of antenna ports of the SRS resource is an integer multiple of the maximum value or the minimum value of the number of antenna ports of the SRS resource respectively mapped on multiple third time units.

For example, the third value may be calculated as:

$$Z = N_s - \left(\frac{N_{ap}}{N_{ap}^S} - 1\right) Y,$$

where $Z$ is the third value, $N_s$ is the number of second time units occupied by the SRS resource within a single first time unit, $N_{ap}$ is the number of antenna ports of the SRS resource, $N_{ap}^S$ is the maximum value or the minimum value of the number of antenna ports of the SRS resource respectively mapped on multiple third time units, $Y$ is the second value, and $N_{ap}$ may be divisible by $N_{ap}^S$.

The first part of antenna ports and the second part of antenna ports may refer to one or multiple antenna ports, and the first part of antenna ports and the second part of antenna ports only represent two different parts of antenna ports, and there is no other limitation. In addition, the antenna ports of the SRS resource may include only the first part of antenna ports and the second part of antenna ports, or may include the first part of antenna ports, the second part of antenna ports, and other antenna ports except the first part of antenna ports and the second part of antenna ports, and the present application does not limit this.

In some embodiments, a first antenna port of the SRS resource is mapped to a same set of frequency domain units on all second time units being mapped to within a single first time unit.

In some embodiments, the first antenna port may refer to any antenna port included in the SRS resource, and is not specifically limited.

The frequency domain unit may be a PRB, a subcarrier or other frequency domain units, and is not limited here. This concept remains consistent throughout the description and would not be repeated later.

In case that the terminal determines the time domain resource and/or the frequency domain resource to which multiple antenna ports of the SRS resource are mapped based on the first information, the first antenna port of the SRS resource may be mapped to the same set of frequency domain units on all second time units being mapped to within a single first time unit.

In some embodiments, the terminal may map the first antenna port of the SRS resource to the same subcarrier set on all OFDM symbols being mapped to within a single slot. In some embodiments, the same set of frequency domain units may be a set of frequency domain units included in the full hopping bandwidth of the SRS resource.

In some embodiments, in case that the terminal maps the first antenna port of the SRS resource to the same subcarrier set on all OFDM symbols being mapped to within a single slot, the subcarrier set may be a set consisting of all subcarriers or a part of subcarriers on all PRBs of the full hopping bandwidth of the SRS resource. All PRBs of the full hopping bandwidth of the SRS resource may be determined based on a bandwidth configured for the SRS resource. All PRBs of the full hopping bandwidth of the SRS resource may be PRBs corresponding to the bandwidth configured for the SRS resource.

In some embodiments, the SRS resource may not be configured for performing frequency hopping transmission, and/or the value of the repetition factor of the SRS resource may be equal to a number of second time units occupied by the SRS resource within a single first time unit.

In some embodiments, the terminal may determine whether to map the first antenna port of the SRS resource to the same subcarrier set on all OFDM symbols being mapped to within a single slot based on whether the SRS resource is not configured for performing frequency hopping transmission and/or whether the value of the repetition factor of the SRS resource is equal to the number of OFDM symbols occupied by the SRS resource within a single slot.

In some embodiments, in case that a first condition is satisfied, the terminal may map the first antenna port of the SRS resource to the same subcarrier set on all OFDM symbols being mapped to within a single slot, where the subcarrier set may be a set consisting of all subcarriers or a part of subcarriers on all PRBs of the full hopping bandwidth of the SRS resource.

In some embodiments, the first condition includes at least: the SRS resource is not configured for performing frequency hopping transmission, and/or the value of the repetition factor of the SRS resource is equal to the number of second time units occupied by the SRS resource within a single first time unit.

That is, in case that the condition "the SRS resource is not configured for performing frequency hopping transmission, and/or the value of the repetition factor of the SRS resource is equal to the number of second time units occupied by the SRS resource within a single first time unit" is satisfied, or in case that the condition "the SRS resource is not configured for performing frequency hopping transmission, and/or the value of the repetition factor of the SRS resource is equal to the number of second time units occupied by the SRS resource within a single first time unit" and other conditions are satisfied simultaneously, the terminal may map the first antenna port of the SRS resource to the same subcarrier set on all OFDM symbols being mapped to within a single slot, where the subcarrier set may be a set consisting of all subcarriers or a part of subcarriers on all PRBs of the full hopping bandwidth of the SRS resource. A second condition, a third condition, and a fourth condition described below are similar and are not repeated here.

In some embodiments, the first antenna port of the SRS resource may be mapped to different sets of frequency domain units on multiple first time units, and may be mapped to the same set of frequency domain units on all second time units being mapped to within the same first time unit.

In some embodiments, in case that the terminal maps the first antenna port of the SRS resource to different PRB sets within multiple slots, the first antenna port may be mapped to the same subcarrier set on all OFDM symbols being mapped to within the same slot.

In some embodiments, the SRS resource may be configured for performing frequency hopping transmission, and the value of the repetition factor of the SRS resource may be equal to the number of second time units to which the first antenna port is mapped within a single first time unit.

In some embodiments, the terminal may determine whether to map the first antenna port of the SRS resource to different PRB sets within multiple slots and map the first antenna port to the same subcarrier set on all OFDM symbols being mapped to within the same slot based on whether the SRS resource is configured for performing frequency hopping transmission and whether the value of the repetition factor of the SRS resource is equal to the number of second time units to which the first antenna port is mapped within a single first time unit.

In some embodiments, in case that the second condition is satisfied, the terminal may map the first antenna port of the SRS resource to different PRB sets within multiple slots and map the first antenna port to the same subcarrier set on all OFDM symbols being mapped to within the same slot.

In some embodiments, the second condition includes at least: the SRS resource is configured for performing frequency hopping transmission, and the value of the repetition factor of the SRS resource is equal to the number of second time units to which the first antenna port is mapped within a single first time unit.

In some embodiments, the first antenna port of the SRS resource is mapped to different sets of frequency domain units on different second time units being mapped to within a single first time unit.

In some embodiments, in case that the terminal determines the time domain resource and/or the frequency domain resource to which multiple antenna ports of the SRS resource are mapped based on the first information, the first antenna port of the SRS resource may be mapped to different sets of frequency domain units on different second time units being mapped to within a single first time unit.

In some embodiments, the terminal may map the first antenna port of the SRS resource to different PRB sets on different OFDM symbols being mapped to within a single slot.

In some embodiments, the SRS resource may be configured for performing frequency hopping transmission, and/or the value of the repetition factor of the SRS resource may be 1.

In some embodiments, the terminal may determine whether to map the first antenna port of the SRS resource to different PRB sets on different OFDM symbols being mapped to within a single slot based on whether the SRS resource is configured for performing frequency hopping transmission and/or whether the value of the repetition factor of the SRS resource is 1.

In some embodiments, in case that the third condition is satisfied, the terminal may map the first antenna port of the SRS resource to different PRB sets on different OFDM symbols being mapped to within a single slot.

In some embodiments, the third condition at least includes: the SRS resource is configured for performing frequency hopping transmission, and/or the value of the repetition factor of the SRS resource is 1.

In some embodiments, all second time units to which the first antenna port of the SRS resource is mapped within a single first time unit are divided into multiple symbol groups, each symbol group includes R second time units, and the first antenna port is mapped to different sets of frequency domain units on different symbol groups, and is mapped to a same set of frequency domain units on R second time units within a same symbol group, where R is the value of the repetition factor of the SRS resource.

In some embodiments, in case that the terminal determines the time domain resource and/or the frequency domain resource to which multiple antenna ports of the SRS resource are mapped based on the first information, all second time units to which the first antenna port of the SRS resource is mapped within a single first time unit may be divided into multiple symbol groups, each symbol group includes R second time units, and the first antenna port is mapped to different sets of frequency domain units on different symbol groups, and is mapped to the same set of frequency domain units on R second time units within the same symbol group. R is the value of the repetition factor of the SRS resource.

In some embodiments, the terminal may divide all OFDM symbols to which the first antenna port of the SRS resource is mapped within a single slot into multiple symbol groups, each symbol group includes R OFDM symbols, and the first antenna port is mapped to different PRB sets on different symbol groups, and is mapped to the same PRB set on R OFDM symbols in the same symbol group. R is the value of the repetition factor of the SRS resource, and the number of all OFDM symbols to which the first antenna port of the SRS resource is mapped within a single slot is an integer multiple of the value of the repetition factor of the SRS resource.

For example, in case that the number of all OFDM symbols to which the first antenna port of the SRS resource is mapped within a single slot is P, the P OFDM symbols may be divided into P/R symbol groups, where each symbol group includes R OFDM symbols.

In some embodiments, the SRS resource may be configured for performing frequency hopping transmission, and/or the value of the repetition factor of the SRS resource may be greater than or equal to 2.

In some embodiments, the terminal may determine, based on whether the SRS resource is configured for performing frequency hopping transmission and/or whether the value of the repetition factor of the SRS resource is greater than or equal to 2, whether to divide all OFDM symbols to which the first antenna port of the SRS resource is mapped within a single slot into multiple symbol groups, where each symbol group includes R OFDM symbols, and the first antenna port is mapped to different PRB sets on different symbol groups, and is mapped to the same PRB set on R OFDM symbols in the same symbol group. R is the value of the repetition factor of the SRS resource. In an embodiment, in case that the fourth condition is satisfied, the terminal may divide all OFDM symbols to which the first antenna port of the SRS resource is mapped within a single slot into multiple symbol groups, where each symbol group includes R OFDM symbols, and the first antenna port is mapped to different PRB sets on different symbol groups, and is mapped to the same PRB set on R OFDM symbols in the same symbol group.

In some embodiments, the fourth condition at

least includes: the SRS resource is configured for performing frequency hopping transmission, and/or the value of the repetition factor of the SRS resource is greater than or equal to 2.

In some embodiments, the different sets of frequency domain units mentioned above may include the same number of frequency domain units.

In some embodiments, in case that the terminal maps the first antenna port of the SRS resource to different sets of frequency domain units on different second time units being mapped to within a single first time unit, or in case that the terminal maps the first antenna port of the SRS resource to different sets of frequency domain units on different symbol groups, or in case that the terminal maps the first antenna port of the SRS resource to different sets of frequency domain units on multiple first time units, the number of frequency domain units included in different sets of frequency domain units may be the same.

In some embodiments, the number of frequency domain units included in any set of frequency domain units is equal to a ratio of a number of frequency domain units included in a full hopping bandwidth of the SRS resource to a number of second time units to which the first antenna port is mapped within a single first time unit.

In some embodiments, in case that the number of frequency domain units included in the above-mentioned different sets of frequency domain units is the same, the terminal may determine the number of frequency domain units included in any set of frequency domain units based on the ratio of the number of frequency domain units included in the full hopping bandwidth of the SRS resource to the number of second time units to which the first antenna port is mapped within a single first time unit.

In some embodiments, the terminal may determine the number of PRBs included in any PRB set based on a ratio of the number of PRBs included in the full hopping bandwidth of the SRS resource to the number of OFDM symbols to which the first antenna port is mapped within a single slot.

For example, the number of PRBs included in any PRB set may be calculated as:

$$Q = \frac{N_{PRB}}{N_s^{ap}},$$

where $Q$ is the number of PRBs included in any PRB set, $N_{PRB}$ is the number of PRBs included in the full hopping bandwidth of the SRS resource, and $N_s^{ap}$ is the number of OFDM symbols to which the first antenna port is mapped within a single slot.

In some embodiments, a frequency hopping mode used by a frequency domain resource to which a first antenna port of the SRS resource is mapped is a first frequency hopping mode, a second frequency hopping mode, or a third frequency hopping mode,

where the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;

the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and

the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, where R is a value of the repetition factor of the SRS resource.

In some embodiments, in case that the terminal determines the time domain resource and/or the frequency domain resource to which multiple antenna ports of the SRS resource are mapped based on the first information, the frequency domain resource to which multiple antenna ports of the SRS resource are mapped may be determined based on the first frequency hopping mode, the second frequency hopping mode or the third frequency hopping mode.

In some embodiments, the terminal may determine, based on the first frequency hopping mode, the frequency domain resource to which the first antenna port of the SRS resource is mapped.

The first frequency hopping mode may be: among multiple slots to which the first antenna port is mapped, a first hop of the first antenna port is mapped to a first slot, a second hop of the first antenna port is mapped to a second slot, and so on, until all hops are mapped, and in case that a remaining unmapped slot exists, a same frequency hopping pattern continues to the remaining slot.

For example, in case that the first antenna port is mapped to 8 slots, including 2 hops, the frequency hopping pattern on the 8 slots is: #1#2#1#2#1#2#1#2, where #1 and #2 represent different hops respectively.

Alternatively, the first frequency hopping pattern may also be: among multiple OFDM symbols to which the first antenna port is mapped, a first hop of the first antenna port is mapped to a first OFDM symbol, a second hop of the first antenna port is mapped to a second OFDM symbol, and so on, until all hops are mapped, and in case that a remaining unmapped OFDM symbol exists, a same frequency hopping pattern continues to the remaining OFDM symbol.

For example, in case that the first antenna port is mapped to 8 OFDM symbols, including 4 hops, the frequency hopping pattern on the 8 OFDM symbols is: #1#2#3#4#1#2#3#4, where #1, #2, #3 and #4 represent different hops respectively.

In some embodiments, the terminal may determine, based on the second frequency hopping mode, the frequency domain resource to which the first antenna port of the SRS resource is mapped.

The second frequency hopping mode may be: among multiple slots to which the first antenna port is mapped, a first hop of the first antenna port is mapped to a first slot and a second slot, a second hop of the first antenna port is mapped to a third slot and a fourth slot, and so on, until all hops are mapped, and in case that a remaining unmapped slot exists, a same frequency hopping pattern continues to the remaining slot.

For example, in case that the first antenna port is mapped to 8 slots, including 4 hops, the frequency hopping pattern on the 8 slots is: #1#1#2#2#3#3#4#4, where #1, #2, #3 and #4 represent different hops respectively.

Alternatively, the second frequency hopping pattern may also be: among multiple OFDM symbols to which the first antenna port is mapped, a first hop of the first antenna port is mapped to a first OFDM symbol and a second OFDM symbol, a second hop of the first antenna port is mapped to a third OFDM symbol and a fourth OFDM symbol, and so on, until all hops are mapped, and in case that a remaining unmapped OFDM symbol exists, a same frequency hopping pattern continues to the remaining OFDM symbol.

For example, in case that the first antenna port is mapped to 8 OFDM symbols, including 2 hops, the frequency hopping pattern on the 8 OFDM symbols is: #1#1#2#2#1#1#2#2, where #1 and #2 represent different hops respectively.

In some embodiments, the terminal may determine, based on the third frequency hopping mode, the frequency domain resource to which the first antenna port of the SRS resource is mapped.

The third frequency hopping mode may be: among multiple slots to which the first antenna port is mapped, a first hop of the first antenna port is mapped to first R slots, a second hop of the first antenna port is mapped to (R+1)-th to (2*R)-th slots, and so on, until all hops are mapped, and in case that a remaining unmapped slot exists, a same frequency hopping pattern continues to the remaining slot, where R is the value of the repetition factor of the SRS resource.

For example, in case that the first antenna port is mapped to 8 slots, including 2 hops, and the value of R is 4, the frequency hopping pattern on the 8 slots is: #1#1#1#1#2#2#2#2, where #1 and #2 represent different hops respectively.

Alternatively, the third frequency hopping mode may also be: among multiple OFDM symbols to which the first antenna port is mapped, a first hop of the first antenna port is mapped to first R OFDM symbols, a second hop of the first antenna port is mapped to (R+1)-th to (2*R)-th OFDM symbols, and so on, until all hops are mapped, and in case that a remaining unmapped OFDM symbol exists, a same frequency hopping pattern continues to the remaining OFDM symbol, where R is the value of the repetition factor of the SRS resource.

For example, in case that the first antenna port is mapped to 8 OFDM symbols, including 4 hops, and the value of R is 2, the frequency hopping pattern on the 8 OFDM symbols is: #1#1#2#2#3#3#4#4, where #1, #2, #3 and #4 represent different hops respectively.

In some embodiments, the terminal may determine, based on whether the SRS resource performs intra-slot frequency hopping and whether the number of hops of the first antenna port of the SRS resource is equal to the number of OFDM symbols to which the first antenna port is mapped, whether to determine, based on the first frequency hopping mode, the frequency domain resource to which the first antenna port of the SRS resource is mapped.

In some embodiments, the terminal may also determine, based on whether the SRS resource performs inter-slot hopping and whether the number of hops of the first antenna port of the SRS resource is equal to the number of slots to which the first antenna port is mapped, whether to determine, based on the first frequency hopping mode, the frequency domain resource to which the first antenna port of the SRS resource is mapped.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, is determined based on any of the following.

(1) The number of antenna ports of the SRS resource and the number of SRS antenna ports mapped on a single third time unit.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of antenna ports of the SRS resource to the number of SRS antenna ports mapped on a single third time unit.

For example, one calculation way may be:

$$M = \frac{N_{ap}}{N_{ap}^S},$$

where *M* is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_{ap}$ is the number of antenna ports of the SRS resource, and $N_{ap}^S$ is the number of SRS antenna ports mapped on a single third time unit.

(2) The number of antenna ports of the SRS resource and the number of SRS antenna ports respectively mapped on multiple third time units.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of antenna ports of the SRS resource to a maximum value or a minimum value of the number of SRS antenna ports respectively mapped on multiple third time units.

For example, one calculation way may be:

$$M = \frac{N_{ap}}{N_{ap}^S},$$

where *M* is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_{ap}$ is the number of antenna ports of the SRS resource, and $N_{ap}^S$ is the maximum value or the minimum value of the number of SRS antenna ports respectively mapped on multiple third time units.

(3) The number of antenna ports of the SRS resource and the number of antenna ports of the SRS resource mapped on a single third time unit.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of antenna ports of the SRS resource to the number of antenna ports of the SRS resource mapped on a single third time unit.

For example, one calculation way may be:

$$M = \frac{N_{ap}}{N_{ap}^S},$$

where *M* is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_{ap}$ is the number of antenna ports of the SRS resource, and $N_{ap}^S$ is the number of antenna ports of the SRS resource mapped on a single third time unit.

(4) The number of antenna ports of the SRS resource and the number of antenna ports of the SRS resource respectively mapped on multiple third time units.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of antenna ports of the SRS resource to a maximum value or a minimum value of the number of antenna ports of the SRS resource respectively mapped on multiple third time units.

For example, one calculation way may be:

$$M = \frac{N_{ap}}{N_{ap}^S},$$

where *M* is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_{ap}$ is the number of antenna ports of the SRS resource, and $N_{ap}^s$ is the maximum value or the minimum value of the number of antenna ports of the SRS resource respectively mapped on multiple third time units.

(5) The number of second time units occupied by the SRS resource within a single first time unit, the repetition factor of the SRS resource, and the number of frequency hops of a single antenna port of the SRS resource within a single third time unit.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of second time units occupied by the SRS resource within a single first time unit to a sixth product. The sixth product is a product of the repetition factor of the SRS resource and the number of frequency hops of a single antenna port of the SRS resource within a single third time unit.

For example, one calculation way may be:

$$M = \frac{N_s}{R * N_{hop}},$$

where $M$ is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_s$ is the number of second time units occupied by the SRS resource within a single first time unit, $R$ is the repetition factor of the SRS resource, and $N_{hop}$ is the number of frequency hops of a single antenna port of the SRS resource within a single third time unit.

(6) The number of second time units occupied by the SRS resource within a single first time unit, the repetition factor of the SRS resource, and the number of frequency hops of multiple antenna ports of the SRS resource within a single third time unit respectively.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of second time units occupied by the SRS resource within a single first time unit to a seventh product. The seventh product is a product of the repetition factor of the SRS resource and a maximum value or a minimum value of the number of frequency hops of multiple antenna ports of the SRS resource within a single third time unit respectively.

For example, one calculation way may be:

$$M = \frac{N_s}{R * N_{hop}},$$

where $M$ is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_s$ is the number of second time units occupied by the SRS resource within a single first time unit, $R$ is the repetition factor of the SRS resource, and $N_{hop}$ is the maximum value or the minimum value of the number of frequency hops of multiple antenna ports of the SRS resource within a single third time unit respectively.

(7) The number of second time units occupied by the SRS resource within a single first time unit, the repetition factor of the SRS resource, and the number of frequency hops included in a single frequency hopping period of the SRS resource.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of second time units occupied by the SRS resource within a single first time unit to an eighth product. The eighth product is a product of the repetition factor of the SRS resource and the number of frequency hops included in a single frequency hopping period of the SRS resource.

For example, one calculation way may be:

$$M = \frac{N_s}{R * N_{hop}},$$

where $M$ is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_s$ is the number of second time units occupied by the SRS resource within a single first time unit, $R$ is the repetition factor of the SRS resource, and $N_{hop}$ is the number of frequency hops included in a single frequency hopping period of the SRS resource.

(8) The number of second time units occupied by the SRS resource within a single first time unit and the number of second time units to which a single antenna port of the SRS resource is mapped within a single first time unit.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of second time units occupied by the SRS resource within a single first time unit to the number of second time units to which a single antenna port of the SRS resource is mapped within a single first time unit.

For example, one calculation way may be:

$$M = \frac{N_s}{N_s^{ap}},$$

where $M$ is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_s$ is the number of second time units occupied by the SRS resource within a single first time unit, and $N_s^{ap}$ is the number of second time units to which a single antenna port of the SRS resource is mapped within a single first time unit.

(9) The number of second time units occupied by the SRS resource within a single first time unit and the number of second time units to which multiple antenna ports of the SRS resource are respectively mapped within a single first time unit.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of second time units occupied by the SRS resource within a single first time unit to a maximum value or a minimum value of the number of second time units to which multiple antenna ports of the SRS resource are respectively mapped within a single first time unit.

For example, one calculation way may be:

$$M = \frac{N_s}{N_s^{ap}},$$

where $M$ is the number of antenna port groups included in the SRS resource, or the number of third time unit groups to which all antenna ports of the SRS resource are mapped, or the minimum number of third time units required for all antenna ports of the SRS resource being mapped once, $N_s$ is the number of second time units occupied by the SRS resource within a single first time unit, or the number of third time units to which all antenna ports of the SRS resource are mapped in case that one repetition is performed on the all antenna ports, and $N_s^{ap}$ is the maximum value or the minimum value of number of second time units to which multiple antenna ports of the SRS resource are respectively mapped within a single first time unit.

In some embodiments, the number of second time units to which a single antenna port of the SRS resource is mapped within a single first time unit, or the number of second time units to which multiple antenna ports of the SRS resource are respectively mapped within a single first time unit, is determined based on any of the following.

(1) The number of SRS antenna ports mapped on a single third time unit, the number of second time units occupied by the SRS resource within a single first time unit, and the number of antenna ports of the SRS resource.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of a ninth product to the number of antenna ports of the SRS resource. The ninth product is a product of the number of SRS antenna ports mapped on a single third time unit and the number of second time units occupied by the SRS resource within a single first time unit.

For example, one calculation way may be:

$$N_s^{ap} = \frac{N_{ap}^s * N_s}{N_{ap}},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_{ap}^s$ is the number of SRS antenna ports mapped on a single third time unit, $N_s$ is the number of second time units occupied by the SRS resource within a single first time unit, and $N_{ap}$ is the number of antenna ports of the SRS resource.

(2) The number of second time units occupied by the SRS resource within a single first time unit, the number of antenna ports of the SRS resource, and the number of SRS antenna ports respectively mapped on multiple third time units.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of a tenth product to the number of antenna ports of the SRS resource. The tenth product is a product of a maximum value or a minimum value of the number of SRS antenna ports respectively mapped on multiple third time units and the number of second time units occupied by the SRS resource within a single first time unit.

For example, one calculation way may be:

$$N_s^{ap} = \frac{N_{ap}^S * N_s}{N_{ap}},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_{ap}^s$ is the maximum value or the minimum value of the number of SRS antenna ports respectively mapped on multiple third time units, $N_s$ is the number of second time units occupied by the SRS resource within a single first time unit, and $N_{ap}$ is the number of antenna ports of the SRS resource.

(3) The number of antenna ports of the SRS resource mapped on a single third time unit, the number of second time units occupied by the SRS resource within a single first time unit, and the number of antenna ports of the SRS resource.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of an eleventh product to the number of antenna ports of the SRS resource. The eleventh product is a product of the number of antenna ports of the SRS resource mapped on a single third time unit and the number of second time units occupied by the SRS resource within a single first time unit.

For example, one calculation way may be:

$$N_s^{ap} = \frac{N_{ap}^S * N_s}{N_{ap}},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_{ap}^s$ is the number of antenna ports of the SRS resource mapped on a single third time unit, $N_s$ is the number of second time units occupied by the SRS resource within a single first time unit, and $N_{ap}$ is the number of antenna ports of the SRS resource.

(4) The number of antenna ports of the SRS resource respectively mapped on multiple third time units, the number of second time units occupied by the SRS resource within a single first time unit, and the number of antenna ports of the SRS resource.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of a twelfth product to the number of antenna ports of the SRS resource. The twelfth product is a product of a maximum value or a minimum value of the number of antenna ports of the SRS resource respectively mapped on multiple third time units and the number of second time units occupied by the SRS resource within a single first time unit.

For example, one calculation way may be:

$$N_s^{ap} = \frac{N_{ap}^S * N_s}{N_{ap}},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_{ap}^s$ is the maximum value or the minimum value of the number of antenna ports of the SRS resource respectively mapped on multiple third time units, $N_s$ is the number of second time units occupied by the SRS resource within a single first time unit, and $N_{ap}$ is the number of antenna ports of the SRS resource.

(5) The repetition factor of the SRS resource and the number of frequency hops of a single antenna port of the SRS resource within a single third time unit.

In some embodiments, the number of second time units to which a single antenna port of the SRS resource is mapped within a single first time unit, or the number of second time units to which multiple antenna ports of the SRS resource are respectively mapped within a single first time unit may be determined based on a product of the repetition factor of the SRS resource and the number of frequency hops of a single antenna port of the SRS resource within a single third time unit.

For example, one calculation way may be:

$$N_s^{ap} = R * N_{hop},$$

where $N_s^{ap}$ is the number of second time units to which a single antenna port of the SRS resource is mapped within a single first time unit, or the number of second time units to which multiple antenna ports of the SRS resource are respectively mapped within a single first time unit, R is the repetition factor of the SRS resource, and $N_{hop}$ is the number of frequency hops of a single antenna port of the SRS resource within a single third time unit.

(6) The repetition factor of the SRS resource and the number of frequency hops of multiple antenna ports of the SRS resource within a single third time unit respectively.

In some embodiments, the number of second time units to which a single antenna port of the SRS resource is mapped within a single first time unit, or the number of second time units to which multiple antenna ports of the SRS resource are respectively mapped within a single first time unit may be determined based on a product of the repetition factor of the SRS resource and a maximum value or a minimum value of the number of frequency hops of multiple antenna ports of the SRS resource within a single third time unit respectively.

For example, one calculation way may be:

$$N_s^{ap} = R * N_{hop},$$

where $N_s^{ap}$ is the number of second time units to which a single antenna port of the SRS resource is mapped within a single first time unit, or the number of second time units to which multiple antenna ports of the SRS resource are respectively mapped within a single first time unit, R is the repetition factor of the SRS resource, and $N_{hop}$ is the is the maximum value or the minimum value of the number of frequency hops of multiple antenna ports of the SRS resource within a single third time unit respectively.

(7) The repetition factor of the SRS resource and the number of frequency hops included in a single frequency hopping period of the SRS resource.

In some embodiments, the number of second time units to which a single antenna port of the SRS resource is mapped within a single first time unit, or the number of second time units to which multiple antenna ports of the SRS resource are respectively mapped within a single first time unit may be determined based on a product of the repetition factor of the SRS resource and the number of frequency hops included in a single frequency hopping period of the SRS resource.

For example, one calculation way may be:

$$N_s^{ap} = R * N_{hop},$$

where $N_s^{ap}$ is the number of second time units to which a single antenna port of the SRS resource is mapped within a single first time unit, or the number of second time units to which multiple antenna ports of the SRS resource are respectively mapped within a single first time unit, R is the repetition factor of the SRS resource, and $N_{hop}$ is the number of frequency hops included in a single frequency hopping period of the SRS resource.

(8) The number of second time units occupied by the SRS resource within a single first time unit and the number of antenna port groups included in the SRS resource.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of the number of second time units occupied by the SRS resource within a single first time unit to the number of antenna port groups included in the SRS resource.

For example, one calculation way may be:

$$N_s^{ap} = \frac{N_s}{M},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_s$ is the number of second time units occupied by the SRS resource within a single first time unit, and M is the number of antenna port groups included in the SRS resource.

(9) The number of second time units occupied by the SRS resource within a single first time unit and the number of third time unit groups to which all antenna ports of the SRS resource are mapped.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of the number of second time units occupied by the SRS resource within a single first time unit to the number of third time unit groups to which all antenna ports of the SRS resource are mapped.

For example, one calculation way may be:

$$N_s^{ap} = \frac{N_s}{M},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_s$ is the number of second time units occupied by the SRS resource within a single first time unit, and $M$ is the number of third time unit groups to which all antenna ports of the SRS resource are mapped.

(10) The number of second time units occupied by the SRS resource within a single first time unit and the minimum number of third time units required for all antenna ports of the SRS resource being mapped once.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of the number of second time units occupied by the SRS resource within a single first time unit to the minimum number of third time units required for all antenna ports of the SRS resource being mapped once.

For example, one calculation way may be:

$$N_s^{ap} = \frac{N_s}{M},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_s$ is the number of second time units occupied by the SRS resource within a single first time unit, and $M$ is the minimum number of third time units required for all antenna ports of the SRS resource being mapped once.

(11) The number of second time units occupied by the SRS resource within a single first time unit and the number of third time units to which all antenna ports of the SRS resource are mapped in case that one repetition is performed on the all antenna ports.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of the number of second time units occupied by the SRS resource within a single first time unit to the number of third time units to which all antenna ports of the SRS resource are mapped in case that one repetition is performed on the all antenna ports.

For example, one calculation way may be:

$$N_s^{ap} = \frac{N_s}{M},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_s$ is the number of second time units occupied by the SRS resource within a single first time unit, and $M$ is the number of third time units to which all antenna ports of the SRS resource are mapped in case that one repetition is performed on the all antenna ports.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of the following.

(1) The number of antenna ports of the SRS resource and the number of antenna port groups included in the SRS resource.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of the number of antenna ports of the SRS resource to the number of antenna port groups included in the SRS resource.

For example, one calculation way may be:

$$N_{ap}^s = \frac{N_{ap}}{M},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, and $M$ is the number of antenna port groups included in the SRS resource.

(2) The number of antenna ports of the SRS resource and the number of third time unit groups to which all antenna ports of the SRS resource are mapped.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of the number of antenna ports of the SRS resource to the number of third time unit groups to which all antenna ports of the SRS resource are mapped.

For example, one calculation way may be:

$$N_{ap}^s = \frac{N_{ap}}{M},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, and $M$ is the number of third time unit groups to which all antenna ports of the SRS resource are mapped.

(3) The number of antenna ports of the SRS resource and the minimum number of third time units required for all antenna ports of the SRS resource being mapped once.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of the number of antenna ports of the SRS resource to the minimum number of third time units required for all antenna ports of the SRS resource being mapped once.

For example, one calculation way may be:

$$N_{ap}^s = \frac{N_{ap}}{M},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, and $M$ is the minimum number of third time units required for all antenna ports of the SRS resource being mapped once.

(4) The number of antenna ports of the SRS resource and the number of third time units to which all antenna ports of the SRS resource are mapped in case that one repetition is performed on the all antenna ports.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of the number of antenna ports of the SRS resource to the number of third time units to which all antenna ports of the SRS resource are mapped in case that one repetition is performed on the all antenna ports.

For example, one calculation way may be:

$$N_{ap}^s = \frac{N_{ap}}{M},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, and $M$ is the number of third time units to which all antenna ports of the SRS resource are mapped in case that one repetition is performed on the all antenna ports.

(5) The number of second time units occupied by the SRS resource within a single first time unit, the number of antenna ports of the SRS resource, the repetition factor of the SRS resource, and the number of frequency hops of a single antenna port of the SRS resource within a single third time unit.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of a thirteenth product to the number of second time units occupied by the SRS resource within a single first time unit. The thirteenth product is a product of the number of antenna ports of the SRS resource, the repetition factor of the SRS resource, and the number of frequency hops of a single antenna port of the SRS resource within a single third time unit.

For example, one calculation way may be:

$$N_{ap}^s = \frac{N_{ap} * R * N_{hop}}{N_S},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, $R$ is the repetition factor of the SRS resource, $N_{hop}$ is the number of frequency hops of a single antenna port of the SRS resource within a single third time unit, and $N_s$ is the number of second time units occupied by the SRS resource within a single first time unit.

(6) The number of second time units occupied by the SRS resource within a single first time unit, the number of antenna ports of the SRS resource, the repetition factor of the SRS resource, and the number of frequency hops of multiple antenna ports of the SRS resource within a single third time unit respectively.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of a fourteenth product to the number of second time units occupied by the SRS resource within a single first time unit. The fourteenth product is a product of the number of antenna ports of the SRS resource, the repetition factor of the SRS resource, and a maximum value or a minimum value of the number of frequency hops of multiple antenna ports of the SRS resource within a single third time unit respectively.

For example, one calculation way may be:

$$N_{ap}^s = \frac{N_{ap}*R*N_{hop}}{N_s},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, $R$ is the repetition factor of the SRS resource, $N_{hop}$ is the maximum value or the minimum value of the number of frequency hops of multiple antenna ports of the SRS resource within a single third time unit respectively, and $N_s$ is the number of second time units occupied by the SRS resource within a single first time unit.

(7) The number of second time units occupied by the SRS resource within a single first time unit, the number of antenna ports of the SRS resource, the repetition factor of the SRS resource, and the number of frequency hops included in a single frequency hopping period of the SRS resource.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of a fifteenth product to the number of second time units occupied by the SRS resource within a single first time unit. The fifteenth product is a product of the number of antenna ports of the SRS resource, the repetition factor of the SRS resource, and the number of frequency hops included in a single frequency hopping period of the SRS resource.

For example, one calculation way may be:

$$N_{ap}^s = \frac{N_{ap}*R*N_{hop}}{N_s},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, $R$ is the repetition factor of the SRS resource, $N_{hop}$ is the number of frequency hops included in a single frequency hopping period of SRS resources, and $N_s$ is the number of second time units occupied by the SRS resource within a single first time unit.

(8) The number of second time units occupied by the SRS resource within a single first time unit, the number of antenna ports of the SRS resource, and the number of second time units to which a single antenna port of the SRS resource is mapped within a single first time unit.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of a sixteenth product to the number of second time units occupied by the SRS resource within a single first time unit. The sixteenth product is a product of the number of antenna ports of the SRS resource and the number of second time units to which a single antenna port of the SRS resource is mapped within a single first time unit.

For example, one calculation way may be:

$$N_{ap}^s = \frac{N_{ap}*N_s^{ap}}{N_s},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, $N_s^{ap}$ is the number of second time units to which a single antenna port of the SRS resource is mapped within a single first time unit, and $N_s$ is the number of second time units occupied by the SRS resource within a single first time unit.

(9) The number of second time units occupied by the SRS resource within a single first time unit, the number of antenna ports of the SRS resource, and the number of second time units to which multiple antenna ports of the SRS resource are respectively mapped within a single first time unit.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of a seventeenth product to the number of second time units occupied by the SRS resource within a single first time unit. The seventeenth product is a product of the number of antenna ports of the SRS resource and a maximum value or a minimum value of the second time units to which multiple antenna ports of the SRS resource are respectively mapped within a single first time unit.

For example, one calculation way may be:

$$N_{ap}^s = \frac{N_{ap} * N_s^{ap}}{N_s},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, $N_s^{ap}$ is the maximum value or the minimum value of the number of second time units to which multiple antenna ports of the SRS resource are respectively mapped within a single first time unit, and $N_s$ is the number of second time units occupied by the SRS resource within a single first time unit.

In some embodiments, determining, based on the first information, the time domain resource and/or the frequency domain resource to which multiple antenna ports of the SRS resource are mapped includes:
based on the number of antenna ports of the SRS resource and/or indication information sent from the network device, determining, based on the first information, the time domain resource and/or the frequency domain resource to which multiple antenna ports of the SRS resource are mapped.

In some embodiments, the terminal may determine, based on whether the number of antenna ports of the SRS resource is greater than a given value and/or whether the network device sends the indication message, whether to determine, based on the first information, the time domain resource and/or the frequency domain resource to which multiple antenna ports of the SRS resource are mapped.

For example, in case that the number of antenna ports of the SRS resource is greater than the given value, the terminal may determine, based on the first information, the time domain resource and/or the frequency domain resource to which multiple antenna ports of the SRS resource are mapped; and in case that the number of antenna ports of the SRS resource is less than or equal to the given value, the time domain resource and/or the frequency domain resource to which multiple antenna ports of the SRS resource are mapped may be determined by using the related art (all SRS ports of one SRS resource are mapped to all OFDM symbols configured by the base station for the SRS resource).

In some embodiments, the given value of the number of antenna ports of the SRS resource may be 4.

For example, in case that $N_{ap}=8$, the method provided by the embodiment of the present application is adopted; and in case that $N_{ap}=1$, 2 or 4, a method in the related art is adopted.

The network device may send enable information, for example, send one piece of indication information. In case that the indication information indicates to map multiple ports of the SRS resource to different OFDM symbols (i.e., the SRS ports are mapped in a time division multiplexing (TDM) manner, i.e., at least 2 groups of SRS ports are mapped to different OFDM symbols), the method provided by the embodiment of the present application is adopted; otherwise, all antenna ports of the SRS resource are mapped to all OFDM symbols, i.e., the method in the related art is adopted. The indication information may be included in configuration information of the SRS resource, i.e., it is indicated for each SRS resource (which is more suitable for one or more SRS port numbers (i.e., the value of $N_{ap}$), and a fixed rule is adopted to map the SRS resource to multiple OFDM symbols in the TDM manner).

In some embodiments, the method further includes:

receiving second information sent from the network device, where the second information is used to indicate one or more items of the first information.

In some embodiments, the network device may send the second information to the terminal, and the second information may be used to indicate one or more items of the first information. After receiving the second information sent from the network device, the terminal may determine the time domain resource and/or the frequency domain resource to which multiple antenna ports of the SRS resource are mapped based on one or more items of the first information indicated by the second information.

FIG. 2 is a second schematic flowchart of a method for SRS transmission according to an embodiment of the present application. The method is performed by a network device (such as a base station). As shown in FIG. 2, the method includes the following steps.

Step 200: receiving, based on a time domain resource and/or a frequency domain resource to which multiple antenna ports of an SRS resource are mapped, an SRS corresponding to the SRS resource sent from a terminal, where the time domain resource and/or the frequency domain resource is determined based on first information, or the time domain resource and/or the frequency domain resource is used to determine second information, and the second information is used to indicate one or more items of the first information, where among the multiple antenna ports of the SRS resource, at least two antenna ports are mapped to different time units.

In some embodiments, the network device may receive the SRS corresponding to the SRS resource sent from the terminal on the corresponding time domain resource and/or the frequency domain resource based on the time domain resource and/or the frequency domain resource to which multiple antenna ports of the SRS resource are mapped.

In some embodiments, the terminal may determine, based on the first information, the time domain resource and/or the frequency domain resource to which multiple antenna ports of the SRS resource are mapped. The network device may also adopt the same way to determine, based on the first information, the time domain resource and/or the frequency domain resource to which multiple antenna ports of the SRS resource are mapped, and receive the SRS corresponding to the SRS resource sent from the terminal on the corresponding time domain resource and/or the frequency domain resource.

In some embodiments, the network device may first determine the time domain resource and/or the frequency domain resource to which multiple antenna ports of the SRS resource are mapped, and then determine the second information based on the time domain resource and/or the frequency domain resource to which multiple antenna ports of the SRS resource are mapped, where the second information may be used to indicate at least one item of the first information. The network device then sends the second information to the terminal, and the terminal may obtain one or more items of the first information based on the received second information, to determine, based on the first information, the time domain resource and/or the frequency domain resource to which multiple antenna ports of the SRS resource are mapped.

The first information may include one or more of the following.

(1) A number of antenna ports of the SRS resource. That is, the number of antenna ports included in the SRS resource. To facilitate description, in this embodiment, $N_{ap}$ is used to represent the number of antenna ports included in the SRS resource.

For example, a number of OFDM symbols occupied by the SRS resource within a single slot is 4, the SRS resource includes 8 antenna ports, and the terminal may map each antenna port to 2 OFDM symbols within one slot. Correspondingly, the network device may adopt the same way to determine that the terminal maps each antenna port to 2 OFDM symbols within one slot.

In some embodiments, in case that the number of antenna ports of the SRS resource is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of antenna ports of the SRS resource is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource). For example, for an SRS resource including 8 antenna ports, in case that the SRS resource is configured with 4 OFDM symbols, each of its antenna ports is mapped to 2 OFDM symbols; and for an SRS resource including 4 antenna ports, each of its antenna ports is mapped to all OFDM symbols configured for the SRS resource.

In some embodiments, a number of time units to which at least one antenna port in the SRS resource is mapped is a function of the number of antenna ports of the SRS resource.

For example, a number of OFDM symbols configured by the network device for the SRS resource is $N_s$, the SRS resource includes $N_{ap}$ antenna ports, and the terminal may map each antenna port to $\frac{CN_s}{N_{ap}}$ OFDM symbols within one slot, where $C$ is a positive integer and may be a given value or a value indicated to the terminal by the network device. For example, $C$ is 1, 2, 4, etc. Correspondingly, the network device may also adopt the same way to determine that the terminal maps each antenna port of the SRS resource to $\frac{CN_s}{N_{ap}}$ OFDM symbols within one slot.

(2) A number of second time units occupied by the SRS resource within a single first time unit.

In each embodiment of the present application, the first time unit may be a radio frame, a subframe, a slot, a mini-slot or other time unit, and the second time unit may be a radio frame, a subframe, a slot, a mini-slot, an OFDM symbol or other time unit, which is not limited here. The second time unit is a more subdivided time unit within the first time unit. Concepts of the first time unit and the second time unit remain consistent throughout the description and are not repeated later.

In some embodiments, the first time unit is a slot, and the second time unit may be an OFDM symbol in the slot. In this case, the number of second time units occupied by the SRS resource within a single first time unit may be the number of OFDM symbols occupied by the SRS resource within a single slot. The number of OFDM symbols occupied by the SRS resource within a single slot may also be represented by $N_s$, which may be a number of OFDM symbols configured by the network device for the SRS resource.

For example, the number of OFDM symbols occupied by the SRS resource within a single slot is 4, the SRS resource includes 4 antenna ports, and the terminal may map each antenna port to 2 OFDM symbols within one slot. Correspondingly, the network device may adopt the same way to determine that the terminal maps each antenna port to 2 OFDM symbols within one slot.

In some embodiments, in case that the number of second time units occupied by the SRS resource within a single first time unit is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of second time units occupied by the SRS resource within a single first time unit is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource). For example, for an SRS resource including 8 antenna ports, in case that the SRS resource is configured with 4 OFDM symbols, each of its antenna ports is mapped to 2 OFDM symbols; and in case that the SRS resource is configured with 2 OFDM symbols, each of its antenna ports is mapped to all OFDM symbols configured for the SRS resource.

In some embodiments, a number of time units to which at least one antenna port in the SRS resource is mapped is a function of the number of second time units occupied by the SRS resource within a single first time unit.

For example, a number of OFDM symbols configured by the network device for the SRS resource is $N_s$, and the terminal may map each antenna port to $rN_s$ OFDM symbols within one slot, where $r$ is a non-zero coefficient, which may be a given value, or indicated to the terminal by the network device. For example, $r$ is 1, 0.5, etc. Correspondingly, the network device may adopt the same way to determine that the terminal maps each antenna port to $rN_s$ OFDM symbols within one slot.

For another example, a number of OFDM symbols configured by the network device for the SRS resource is $N_s$, the SRS resource includes $N_{ap}$ antenna ports, and the terminal may map each antenna port to $\frac{CN_s}{N_{ap}}$ OFDM symbols within one slot, where $C$ is a positive integer and may be a given value or a value indicated to the terminal by the network device. For example, $C$ is 1, 2, 4, etc. Correspondingly, the network device may also adopt the same way to determine that the terminal maps each antenna port of the SRS resource to $\frac{CN_s}{N_{ap}}$ OFDM symbols within one slot.

(3) A repetition factor (or a number of repetitions) of the SRS resource. To facilitate description, in this embodiment, R is used to represent the repetition factor of the SRS resource.

In some embodiments, the repetition factor of the SRS resource is R, and each antenna port of the SRS is repeatedly transmitted for R times on the same frequency domain resource within one slot. That is, each antenna port of the SRS is mapped to the same frequency domain resource on R OFDM symbols within one slot.

In some embodiments, in case that the SRS performs frequency hopping transmission, the repetition factor of the SRS resource may be a number of OFDM symbols occupied by each hop of each antenna port of the SRS resource.

In some embodiments, in case that the network device configures a parameter for indicating the repetition factor of the SRS resource, the repetition factor of the SRS resource may be determined based on the parameter configured by the network device; and in case that the network device does not configure any parameter for indicating the repetition factor of the SRS resource, the repetition factor of the SRS resource may be equal to the number of OFDM symbols configured by the network device for the SRS resource.

For example, in case that the SRS resource includes 4 antenna ports, the SRS resource is not configured for frequency hopping transmission, and the SRS resource is configured with 4 OFDM symbols, it may be determined that the repetition factor of the SRS resource is 4, that is, the SRS resource will be mapped to the same frequency domain resource for transmission on these 4 OFDM symbols.

In some embodiments, in case that the repetition factor of the SRS resource is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the repetition factor of the SRS resource is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the repetition factor of the SRS resource.

(4) A number of SRS antenna ports mapped on a single third time unit, or a number of SRS antenna ports respectively mapped on multiple third time units.

In each embodiment of the present application, the third time unit may be a radio frame, a subframe, a slot, a mini-slot, an OFDM symbol or other time unit, which is not limited here. The third time unit is not necessarily associated with the first time unit and the second time unit. The third time unit may be the same as any of the first time unit or the second time unit, or may be different from both the first time unit and the second time unit. A concept of the third time unit remains consistent throughout the description and is not repeated later.

For example, the first time unit is a slot, the second time unit is an OFDM symbol within the slot, and the third time unit may be a slot; or, the first time unit is a slot, the second time unit is an OFDM symbol within the slot, and the third time unit may be an OFDM symbol; or, the first time unit is a slot, the second time unit is an OFDM symbol within the slot, and the third time unit may be other time units other than the slot and OFDM symbol, and so on.

In some embodiments, the number of SRS antenna ports mapped on a single third time unit may refer to a number of antenna ports of all SRS resources mapped on a single OFDM symbol. The number of SRS antenna ports respectively mapped on multiple third time units may refer to a number of antenna ports of all SRS resources respectively mapped on multiple OFDM symbols. Numbers of antenna ports of all SRS resources mapped on respective OFDM symbols may be the same or different.

In some embodiments, the number of SRS antenna ports mapped on a single third time unit may refer to a number of antenna ports of a single SRS resource mapped on a single OFDM symbol. The number of antenna ports of the single SRS resource respectively mapped on multiple third time units may refer to a number of antenna ports of a certain SRS resource mapped on multiple OFDM symbols respectively. Numbers of antenna ports of a single SRS resource mapped on respective OFDM symbols may be the same or different.

For example, the number of OFDM symbols configured by the network device for the SRS resource is 4, the SRS resource includes 8 antenna ports, and the number of antenna ports of a single SRS resource mapped on a single OFDM symbol is equal to 4. The terminal may map first 4 antenna ports on first 2 OFDM symbols, and may map last 4 antenna ports on last 2 OFDM symbols. Correspondingly, the network device may adopt the same way to determine the mapping situation of the SRS resource.

For example, the number of OFDM symbols configured by the network device for the SRS resource is 4, and there are two SRS resources that need to be mapped. The numbers of antenna ports of these two SRS resources are 2 and 4, and the number of antenna ports of all SRS resources mapped on a single OFDM symbol is equal to 3. The terminal may map the first antenna port of the SRS resource with an antenna port number of 2, and the first antenna port and the second antenna port of the SRS resource with an antenna port number of 4 on the first two OFDM symbols; and may map the second antenna port of the SRS resource with an antenna port number of 2, and the third antenna port and the fourth antenna port of the SRS resource with an antenna port number of 4 on the last two OFDM symbols. Correspondingly, the network device may adopt the same way to determine the mapping situation of the SRS resource.

In some embodiments, in case that the number of SRS antenna ports mapped on a single third time unit, or the number of SRS antenna ports respectively mapped on multiple third time units is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of SRS antenna ports mapped on a single third time unit, or the number of SRS antenna ports respectively mapped on multiple third time units is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of SRS antenna ports mapped on a single third time unit, or the number of SRS antenna ports respectively mapped on multiple third time units.

(5) A number of antenna ports of the SRS resource mapped on a single third time unit, or a number of antenna ports of the SRS resource respectively mapped on multiple third time units.

In some embodiments, the number of antenna ports of the SRS resource mapped on a single third time unit may refer to a number of antenna ports of the SRS resource mapped on a single OFDM symbol. The number of antenna ports of the SRS resource respectively mapped on multiple third time units may refer to a number of antenna ports of the SRS resource respectively mapped on multiple OFDM symbols. Numbers of antenna ports of the SRS resource mapped on respective OFDM symbols may be the same or different.

For example, the number of OFDM symbols configured by the network device for a certain SRS resource is 8, and the SRS resource includes 4 antenna ports. The number of antenna ports of the SRS resource mapped on a single OFDM symbol is equal to 1. The terminal may map the first antenna port of the SRS resource on the first OFDM symbol and the second OFDM symbol, map the second antenna port of the SRS resource on the third OFDM symbol and the fourth OFDM symbol, map the third antenna port of the SRS resource on the fifth OFDM symbol and the sixth OFDM symbol, and map the fourth antenna port of the SRS resource on the seventh OFDM symbol and the eighth OFDM symbol. Correspondingly, the network device may adopt the same way to determine the mapping situation of the SRS resource.

For example, the number of OFDM symbols configured by the network device for a certain SRS resource is 4, and the SRS resource includes 12 antenna ports. The number of antenna ports of the SRS resource mapped on the first OFDM symbol and the second OFDM symbol is equal to 2, and the number of antenna ports of the SRS resource mapped on the third OFDM symbol and the fourth OFDM symbol is equal to 4. The terminal may map the first antenna port and the second antenna port of the SRS resource on the first OFDM symbol, map the third antenna port and the fourth antenna port on the second OFDM symbol, map the fifth antenna port to the eighth antenna port on the third OFDM symbol, and map the ninth antenna port to the twelfth antenna port on the fourth OFDM symbol. Correspondingly, the network device may adopt the same way to determine the mapping situation of the SRS resource.

In some embodiments, in case that the number of antenna ports of the SRS resource mapped on a single third time unit, or the number of antenna ports of the SRS resource respectively mapped on multiple third time units is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of antenna ports of the SRS resource mapped on a single third time unit, or the number of antenna ports of the SRS resource respectively mapped on multiple third time units is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of antenna ports of the SRS resource mapped on a single third time unit, or the number of antenna ports of the SRS resource respectively mapped on multiple third time units.

(6) A number of second time units to which a single antenna port of the SRS resource is mapped within a single first time unit, or a number of second time units to which multiple antenna ports of the SRS resource are respectively mapped within a single first time unit.

In some embodiments, the number of second time units to which a single antenna port of the SRS resource is mapped within a single first time unit may refer to a number of OFDM symbols to which a single antenna port of the SRS resource is mapped within a single slot. The number of second time units to which multiple antenna ports of the SRS resource are respectively mapped within a single first time unit may refer to a number of OFDM symbols to which multiple antenna ports of the SRS resource are respectively mapped within a single slot. Numbers of OFDM symbols to which respective antenna ports of an SRS resource are mapped within a single slot may be the same or different.

For example, the number of OFDM symbols configured by the network device for the SRS resources is 4, the SRS resource includes 8 antenna ports, and the number of OFDM symbols to which a single antenna port of the SRS resource is mapped within a single slot is equal to 2. The terminal may map the first antenna port to the fourth antenna port to the first 2 OFDM symbols within one slot, and map the fifth antenna port to the eighth antenna port to the last 2 OFDM symbols within one slot. Correspondingly, the network device may adopt the same way to determine the mapping situation of the SRS resource.

For example, the network device configures 8 OFDM symbols for the SRS resource, and the SRS resource includes 8 antenna ports. The numbers of OFDM symbols to which these 8 antenna ports are respectively mapped within a single slot are 2, 2, 2, 2, 4, 4, 4, and 4. The terminal may map both the first antenna port and the second antenna port to the first OFDM symbol and the second OFDM symbol within a single slot, map both the third antenna port and the fourth antenna port to the third OFDM symbol and the fourth OFDM symbol within a single slot, and map the fifth antenna port to the eighth antenna port to the fifth OFDM symbol to the eighth OFDM symbol within a single slot. Correspondingly, the network device may adopt the same way to determine the mapping situation of the SRS resource.

In some embodiments, in case that the number of second time units to which a single antenna port of the SRS resource is mapped within a single first time unit, or the number of second time units to which multiple antenna ports of the SRS resource are respectively mapped within a single first time unit is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of second time units to which a single antenna port of the SRS resource is mapped within a single first time unit, or the number of second time units to which multiple antenna ports of the SRS resource are respectively mapped within a single first time unit is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of second time units to which a single antenna port of the SRS resource is mapped within a single first time unit, or a function of the number of second time units to which multiple antenna ports of the SRS resource are respectively mapped within a single first time unit.

(7) A number of antenna port groups included in the SRS resource.

In some embodiments, the antenna ports of the SRS resource may be grouped based on the time domain resource and/or the frequency domain resource to which the antenna ports of the SRS resource are mapped. Antenna ports mapped to the same time domain resource and/or frequency domain resource may be determined to belong to the same number of antenna port groups, and antenna ports mapped to different time domain resources and/or frequency domain resources may be considered to belong to different numbers of antenna port groups.

For example, antenna ports mapped to the same OFDM symbol may be determined to belong to the same number of antenna port groups, and antenna ports mapped to different OFDM symbols may be determined to belong to different numbers of antenna port groups.

For example, the number of OFDM symbols configured by the network device for the SRS resource is 4, and the SRS resource includes 8 antenna ports, which are correspondingly divided into 2 antenna port groups. The terminal may map the first antenna port to the fourth antenna port to the first 2 OFDM symbols within one slot, and map the fifth antenna port to the eighth antenna port to the last 2 OFDM symbols within one slot.

In some embodiments, in case that the number of antenna port groups included in the SRS resource is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of antenna port groups included in the SRS resource is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of antenna port groups included in the SRS resource.

(8) A number of third time unit groups to which all antenna ports of the SRS resource are mapped.

In some embodiments, one or more third time units (such as OFDM symbols) mapped to the same antenna port may be determined to belong to the same third time unit group, and third time units mapped to different antenna ports may be determined to belong to different third time unit groups.

Taking the third time unit as an OFDM symbol as an example, it is assumed that there are 4 antenna ports, where the first antenna port and the second antenna port are mapped to 2 OFDM symbols, and the third antenna port and the fourth antenna port are mapped to another 2 OFDM symbols. The 2 OFDM symbols to which the first antenna port and the second antenna port are mapped may be determined as an OFDM symbol group, and the 2 OFDM symbols to which the third antenna port and the fourth antenna port are mapped may be determined as another OFDM symbol group. A number of OFDM groups to which all antenna ports of the SRS resource are mapped is equal to 2.

For example, the number of OFDM symbols configured by the network device for the SRS resource is 4, the number of OFDM groups to which all antenna ports of the SRS resource are mapped is equal to 2, and the SRS resource includes 8 antenna ports. The terminal may map the first antenna port to the fourth antenna port to the first 2 OFDM symbols within one slot, and map the fifth antenna port to the eighth antenna port to the last 2 OFDM symbols within one slot. Correspondingly, the network device may adopt the same way to determine the mapping situation of the SRS resource.

In some embodiments, in the third time units mapped with the same antenna port, third time units having the same order are the same group, third time units having different orders are different groups, and OFDM symbols mapped with different antenna ports are different groups. In some embodiments, the order is an order obtained by sorting the third time units in an order of time, or an order obtained by sorting the third time units in an order of sequence numbers.

In some embodiments, in case that the number of third time unit groups to which all antenna ports of the SRS resource are mapped is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of third time unit groups to which all antenna ports of the SRS resource are mapped is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of third time unit groups to which all antenna ports of the SRS resource are mapped.

(9) A minimum number of third time units required for all antenna ports of the SRS resource being mapped once.

In some embodiments, in case that multiple antenna ports of the SRS resource are mapped once, the multiple antenna ports may be mapped to the same OFDM symbol or to different OFDM symbols. A minimum number of OFDM symbols required for each antenna port being mapped once is one. The minimum number of third time units required for all antenna ports of the SRS resource being mapped once may refer to a minimum number of OFDM symbols required for all antenna ports of the SRS resource being mapped once.

For one SRS resource, there are many ways to map all antenna ports of the SRS resource once. Among various ways, a number of OFDM symbols occupied when all antenna ports that may be mapped to the same OFDM symbol are mapped to the same OFDM symbol is a minimum number of OFDM symbols required for each antenna port of the SRS resource being mapped once.

For example, one SRS resource including 8 antenna ports is taken as an example, where a number of OFDM symbols occupied by the SRS resource within a single slot is 8. In case that the first antenna port and the second antenna port of the SRS resource are mapped to the first OFDM symbol and the second OFDM symbol, the third antenna port and the fourth antenna port of the SRS resource are mapped to the third OFDM symbol and the fourth OFDM symbol, the fifth antenna port and the sixth antenna port of the SRS resource are mapped to the fifth OFDM symbol and the sixth OFDM symbol, and the seventh antenna port and the eighth antenna port of the SRS resource are mapped to the seventh OFDM symbol and the eighth OFDM symbol. In case that all antenna ports of the SRS resource are mapped once, there are many ways. For example, the first antenna port may be mapped to the first OFDM symbol, the second antenna port may be mapped to the second OFDM symbol, the third antenna port and the fourth antenna port may be mapped to the third OFDM symbol, the fifth antenna port and the sixth antenna port may be mapped to the fifth OFDM symbol, and the seventh antenna port and the eighth antenna port may be mapped to the eighth OFDM symbol; or, the first antenna port and the second antenna port may be mapped to the second OFDM symbol, the third antenna port and the fourth antenna port may be mapped to the third OFDM symbol, the fifth antenna port and the sixth antenna port may be mapped to the fifth OFDM symbol, the seventh antenna port and the eighth antenna port may be mapped to the eighth OFDM symbol, and so on. In various ways, the minimum number of OFDM symbols required for each antenna port of the SRS resource being mapped once is the number of OFDM symbols occupied when the first antenna port and the second antenna port are mapped to the same OFDM symbol, the third antenna port and the fourth antenna port are mapped to the same OFDM symbol, the fifth antenna port and the sixth antenna port are mapped to the same OFDM symbol, and the seventh antenna port and the eighth antenna port are mapped to the same OFDM symbol, that is, the minimum number of OFDM symbols required for each antenna port of the SRS resource being mapped once is 4.

In some embodiments, in case that the minimum number of third time units required for all antenna ports of the SRS resource being mapped once is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the minimum number of third time units required for all antenna ports of the SRS resource being mapped once is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the minimum number of third time units required for all antenna ports of the SRS resource being mapped once.

(10) A number of third time units to which all antenna ports of the SRS resource are mapped in case that one repetition is performed on the all antenna ports.

In some embodiments, the number of third time units to which all antenna ports of the SRS resource are mapped in case that one repetition is performed on the all antenna ports may refer to a number of OFDM symbols to which all antenna ports of the SRS resource are mapped in case that one repetition is performed on the all antenna ports.

The number of OFDM symbols to which all antenna ports of the SRS resource are mapped in case that one repetition is performed on the all antenna ports may also be interpreted as a number of OFDM symbols for one repetition of the SRS resource. For example, in case that R=1 (i.e., non-repetition transmission), the number of OFDM symbols to which all antenna ports of the SRS resource are mapped in case that one repetition is performed on the all antenna ports is equal to the number of OFDM symbols configured by the network device for the SRS resource (i.e., the number of OFDM symbols occupied by the SRS resource within one slot).

In some embodiments, in case that the number of third time units to which all antenna ports of the SRS resource are mapped in case that one repetition is performed on the all antenna ports is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of third time units to which all antenna ports of the SRS resource are mapped in case that one repetition is performed on the all antenna ports is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of third time units to which all antenna ports of the SRS resource are mapped in case that one repetition is performed on the all antenna ports.

(11) A number of frequency hops of a single antenna port of the SRS resource within a single third time unit, or a number of frequency hops of multiple antenna ports of the SRS resource within a single third time unit respectively.

In some embodiments, in case that the SRS performs intra-slot frequency hopping transmission, the number of frequency hops of a single antenna port of the SRS resource within a single third time unit may refer to a number of frequency hops of a single antenna port of the SRS resource within a single slot; and the number of frequency hops of multiple antenna ports of the SRS resource within a single third time unit respectively may refer to a number of frequency hops of multiple antenna ports of the SRS resource within a single slot respectively. Numbers of frequency hops of each antenna port of the SRS resource within a single slot may be the same or different.

In some embodiments, the number of frequency hops of any antenna port of the SRS resource is a number of frequency domain resource groups to which the antenna port is mapped.

For example, the number of OFDM symbols configured by the network device for the SRS resource is 4, the SRS resource includes 8 antenna ports, and the number of frequency hops of a single antenna port of the SRS resource within a single slot is equal to 2. The terminal may map each antenna port to 2 different frequency domain resource groups (i.e., different PRB sets or different subcarrier sets) within one slot. Correspondingly, the network device may adopt the same way to determine that the terminal maps each antenna port to 2 different frequency domain resource groups within one slot.

In some embodiments, the number of frequency hops of each antenna port of the SRS resource within a single third time unit is the same.

In some embodiments, the network device configures numbers of frequency hops for multiple antenna ports of the SRS resource within a single third time unit respectively. For example, the SRS resource includes 8 antenna ports, and numbers of frequency hops of the 8 antenna ports within a single slot are 2, 1, 1, 2, 2, 2, 2, 1 respectively. For another example, the network device groups the multiple antenna ports of the SRS resource to indicate numbers of frequency hops. For example, the SRS resource includes 8 antenna ports, where 2 antenna ports are taken as one group, the network device indicates numbers of frequency hops for four groups of antenna ports respectively.

In some embodiments, in case that the number of frequency hops of a single antenna port of the SRS resource within a single third time unit, or the number of frequency hops of multiple antenna ports of the SRS resource within a single third time unit respectively is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of frequency hops of a single antenna port of the SRS resource within a single third time unit, or the number of frequency hops of multiple antenna ports of the SRS resource within a single third time unit respectively is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of frequency hops of a single antenna port of the SRS resource within a single third time unit, or the number of frequency hops of multiple antenna ports of the SRS resource within a single third time unit respectively.

(12) A number of frequency hops included in a single frequency hopping period of the SRS resource.

For example, the number of OFDM symbols configured by the network device for the SRS resource is 4, the SRS resource includes 8 antenna ports, and the number of frequency hops included in a single frequency hopping period of the SRS resource is equal to 2. The terminal may map each antenna port to 2 different frequency domain resource groups (i.e., different PRB sets, or different subcarrier sets) within one frequency hopping period. Correspondingly, the network device may adopt the same way to determine that the terminal maps each antenna port to 2 different frequency domain resource groups within one frequency hopping period.

In some embodiments, in case that the number of frequency hops included in a single frequency hopping period of the SRS resource is a first value (which may be agreed by a protocol or indicated by a network side, and is not specifically limited), the antenna ports of the SRS resource are mapped to the time domain resource configured for the SRS resource in a first way (for example, each antenna port does not need to be mapped to all OFDM symbols configured for the SRS resource); and in case that the number of frequency hops included in a single frequency hopping period of the SRS resource is a second value (a value other than the first value, which may be agreed by a protocol or indicated by the network side, and is not specifically limited), the antenna ports of the SRS resource are mapped to the time domain resource configured for the SRS resource in a second way (for example, each antenna port is mapped to all OFDM symbols configured for the SRS resource).

In some embodiments, a number of time units to which at least one antenna port in the SRS resource is mapped is a function of the number of frequency hops included in a single frequency hopping period of the SRS resource.

(13) A second time unit to which one or more antenna ports of the SRS resource are mapped within a single first time unit.

In some embodiments, the second time unit to which one or more antenna ports of the SRS resource are mapped within a single first time unit may further refer to an OFDM symbol to which one or more antenna ports of the SRS resource are mapped within a single slot. The OFDM symbols to which each antenna port is mapped within a single slot may be the same or different. This information may be directly indicated by the network device.

For example, the SRS resource includes 4 antenna ports. The network device directly indicates that antenna port 0# and antenna port 1# are mapped to OFDM symbol 10# and OFDM symbol 11#, and antenna port 2# and antenna port 3# are mapped to OFDM symbol 12# and OFDM symbol 13#. The terminal may directly map these 4 antenna ports to the corresponding OFDM symbols based on an indication of the network device. Correspondingly, the network device may adopt the same way to determine that the terminal maps these 4 antenna ports to the corresponding OFDM symbols.

The method for SRS transmission provided by the embodiments of the present application may be applied to various communication systems, which includes but is not limited to a 5G system (such as an NR system), future network system (such as 6G) or other OFDM systems (such as a DFT-S-OFDM system), etc.

The port in the embodiments of the present application, that is, the antenna port, refers to an antenna port of the SRS, and may also be called an SRS port, an SRS antenna port, etc.

The SRS resource in the embodiments of the present application may be a periodic SRS resource, a semi-persistent SRS resource, an aperiodic SRS resource, etc.

In the method for SRS transmission provided by the embodiment of the present application, the network device may receive, based on the time domain resource and/or the frequency domain resource to which multiple antenna ports of the SRS resource are mapped, the SRS corresponding to the SRS resource sent from the terminal, where at least two antenna ports among the multiple antenna ports of the SRS resource are mapped to different time units. In case that the SRS resource includes too many antenna ports, the multiple antenna ports of the SRS resource may be mapped to different time domain resources, which improves reception performance of the network device.

In some embodiments, a number of second time units to which each antenna port of the SRS resource is mapped within a single first time unit is the same.

In some embodiments, in case of determining the time domain resource and/or the frequency domain resource to which multiple antenna ports of the SRS resource are mapped, the network device may determine that the terminal maps each antenna port of the SRS resource to the same number of second time units within a single first time unit.

In some embodiments, each antenna port of the SRS resource may be mapped to the same number of OFDM symbols within a single slot.

In some embodiments, the number of second time units to which each antenna port of the SRS resource is mapped within a single first time unit is a first value, and the first value may be any of the following.

(1) A value determined based on the number of second time units occupied by the SRS resource within a single first time unit and the number of antenna port groups included in the SRS resource.

In some embodiments, the first value may be determined based on a ratio of the number of second time units occupied by the SRS resource within a single first time unit to the number of antenna port groups included in the SRS resource, where the number of second time units occupied by the SRS resource within a single first time unit is an integer multiple of the number of antenna port groups included in the SRS resource.

For example, the first value may be calculated as:

$$X = \frac{N_s}{M},$$

where $X$ is the first value, $N_s$ is the number of second time units occupied by the SRS resource within a single first time unit, $M$ is the number of antenna port groups included in the SRS resource, and $N_s$ may be divisible by $M$.

(2) A value determined based on the number of second time units occupied by the SRS resource within a single first time unit and the number of third time unit groups to which all antenna ports of the SRS resource are mapped.

In some embodiments, the first value may be determined based on a ratio of the number of second time units occupied by the SRS resource within a single first time unit to the number of third time unit groups to which all antenna ports of the SRS resource are mapped, where the number of second time units occupied by the SRS resource within a single first time unit is an integer multiple of the number of third time unit groups to which all antenna ports of the SRS resource are mapped.

For example, the first value may be calculated as:

$$X = \frac{N_s}{M},$$

where $X$ is the first value, $N_s$ is the number of second time units occupied by the SRS resource within a single first time unit, $M$ is the number of third time unit groups to which all antenna ports of the SRS resource are mapped, and $N_s$ may be divisible by $M$.

(3) A value determined based on the number of second time units occupied by the SRS resource within a single first time unit and the minimum number of third time units required for all antenna ports of the SRS resource being mapped once.

In some embodiments, the first value may be determined based on a ratio of the number of second time units occupied by the SRS resource within a single first time unit to the minimum number of third time units required for all antenna ports of the SRS resource being mapped once, where the number of second time units occupied by the SRS resource within a single first time unit is an integer multiple of the minimum number of third time units required for all antenna ports of the SRS resource being mapped once.

For example, the first value may be calculated as:

$$X = \frac{N_s}{M},$$

where $X$ is the first value, $N_s$ is the number of second time units occupied by the SRS resource within a single first time unit, $M$ is the minimum number of third time units required for all antenna ports of the SRS resource being mapped once, and $N_s$ may be divisible by $M$.

(4) A value determined based on the number of second time units occupied by the SRS resource within a single first time unit and the number of third time units to which all antenna ports of the SRS resource are mapped in case that one repetition is performed on the all antenna ports.

In some embodiments, the first value may be determined based on the number of second time units occupied by the SRS resource within a single first time unit and the number of third time units to which all antenna ports of the SRS resource are mapped in case that one repetition is performed on the all antenna ports, where the number of second time units occupied by the SRS resource within a single first time unit is an integer multiple of the number of third time units to which all antenna ports of the SRS resource are mapped in case that one repetition is performed on the all antenna ports.

For example, the first value may be calculated as:

$$X = \frac{N_s}{M},$$

where $X$ is the first value, $N_s$ is the number of second time units occupied by the SRS resource within a single first time unit, $M$ is the number of third time units to which all antenna ports of the SRS resource are mapped in case that one repetition is performed on the all antenna ports, and $N_s$ may be divisible by $M$.

(5) A value determined based on the number of second time units occupied by the SRS resource within a single first time unit and a value agreed by a protocol.

In some embodiments, the first value may be determined based on a ratio of the number of second time units occupied by the SRS resource within a single first time unit to the value agreed by the protocol, where the number of second time units occupied by the SRS resource within a single first time unit is an integer multiple of the value agreed by the protocol.

For example, the first value may be calculated as:

$$X = \frac{N_s}{M},$$

where $X$ is the first value, $N_s$ is the number of second time units occupied by the SRS resource within a single first time unit, $M$ is the value agreed by the protocol, and $N_s$ may be divisible by $M$.

(6) The number of second time units to which a single antenna port of the SRS resource is mapped within a single first time unit.

In some embodiments, the number of second time units to which a single antenna port of the SRS resource is mapped within a single first time unit may be directly used as the first value. That is:

$$X = N_s^{ap},$$

where $X$ is the first value, and $N_s^{ap}$ is the number of second time units to which a single antenna port of the SRS resource is mapped within a single first time unit.

(7) A value determined based on the number of second time units to which multiple antenna ports of the SRS resource are respectively mapped within a single first time unit.

In some embodiments, a maximum value or a minimum value of the number of second time units to which multiple antenna ports of the SRS resource are respectively mapped within a single first time unit may be used as the first value. That is:

$$X = N_s^{ap},$$

where $X$ is the first value, and $N_s^{ap}$ is the maximum value or the minimum value of the number of second time units to which multiple antenna ports of the SRS resource are respectively mapped within a single first time unit.

(8) A value agreed by a protocol.

In some embodiments, the protocol may directly agree the value of the first value.

(9) A value determined based on the number of SRS antenna ports mapped on a single third time unit, the number of second time units occupied by the SRS resource within a single first time unit, and the number of antenna ports of the SRS resource.

In some embodiments, the first value may be determined by dividing a first product of the number of SRS antenna ports mapped on a single third time unit and the number of second time units occupied by the SRS resource within a single first time unit by the number of antenna ports of the SRS resource, where the first product is an integer multiple of the number of antenna ports of the SRS resource.

For example, the first value may be calculated as:

$$X = \frac{N_{ap}^S * N_s}{N_{ap}},$$

where $X$ is the first value, $N_{ap}^S$ is the number of SRS antenna ports mapped on a single third time unit, $N_s$ is the

number of second time units occupied by the SRS resource within a single first time unit, $N_{ap}$ is the number of antenna ports of the SRS resource, and $N_{ap}^s * N_s$ may be divisible by $N_{ap}$.

(10) A value determined based on the number of SRS antenna ports respectively mapped on multiple third time units, the number of second time units occupied by the SRS resource within a single first time unit, and the number of antenna ports of the SRS resource.

In some embodiments, the first value may be determined by dividing a second product of a maximum value or a minimum value of the number of SRS antenna ports respectively mapped on multiple third time units and the number of second time units occupied by the SRS resource within a single first time unit by the number of antenna ports of the SRS resource, where the second product is an integer multiple of the number of antenna ports of the SRS resource.

For example, the first value may be calculated as:

$$X = \frac{N_{ap}^S * N_s}{N_{ap}},$$

where $X$ is the first value, $N_{ap}^S$ is the maximum value or the minimum value of the number of SRS antenna ports respectively mapped on multiple third time units, $N_s$ is the number of second time units occupied by the SRS resource within a single first time unit, $N_{ap}$ is the number of antenna ports of the SRS resource, and $N_{ap}^S * N_s$ may be divisible by $N_{ap}$.

(11) A value determined based on the number of antenna ports of the SRS resource mapped on a single third time unit, the number of second time units occupied by the SRS resource within a single first time unit, and the number of antenna ports of the SRS resource.

In some embodiments, the first value may be determined by dividing a third product of the number of antenna ports of the SRS resource mapped on a single third time unit and the number of second time units occupied by the SRS resource within a single first time unit by the number of antenna ports of the SRS resource, where the third product is an integer multiple of the number of antenna ports of the SRS resource.

For example, the first value may be calculated as:

$$X = \frac{N_{ap}^S * N_s}{N_{ap}},$$

where $X$ is the first value, $N_{ap}^S$ is the number of antenna ports of the SRS resource mapped on a single third time unit, $N_s$ is the number of second time units occupied by the SRS resource within a single first time unit, $N_{ap}$ is the number of antenna ports of the SRS resource, and

$N_{ap}^S * N_s$ may be divisible by $N_{ap}$.

(12) A value determined based on the number of antenna ports of the SRS resource respectively mapped on multiple third time units, the number of second time units occupied by the SRS resource within a single first time unit, and the number of antenna ports of the SRS resource.

In some embodiments, the first value may be determined by dividing a fourth product of a maximum value or a minimum value of the number of antenna ports of the SRS resource respectively mapped on multiple third time units and the number of second time units occupied by the SRS resource within a single first time unit by the number of antenna ports of the SRS resource, where the fourth product is an integer multiple of the number of antenna ports of the SRS resource.

For example, the first value may be calculated as:

$$X = \frac{N_{ap}^S * N_s}{N_{ap}},$$

where $X$ is the first value, $N_{ap}^S$ is the maximum value or the minimum value of the number of antenna ports of the SRS resource respectively mapped on multiple third time units, $N_s$ is the number of second time units occupied by the SRS resource within a single first time unit, $N_{ap}$ is the number of antenna ports of the SRS resource, and $N_{ap}^S * N_s$ may be divisible by $N_{ap}$.

(13) A value determined based on a value agreed by a protocol, the number of second time units occupied by the SRS resource within a single first time unit, and the number of antenna ports of the SRS resource.

In some embodiments, the first value may be determined by dividing a fifth product of the value agreed by the protocol and the number of second time units occupied by the SRS resource within a single first time unit by the number of antenna ports of the SRS resource, where the fifth product is an integer multiple of the number of antenna ports of the SRS resource.

For example, the first value may be calculated as:

$$X = \frac{N_{ap}^S * N_s}{N_{ap}},$$

where $X$ is the first value, $N_{ap}^S$ is the value agreed by the protocol, $N_s$ is the number of second time units occupied by the SRS resource within a single first time unit, $N_{ap}$ is the number of antenna ports of the SRS resource, and $N_{ap}^S * N_s$ may be divisible by $N_{ap}$.

(14) A value determined based on the repetition factor of the SRS resource and the number of frequency hops of a single antenna port of the SRS resource within a single third time unit.

In some embodiments, the first value may be determined based on a product of the repetition factor of the SRS resource and the number of frequency hops of a single antenna port of the SRS resource within a single third time unit.

For example, the first value may be calculated as:

$$X = R * N_{hop},$$

where $X$ is the first value, $R$ is the repetition factor of the SRS resource, and $N_{hop}$ is the number of frequency hops of a single antenna port of the SRS resource within a single third time unit.

(15) A value determined based on the repetition factor of the SRS resource and the number of frequency hops of multiple antenna ports of the SRS resource within a single third time unit respectively.

In some embodiments, the first value may be determined based on a product of the repetition factor of the SRS resource and a maximum value or a minimum value of the number of frequency hops of multiple antenna ports of the SRS resource within a single third time unit respectively.

For example, the first value may be calculated as:

$$X = R * N_{hop},$$

where $X$ is the first value, $R$ is the repetition factor of the SRS resource, and $N_{hop}$ is the maximum value or the minimum value of number of frequency hops of multiple antenna ports of the SRS resource within a single third time unit.

(16) A value determined based on the repetition factor of the SRS resource and the number of frequency hops included in a single frequency hopping period of the SRS resource.

In some embodiments, the first value may be determined based on a product of the repetition factor of the SRS resource and the number of frequency hops included in a single frequency hopping period of the SRS resource.

For example, the first value may be calculated as:

$$X = R * N_{hop},$$

where $X$ is the first value, $R$ is the repetition factor of the SRS resource, and $N_{hop}$ is the number of frequency hops included in a single frequency hopping period of the SRS resource.

(17) A value determined based on the repetition factor of the SRS resource and a value agreed by a protocol.

In some embodiments, the first value may be determined based on a product of the repetition factor of the SRS resource and the value agreed by the protocol.

For example, the first value may be calculated as:

$$X = R * N_{hop},$$

where $X$ is the first value, $R$ is the repetition factor of the SRS resource, and $N_{hop}$ is the value agreed by the protocol.

In some embodiments, at least two antenna ports of the SRS resource are mapped to different numbers of second time units within a single first time unit.

In some embodiments, in case of determining the time domain resource and/or the frequency domain resource to which multiple antenna ports of the SRS resource are mapped, the network device may determine that the terminal maps at least two antenna ports of the SRS resource to different numbers of second time units within a single first time unit.

In some embodiments, at least two antenna ports of the SRS resource may be mapped to different numbers of OFDM symbols within a single slot.

In some embodiments, the number of second time units to which a first part of antenna ports of the SRS resource are mapped within a single first time unit is a second value, and the second value may be any of the following.

(1) A value determined based on the number of second time units occupied by the SRS resource within a single first time unit and the number of antenna port groups included in the SRS resource.

In some embodiments, the second value may be determined based on a ratio of the number of second time units occupied by the SRS resource within a single first time unit to the number of antenna port groups included in the SRS resource.

For example, the second value may be calculated as:

$$Y = \left\lfloor \frac{N_S}{M} \right\rfloor,$$

where $Y$ is the second value, $N_s$ is the number of second time units occupied by the SRS resource within a single first time unit, $M$ is the number of antenna port groups included in the SRS resource, and $\lfloor ... \rfloor$ refers to round down.

(2) A value determined based on the number of second time units occupied by the SRS resource within a single first time unit and the number of third time unit groups to which all antenna ports of the SRS resource are mapped.

In some embodiments, the second value may be determined based on a ratio of the number of second time units occupied by the SRS resource within a single first time unit to the number of third time unit groups to which all antenna ports of the SRS resource are mapped.

For example, the second value may be calculated as:

$$Y = \left\lfloor \frac{N_S}{M} \right\rfloor,$$

where $Y$ is the second value, $N_s$ is the number of second time units occupied by the SRS resource within a single first time unit, $M$ is the number of third time unit groups to which all antenna ports of the SRS resource are mapped, and $\lfloor ... \rfloor$ refers to round down.

(3) A value determined based on the number of second time units occupied by the SRS resource within a single first time unit and the minimum number of third time units required for all antenna ports of the SRS resource being mapped once.

In some embodiments, the second value may be determined based on a ratio of the number of second time units occupied by the SRS resource within a single first time unit to the minimum number of third time units required for all antenna ports of the SRS resource being mapped once.

For example, the second value may be calculated as:

$$Y = \left\lfloor \frac{N_S}{M} \right\rfloor,$$

where $Y$ is the second value, $N_s$ is the number of second time units occupied by the SRS resource within a single first time unit, $M$ is the minimum number of third time units required for all antenna ports of the SRS resource being mapped once, and $\lfloor ... \rfloor$ refers to round down.

(4) A value determined based on the number of second time units occupied by the SRS resource within a single first time unit and the number of third time units to which all antenna ports of the SRS resource are mapped in case that one repetition is performed on the all antenna ports.

In some embodiments, the second value may be determined based on the number of second time units occupied by the SRS resource within a single first time unit and the number of third time units to which all antenna ports of the SRS resource are mapped in case that one repetition is performed on the all antenna ports.

For example, the second value may be calculated as:

$$Y = \left\lfloor \frac{N_S}{M} \right\rfloor,$$

where $Y$ is the second value, $N_s$ is the number of second time units occupied by the SRS resource within a single first time unit, $M$ is the number of third time units to which all antenna ports of the SRS resource are mapped in case that one repetition is performed on the all antenna ports, and $\lfloor ... \rfloor$ refers to round down.

(5) A value determined based on the number of second time units occupied by the SRS resource within a single first time unit and a value agreed by a protocol.

In some embodiments, the second value may be determined based on a ratio of the number of second time units occupied by the SRS resource within a single first time unit to the value agreed by the protocol.

For example, the second value may be calculated as:

$$Y = \left\lfloor \frac{N_s}{M} \right\rfloor,$$

where $Y$ is the second value, $N_s$ is the number of second time units occupied by the SRS resource within a single first time unit, $M$ is the value agreed by the protocol, and $\lfloor ... \rfloor$ refers to round down.

(6) A value determined based on the number of SRS antenna ports mapped on a single third time unit, the number of second time units occupied by the SRS resource within a single first time unit, and the number of antenna ports of the SRS resource.

In some embodiments, the second value may be determined by dividing a first product of the number of SRS antenna ports mapped on a single third time unit and the number of second time units occupied by the SRS resource within a single first time unit by the number of antenna ports of the SRS resource.

For example, the second value may be calculated as:

$$Y = \left\lfloor \frac{N_{ap}^S * N_s}{N_{ap}} \right\rfloor,$$

where $Y$ is the second value, $N_{ap}^S$ is the number of SRS antenna ports mapped on a single third time unit, $N_s$ is the number of second time units occupied by the SRS resource within a single first time unit, $N_{ap}$ is the number of antenna ports of the SRS resource, and $\lfloor ... \rfloor$ refers to round down.

(7) A value determined based on the number of SRS antenna ports respectively mapped on multiple third time units, the number of second time units occupied by the SRS resource within a single first time unit, and the number of antenna ports of the SRS resource.

In some embodiments, the second value may be determined by dividing a second product of a maximum value or a minimum value of the number of SRS antenna ports respectively mapped on multiple third time units and the number of second time units occupied by the SRS resource within a single first time unit by the number of antenna ports of the SRS resource.

For example, the second value may be calcu-

lated as:

$$Y = \left\lfloor \frac{N_{ap}^S * N_s}{N_{ap}} \right\rfloor,$$

where $Y$ is the second value, $N_{ap}^S$ is the maximum value or the minimum value of the number of SRS antenna ports respectively mapped on multiple third time units, $N_s$ is the number of second time units occupied by the SRS resource within a single first time unit, $N_{ap}$ is the number of antenna ports of the SRS resource, and $\lfloor ... \rfloor$ refers to round down.

(8) A value determined based on the number of antenna ports of the SRS resource mapped on a single third time unit, the number of second time units occupied by the SRS resource within a single first time unit, and the number of antenna ports of the SRS resource.

In some embodiments, the second value may be determined by dividing a third product of the number of antenna ports of the SRS resource mapped on a single third time unit and the number of second time units occupied by the SRS resource within a single first time unit by the number of antenna ports of the SRS resource.

For example, the second value may be calculated as:

$$Y = \left\lfloor \frac{N_{ap}^S * N_s}{N_{ap}} \right\rfloor,$$

where $Y$ is the second value, $N_{ap}^S$ is the number of antenna ports of the SRS resource mapped on a single third time unit, $N_s$ is the number of second time units occupied by the SRS resource within a single first time unit, $N_{ap}$ is the number of antenna ports of the SRS resource, and $\lfloor ... \rfloor$ refers to round down.

(9) A value determined based on the number of antenna ports of the SRS resource respectively mapped on multiple third time units, the number of second time units occupied by the SRS resource within a single first time unit, and the number of antenna ports of the SRS resource.

In some embodiments, the second value may be determined by dividing a fourth product of a maximum value or a minimum value of the number of antenna ports of the SRS resource respectively mapped on multiple third time units and the number of second time units occupied by the SRS resource within a single first time unit by the number of antenna ports of the SRS resource.

For example, the second value may be calculated as:

$$Y = \left\lfloor \frac{N_{ap}^S * N_s}{N_{ap}} \right\rfloor,$$

where $Y$ is the second value, $N_{ap}^S$ is the maximum value or the minimum value of the number of antenna ports of the SRS resource respectively mapped on multiple third time units, $N_s$ is the number of second time units occupied by the SRS resource within a single first time unit, $N_{ap}$ is the number of antenna ports of the SRS resource, and $\lfloor ... \rfloor$ refers to round down.

(10) A value determined based on a value agreed by a protocol, the number of second time units occupied by the SRS resource within a single first time unit, and the number of antenna ports of the SRS resource.

In some embodiments, the second value may be determined by dividing a fifth product of the value agreed by the protocol and the number of second time units occupied by the SRS resource within a single first time unit by the number of antenna ports of the SRS resource.

For example, the second value may be calculated as:

$$Y = \left\lfloor \frac{N_{ap}^S * N_s}{N_{ap}} \right\rfloor,$$

where $Y$ is the second value, $N_{ap}^S$ is the value agreed by the protocol, $N_s$ is the number of second time units occupied by the SRS resource within a single first time unit, $N_{ap}$ is the number of antenna ports of the SRS resource, and $\lfloor ... \rfloor$ refers to round down.

(11) A value determined based on the repetition factor of the SRS resource and the number of frequency hops of a single antenna port of the SRS resource within a single third time unit.

In some embodiments, the second value may be determined based on a product of the repetition factor of the SRS resource and the number of frequency hops of a single antenna port of the SRS resource within a single third time unit.

For example, the second value may be calculated as:

$$Y = R * N_{hop},$$

where $Y$ is the second value, $R$ is the repetition factor of the SRS resource, and $N_{hop}$ is the number of frequency hops of a single antenna port of the SRS resource within a single third time unit.

(12) A value determined based on the repetition factor of the SRS resource and the number of frequency hops of multiple antenna ports of the SRS resource within a single third time unit respectively.

In some embodiments, the second value may be determined based on a product of the repetition factor of the SRS resource and a maximum value or a minimum value of the number of frequency hops of multiple antenna ports of the SRS resource within a single third time unit respectively.

For example, the second value may be calculated as:

$$Y = R * N_{hop},$$

where $Y$ is the second value, $R$ is the repetition factor of the SRS resource, and $N_{hop}$ is the maximum value or the minimum value of the number of frequency hops of multiple antenna ports of the SRS resource within a single third time unit respectively.

(13) A value determined based on the repetition factor of the SRS resource and the number of frequency hops included in a single frequency hopping period of the SRS resource.

In some embodiments, the second value may be determined based on a product of the repetition factor of the SRS resource and the number of frequency hops included in a single frequency hopping period of the SRS resource.

For example, the second value may be calculated as:

$$Y = R * N_{hop},$$

where $Y$ is the second value, $R$ is the repetition factor of the SRS resource, and $N_{hop}$ is the number of frequency hops included in a single frequency hopping period of the SRS resource.

(14) A value determined based on the repetition factor of the SRS resource and a value agreed by a protocol.

In some embodiments, the second value may be determined based on a product of the repetition factor of the SRS resource and the value agreed by the protocol.

For example, the second value may be calculated as:

$$Y = R * N_{hop},$$

where $Y$ is the second value, $R$ is the repetition factor of the SRS resource, and $N_{hop}$ is the value agreed by the protocol.

In some embodiments, a number of second time units to which a second part of antenna ports of the SRS resource are mapped within a single first time unit is a third value, and the third value may be any of the following.

(1) A value determined based on the number of second time units occupied by the SRS resource within a single first time unit, the number of antenna port groups included in the SRS resource, and the second value.

In some embodiments, the third value may be determined by subtracting a product of a fourth value and the second value from the number of second time units occupied by the SRS resource within a single first time unit. The fourth value is the number of antenna port groups included in the SRS resource minus 1.

For example, the third value may be calculated as:

$$Z = N_s - (M - 1)Y,$$

where $Z$ is the third value, $N_s$ is the number of second time units occupied by the SRS resource within a single first time unit, $M$ is the number of antenna port groups included in the SRS resource, and $Y$ is the second value.

(2) A value determined based on the number of second time units occupied by the SRS resource within a single first time unit, the number of third time unit groups to which all antenna ports of the SRS resource are mapped, and the second value.

In some embodiments, the third value may be determined by subtracting a product of a fifth value and the second value from the number of second time units occupied by the SRS resource within a single first time unit. The fifth value is the number of third time unit groups to which all antenna ports of the SRS resource are mapped minus 1.

For example, the third value may be calculated as:

$$Z = N_s - (M - 1)Y,$$

where $Z$ is the third value, $N_s$ is the number of second time units occupied by the SRS resource within a single first time unit, $M$ is the number of third time unit groups to which all antenna ports of the SRS resource are mapped, and $Y$ is the second value.

(3) A value determined based on the number of second time units occupied by the SRS resource within a single first time unit, the minimum number of third time units required for all antenna ports of the SRS resource being mapped once, and the second value.

In some embodiments, the third value may be determined by subtracting a product of a sixth value and the second value from the number of second time units occupied by the SRS resource within a single first time unit. The sixth value is the minimum number of third time units required for all antenna ports of the SRS resource being mapped once minus 1.

For example, the third value may be calculated as:

$$Z = N_s - (M - 1)Y,$$

where $Z$ is the third value, $N_s$ is the number of second time units occupied by the SRS resource within a single first time unit, $M$ is the minimum number of third time units required for all antenna ports of the SRS resource being mapped once, and $Y$ is the second value.

(4) A value determined based on the number of second time units occupied by the SRS resource within a single first time unit, the number of third time units to which all antenna ports of the SRS resource are mapped in case that one repetition is performed on the all antenna ports, and the second value.

In some embodiments, the third value may be determined by subtracting a product of a seventh value and the second value from the number of second time units occupied by the SRS resource within a single first time unit. The seventh value is the number of third time units to which all antenna ports of the SRS resource are mapped in case that one repetition is performed on the all antenna ports minus 1.

For example, the third value may be calculated as:

$$Z = N_s - (M - 1)Y,$$

where $Z$ is the third value, $N_s$ is the number of second time units occupied by the SRS resource within a single first time unit, $M$ is the number of third time units to which all antenna ports of the SRS resource are mapped in case that one repetition is performed on the all antenna ports, and $Y$ is the second value.

(5) A value determined based on the number of second time units occupied by the SRS resource within a single first time unit, the number of antenna ports of the SRS resource, the number of SRS antenna ports mapped on a single third time unit, and the second value.

In some embodiments, the third value may be determined by subtracting a product of an eighth value and the second value from the number of second time units occupied by the SRS resource within a single first time unit. The eighth value is a ratio of the number of antenna ports of the SRS resource to the number of SRS antenna ports mapped on a single third time unit minus 1. The number of antenna ports of the SRS resource is an integer multiple of the number of SRS antenna ports mapped on a single third time unit.

For example, the third value may be calculated as:

$$Z = N_s - \left(\frac{N_{ap}}{N_{ap}^S} - 1\right)Y,$$

where $Z$ is the third value, $N_s$ is the number of second time units occupied by the SRS resource within a single first time unit, $N_{ap}$ is the number of antenna ports of the SRS resource, $N_{ap}^S$ is the number of SRS antenna ports mapped on a single third time unit, $Y$ is the second value, and $N_{ap}$ may be divisible by $N_{ap}^S$.

(6) A value determined based on the number of second time units occupied by the SRS resource within a single first time unit, the number of antenna ports of the SRS resource, the number of SRS antenna ports respectively mapped on multiple third time units, and the second value.

In some embodiments, the third value may be determined by subtracting a product of a ninth value and the second value from the number of second time units occupied by the SRS resource within a single first time unit. The ninth value is a ratio of the number of antenna ports of the SRS resource to a maximum value or a minimum value of the number of SRS antenna ports respectively mapped on multiple third time units minus 1. The number of antenna ports of the SRS resource is an integer multiple of the maximum value or the minimum value of the number of SRS antenna ports respectively mapped on multiple third time units.

For example, the third value may be calculated as:

$$Z = N_s - \left(\frac{N_{ap}}{N_{ap}^S} - 1\right) Y,$$

where $Z$ is the third value, $N_s$ is the number of second time units occupied by the SRS resource within a single first time unit, $N_{ap}$ is the number of antenna ports of the SRS resource, $N_{ap}^S$ is the maximum value or the minimum value of the number of SRS antenna ports respectively mapped on multiple third time units, $Y$ is the second value, and $N_{ap}$ may be divisible by $N_{ap}^S$.

(7) A value determined based on the number of second time units occupied by the SRS resource within a single first time unit, the number of antenna ports of the SRS resource, the number of antenna ports of the SRS resource mapped on a single third time unit, and the second value.

In some embodiments, the third value may be determined by subtracting a product of a tenth value and the second value from the number of second time units occupied by the SRS resource within a single first time unit. The tenth value is a ratio of the number of antenna ports of the SRS resource to the number of antenna ports of the SRS resource mapped on a single third time unit minus 1. The number of antenna ports of the SRS resource is an integer multiple of the number of antenna ports of the SRS resource mapped on a single third time unit.

For example, the third value may be calculated as:

$$Z = N_s - \left(\frac{N_{ap}}{N_{ap}^S} - 1\right) Y,$$

where $Z$ is the third value, $N_s$ is the number of second time units occupied by the SRS resource within a single first time unit, $N_{ap}$ is the number of antenna ports of the SRS resource, $N_{ap}^S$ is the number of antenna ports of the SRS resource mapped on a single third time unit, $Y$ is the second value, and $N_{ap}$ may be divisible by $N_{ap}^S$.

(8) A value determined based on the number of second time units occupied by the SRS resource within a single first time unit, the number of antenna ports of the SRS resource, the number of antenna ports of the SRS resource respectively mapped on multiple third time units, and the second value.

In some embodiments, the third value may be determined by subtracting a product of an eleventh value and the second value from the number of second time units occupied by the SRS resource within a single first time unit. The eleventh value is a ratio of the number of antenna ports of the SRS resource to a maximum value or a minimum value of the number of antenna ports of the SRS resource respectively mapped on multiple third time units minus 1. The number of antenna ports of the SRS resource is an integer multiple of the maximum value or the minimum value of the number of antenna ports of the SRS resource respectively mapped on multiple third time units.

For example, the third value may be calculated as:

$$Z = N_s - \left(\frac{N_{ap}}{N_{ap}^S} - 1\right) Y,$$

where $Z$ is the third value, $N_s$ is the number of second time units occupied by the SRS resource within a single first time unit, $N_{ap}$ is the number of antenna ports of the SRS resource, $N_{ap}^S$ is the maximum value or the minimum value of the number of antenna ports of the SRS resource respectively mapped on multiple third time units, $Y$ is the second value, and $N_{ap}$ may be divisible by $N_{ap}^S$.

The first part of antenna ports and the second part of antenna ports may refer to one or multiple antenna ports, and the first part of antenna ports and the second part of antenna ports only represent two different part of antenna ports, and there is no other limitation. In addition, the antenna ports of the SRS resource may include only the first part of antenna ports and the second part of antenna ports, or may include the first part of antenna ports, the second part of antenna ports, and other antenna ports except the first part of antenna ports and the second part of antenna ports, and the present application does not limit this.

In some embodiments, a first antenna port of the SRS resource is mapped to a same set of frequency domain units on all second time units being mapped to within a single first time unit.

In some embodiments, the first antenna port may refer to any antenna port included in the SRS resource, and is not specifically limited.

The frequency domain unit may be a PRB, a subcarrier or other frequency domain units, and is not limited here. This concept remains consistent throughout the description and would not be repeated later.

In case that the network device determines the time domain resource and/or the frequency domain resource to which multiple antenna ports of the SRS resource are mapped, the network device may determine that the terminal maps the first antenna port of the SRS resource to the same set of frequency domain units on all second time units being mapped to within a single first time unit.

In some embodiments, the first antenna port of the SRS resource may be mapped to the same subcarrier set on all OFDM symbols being mapped to within a single slot. In some embodiments, the same set of frequency domain units may be a set of frequency domain units included in the full hopping bandwidth of the SRS resource.

In some embodiments, in case that the first antenna port of the SRS resource is mapped to the same subcarrier set on all OFDM symbols being mapped to within a single slot, the subcarrier set may be a set consisting of all subcarriers or a part of subcarriers on all PRBs of the full hopping bandwidth of the SRS resource. All PRBs of the full hopping bandwidth of the SRS resource may be determined based on a bandwidth configured for the SRS resource. All PRBs of the full hopping bandwidth of the SRS resource may be PRBs corresponding to the bandwidth configured for the SRS resource.

In some embodiments, the SRS resource may not be configured for performing frequency hopping transmission, and/or the value of the repetition factor of the SRS resource may be equal to a number of second time units occupied by the SRS resource within a single first time unit.

In some embodiments, the network device may determine whether the terminal maps the first antenna port of the SRS resource to the same subcarrier set on all OFDM symbols being mapped to within a single slot based on whether the SRS resource is not configured for performing frequency hopping transmission and/or whether the value of the repetition factor of the SRS resource is equal to the number of OFDM symbols occupied by the SRS resource within a single slot.

In some embodiments, in case that a first condition is satisfied, the network device may determine that the terminal maps the first antenna port of the SRS resource to the same subcarrier set on all OFDM symbols being mapped to within a single slot, where the subcarrier set may be a set consisting of all subcarriers or a part of subcarriers on all PRBs of the full hopping bandwidth of the SRS resource.

In some embodiments, the first condition includes at least: the SRS resource is not configured for performing frequency hopping transmission, and/or the value of the repetition factor of the SRS resource is equal to the number of second time units occupied by the SRS resource within a single first time unit.

That is, in case that the condition "the SRS resource is not configured for performing frequency hopping transmission, and/or the value of the repetition factor of the SRS resource is equal to the number of second time units occupied by the SRS resource within a single first time unit" is satisfied, or in case that the condition "the SRS resource is not configured for performing frequency hopping transmission, and/or the value of the repetition factor of the SRS resource is equal to the number of second time units occupied by the SRS resource within a single first time unit" and other conditions are satisfied simultaneously, the network device may determine that the terminal maps the first antenna port of the SRS resource to the same subcarrier set on all OFDM symbols being mapped to within a single slot, where the subcarrier set may be a set consisting of all subcarriers or a part of subcarriers on all PRBs of the full hopping bandwidth of the SRS resource. A second condition, a third condition, and a fourth condition described below are similar and are not repeated here.

In some embodiments, the first antenna port of the SRS resource may be mapped to different sets of frequency domain units on multiple first time units, and may be mapped to the same set of frequency domain units on all second time units being mapped to within the same first time unit.

In some embodiments, in case that the first antenna port of the SRS resource is mapped to different PRB sets within multiple slots, the first antenna port may be mapped to the same subcarrier set on all OFDM symbols being mapped to within the same slot.

In some embodiments, the SRS resource may be configured for performing frequency hopping transmission, and the value of the repetition factor of the SRS resource may be equal to the number of second time units to which the first antenna port is mapped within a single first time unit.

In some embodiments, the network device may determine whether the terminal maps the first antenna port of the SRS resource to different PRB sets within multiple slots and map the first antenna port to the same subcarrier set on all OFDM symbols being mapped to within the same slot based on whether the SRS resource is configured for performing frequency hopping transmission and whether the value of the repetition factor of the SRS resource is equal to the number of second time units to which the first antenna port is mapped within a single first time unit.

In some embodiments, in case that the second condition is satisfied, the network device may determine that the terminal maps the first antenna port of the SRS resource to different PRB sets within multiple slots and maps the first antenna port to the same subcarrier set on all OFDM symbols being mapped to within the same slot.

In some embodiments, the second condition includes at least: the SRS resource is configured for performing frequency hopping transmission, and the value of the repetition factor of the SRS resource is equal to the number of second time units to which the first antenna port is mapped within a single first time unit.

In some embodiments, the first antenna port of the SRS resource is mapped to different sets of frequency domain units on different second time units being mapped to within a single first time unit.

In some embodiments, in case that the network device determines the time domain resource and/or the frequency domain resource to which multiple antenna ports of the SRS resource are mapped, the network device may determine that the terminal maps the first antenna port of the SRS resource to different sets of frequency domain units on different second time units being mapped to within a single first time unit.

In some embodiments, the first antenna port of the SRS resource may be mapped to different PRB sets on different OFDM symbols being mapped to within a single slot.

In some embodiments, the SRS resource may be configured for performing frequency hopping transmission, and/or the value of the repetition factor of the SRS resource may be 1.

In some embodiments, the network device may determine whether the terminal maps the first antenna port of the SRS resource to different PRB sets on different OFDM symbols being mapped to within a single slot based on whether the SRS resource is configured for performing frequency hopping transmission and/or whether the value of the repetition factor of the SRS resource is 1.

In some embodiments, in case that the third condition is satisfied, the network device may determine that the terminal maps the first antenna port of the SRS resource to different PRB sets on different OFDM symbols being mapped to within a single slot.

In some embodiments, the third condition at least includes: the SRS resource is configured for performing frequency hopping transmission, and/or the value of the repetition factor of the SRS resource is 1.

In some embodiments, all second time units to which the first antenna port of the SRS resource is mapped within a single first time unit are divided into multiple symbol groups, each symbol group includes R second time units, and the first antenna port is mapped to different sets of frequency domain units on different symbol groups, and is mapped to a same set of frequency domain units on R second time units within a same symbol group, where R is the value of the repetition factor of the SRS resource.

In some embodiments, in case that the network device determines the time domain resource and/or the frequency domain resource to which multiple antenna ports of the SRS resource are mapped, the network device may determine that the terminal divides all second time units to which the first antenna port of the SRS resource is mapped within a single first time unit into multiple symbol groups, each symbol group includes R second time units, and the first antenna port is mapped to different sets of frequency domain units on different symbol groups, and is mapped to the same set of frequency domain units on R second time units within the same symbol group. R is the value of the repetition factor of the SRS resource.

In some embodiments, all OFDM symbols to which the first antenna port of the SRS resource is mapped within a single slot are divided into multiple symbol groups, each symbol group includes R OFDM symbols, and the first antenna port is mapped to different PRB sets on different symbol groups, and is mapped to the same PRB set on R OFDM symbols in the same symbol group. R is the value of the repetition factor of the SRS resource, and the number of all OFDM symbols to which the first antenna port of the SRS resource is mapped within a single slot is an integer multiple of the value of the repetition factor of the SRS resource.

For example, in case that the number of all OFDM symbols to which the first antenna port of the SRS resource is mapped within a single slot is P, the P OFDM symbols may be divided into P/R symbol groups, where each symbol group includes R OFDM symbols.

In some embodiments, the SRS resource may be configured for performing frequency hopping transmission, and/or the value of the repetition factor of the SRS resource may be greater than or equal to 2.

In some embodiments, the network device may determine, based on whether the SRS resource is configured for performing frequency hopping transmission and/or whether the value of the repetition factor of the SRS resource is greater than or equal to 2, whether the terminal divides all OFDM symbols to which the first antenna port of the SRS resource is mapped within a single slot into multiple symbol groups, where each symbol group includes R OFDM symbols, and the first antenna port is mapped to different PRB sets on different symbol groups, and is mapped to the same PRB set on R OFDM symbols in the same symbol group. R is the value of the repetition factor of the SRS resource. In some embodiments, in case that the fourth condition is satisfied, the network device may determine that the terminal divides all OFDM symbols to which the first antenna port of the SRS resource is mapped within a single slot into multiple symbol groups, where each symbol group includes R OFDM symbols, and the first antenna port is mapped to different PRB sets on different symbol groups, and is mapped to the same PRB set on R OFDM symbols in the same symbol group.

In some embodiments, the fourth condition at least includes: the SRS resource is configured for performing frequency hopping transmission, and/or the value of the repetition factor of the SRS resource is greater than or equal to 2.

In some embodiments, the different sets of frequency domain units mentioned above may include the same number of frequency domain units.

In some embodiments, in case that the first antenna port of the SRS resource is mapped to different sets of frequency domain units on different second time units being mapped to within a single first time unit, or in case that the first antenna port of the SRS resource is mapped to different sets of frequency domain units on different symbol groups, or in case that the first antenna port of the SRS resource is mapped to different sets of frequency domain units on multiple first time units, the number of frequency domain units included in different sets of frequency domain units may be the same.

In some embodiments, the number of frequency domain units included in any set of frequency domain units is equal to a ratio of a number of frequency domain units included in a full hopping bandwidth of the SRS resource to a number of second time units to which the first antenna port is mapped within a single first time unit.

In some embodiments, in case that the number of frequency domain units included in the above-mentioned different sets of frequency domain units is the same, the number of frequency domain units included in any set of frequency domain units may be determined based on the ratio of the number of frequency domain units included in the full hopping bandwidth of the SRS resource to the number of second time units to which the first antenna port is mapped within a single first time unit.

In some embodiments, the number of PRBs included in any PRB set may be determined based on a ratio of the number of PRBs included in the full hopping bandwidth of the SRS resource to the number of OFDM symbols to which the first antenna port is mapped within a single slot.

For example, the number of PRBs included in any PRB set may be calculated as:

$$Q = \frac{N_{PRB}}{N_s^{ap}},$$

where $Q$ is the number of PRBs included in any PRB set, $N_{PRB}$ is the number of PRBs included in the full hopping bandwidth of the SRS resource, and $N_s^{ap}$ is the number of OFDM symbols to which the first antenna port is mapped within a single slot.

In some embodiments, a frequency hopping mode used by a frequency domain resource to which a first antenna port of the SRS resource is mapped is a first frequency hopping mode, a second frequency hopping mode, or a third frequency hopping mode,

where the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;

the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and

the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, where R is a value of the repetition factor of the SRS resource.

In some embodiments, in case that the network device determines the time domain resource and/or the frequency domain resource to which multiple antenna ports of the SRS resource are mapped, the network device may determine that the terminal determines the frequency domain resource to which multiple antenna ports of the SRS resource are mapped based on the first frequency hopping mode, the second frequency hopping mode or the third frequency hopping mode.

In some embodiments, the network device may determine that the terminal determines, based on the first frequency hopping mode, the frequency domain resource to which the first antenna port of the SRS resource is mapped.

The first frequency hopping mode may be: among multiple slots to which the first antenna port is mapped, a first hop of the first antenna port is mapped to a first slot, a second hop of the first antenna port is mapped to a second slot, and so on, until all hops are mapped, and in case that a remaining unmapped slot exists, a same frequency hopping pattern continues to the remaining slot.

For example, in case that the first antenna port is mapped to 8 slots, including 2 hops, the frequency hopping pattern on the 8 slots is: #1#2#1#2#1#2#1#2, where #1 and #2 represent different hops respectively.

Alternatively, the first frequency hopping pattern may also be: among multiple OFDM symbols to which the first antenna port is mapped, a first hop of the first antenna port is mapped to a first OFDM symbol, a second hop of the first antenna port is mapped to a second OFDM symbol, and so on, until all hops are mapped, and in case that a remaining unmapped OFDM symbol exists, a same frequency hopping pattern continues to the remaining OFDM symbol.

For example, in case that the first antenna port is mapped to 8 OFDM symbols, including 4 hops, the frequency hopping pattern on the 8 OFDM symbols is: #1#2#3#4#1#2#3#4, where #1, #2, #3 and #4 represent different hops respectively.

In some embodiments, the network device may determine that the terminal determines, based on the second frequency hopping mode, the frequency domain resource to which the first antenna port of the SRS resource is mapped.

The second frequency hopping mode may be: among multiple slots to which the first antenna port is mapped, a first hop of the first antenna port is mapped to a first slot and a second slot, a second hop of the first antenna port is mapped to a third slot and a fourth slot, and so on, until all hops are mapped, and in case that a remaining unmapped slot exists, a same frequency hopping pattern continues to the remaining slot.

For example, in case that the first antenna port is mapped to 8 slots, including 4 hops, the frequency hopping pattern on the 8 slots is: #1#1#2#2#3#3#4#4, where #1, #2, #3 and #4 represent different hops respectively.

Alternatively, the second frequency hopping pattern may also be: among multiple OFDM symbols to which the first antenna port is mapped, a first hop of the first antenna port is mapped to a first OFDM symbol and a second OFDM symbol, a second hop of the first antenna port is mapped to a third OFDM symbol and a fourth OFDM symbol, and so on, until all hops are mapped, and in case that a remaining unmapped OFDM symbol exists, a same frequency hopping pattern continues to the remaining OFDM symbol.

For example, in case that the first antenna port is mapped to 8 OFDM symbols, including 2 hops, the frequency hopping pattern on the 8 OFDM symbols is: #1#1#2#2#1#1#2#2, where #1 and #2 represent different hops respectively.

In some embodiments, the network device may determine that the terminal determines, based on the third frequency hopping mode, the frequency domain resource to which the first antenna port of the SRS resource is mapped.

The third frequency hopping mode may be: among multiple slots to which the first antenna port is mapped, a first hop of the first antenna port is mapped to first R slots, a second hop of the first antenna port is mapped to (R+1)-th to (2*R)-th slots, and so on, until all hops are mapped, and in case that a remaining unmapped slot exists, a same frequency hopping pattern continues to the remaining slot, where R is the value of the repetition factor of the SRS resource.

For example, in case that the first antenna port is mapped to 8 slots, including 2 hops, and the value of R is 4, the frequency hopping pattern on the 8 slots is: #1#1#1#1#2#2#2#2, where #1 and #2 represent different hops respectively.

Alternatively, the third frequency hopping mode may also be: among multiple OFDM symbols to which the first antenna port is mapped, a first hop of the first antenna port is mapped to first R OFDM symbols, a second hop of the first antenna port is mapped to (R+1)-th to (2*R)-th OFDM symbols, and so on, until all hops are mapped, and in case that a remaining unmapped OFDM symbol exists, a same frequency hopping pattern continues to the remaining OFDM symbol, where R is the value of the repetition factor of the SRS resource.

For example, in case that the first antenna port is mapped to 8 OFDM symbols, including 4 hops, and the value of R is 2, the frequency hopping pattern on the 8 OFDM symbols is: #1#1#2#2#3#3#4#4, where #1, #2, #3 and #4 represent different hops respectively.

In some embodiments, the network device may determine, based on whether the SRS resource performs intra-slot frequency hopping and whether the number of hops of the first antenna port of the SRS resource is equal to the number of OFDM symbols to which the first antenna port is mapped, whether the terminal determines, based on the first frequency hopping mode, the frequency domain resource to which the first antenna port of the SRS resource is mapped.

In some embodiments, the network device may also determine, based on whether the SRS resource performs inter-slot hopping and whether the number of hops of the first antenna port of the SRS resource is equal to the number of slots to which the first antenna port is mapped, whether the terminal determines, based on the first frequency hopping mode, the frequency domain resource to which the first antenna port of the SRS resource is mapped.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, is determined based on any of the following.

  (1) The number of antenna ports of the SRS resource and the number of SRS antenna ports mapped on a single third time unit.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of antenna ports of the SRS resource to the number of SRS antenna ports mapped on a single third time unit.

For example, one calculation way may be:

$$M = \frac{N_{ap}}{N_{ap}^{S}},$$

where M is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_{ap}$ is the number of antenna ports of the SRS resource, and $N_{ap}^{s}$ is the number of SRS antenna ports mapped on a single third time unit.

(2) The number of antenna ports of the SRS resource and the number of SRS antenna ports respectively mapped on multiple third time units.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of antenna ports of the SRS resource to a maximum value or a minimum value of the number of SRS antenna ports respectively mapped on multiple third time units.

For example, one calculation way may be:

$$M = \frac{N_{ap}}{N_{ap}^{s}},$$

where $M$ is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_{ap}$ is the number of antenna ports of the SRS resource, and $N_{ap}^{s}$ is the maximum value or the minimum value of the number of SRS antenna ports respectively mapped on multiple third time units.

(3) The number of antenna ports of the SRS resource and the number of antenna ports of the SRS resource mapped on a single third time unit.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of antenna ports of the SRS resource to the number of antenna ports of the SRS resource mapped on a single third time unit.

For example, one calculation way may be:

$$M = \frac{N_{ap}}{N_{ap}^{s}},$$

where $M$ is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_{ap}$ is the number of antenna ports of the SRS resource, and $N_{ap}^{s}$ is the number of antenna ports of the SRS resource mapped on a single third time unit.

(4) The number of antenna ports of the SRS resource and the number of antenna ports of the SRS resource respectively mapped on multiple third time units.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of antenna ports of the SRS resource to a maximum value or a minimum value of the number of antenna ports of the SRS resource respectively mapped on multiple third time units.

For example, one calculation way may be:

$$M = \frac{N_{ap}}{N_{ap}^{s}},$$

where $M$ is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_{ap}$ is the number of antenna ports of the SRS resource, and $N_{ap}^{s}$ is the maximum value or the minimum value of the number of antenna ports of the SRS resource respectively mapped on multiple third time units.

(5) The number of second time units occupied by the SRS resource within a single first time unit, the repetition factor of the SRS resource, and the number of frequency hops of a single antenna port of the SRS resource within a single third time unit.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of second time units occupied by the SRS resource within a single first time unit to a sixth product. The sixth product is a product of the repetition factor of the SRS resource and the number of frequency hops of a single antenna port of the SRS resource within a single third time unit.

For example, one calculation way may be:

$$M = \frac{N_s}{R * N_{hop}},$$

where *M* is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_s$ is the number of second time units occupied by the SRS resource within a single first time unit, *R* is the repetition factor of the SRS resource, and $N_{hop}$ is the number of frequency hops of a single antenna port of the SRS resource within a single third time unit.

(6) The number of second time units occupied by the SRS resource within a single first time unit, the repetition factor of the SRS resource, and the number of frequency hops of multiple antenna ports of the SRS resource within a single third time unit respectively.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of second time units occupied by the SRS resource within a single first time unit to a seventh product. The seventh product is a product of the repetition factor of the SRS resource and a maximum value or a minimum value of the number of frequency hops of multiple antenna ports of the SRS resource within a single third time unit respectively.

For example, one calculation way may be:

$$M = \frac{N_s}{R * N_{hop}},$$

where *M* is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_s$ is the number of second time units occupied by the SRS resource within a single first time unit, *R* is the repetition factor of the SRS resource, and $N_{hop}$ is the maximum value or the minimum value of the number of frequency hops of multiple antenna ports of the SRS resource within a single third time unit respectively.

(7) The number of second time units occupied by the SRS resource within a single first time unit, the repetition factor of the SRS resource, and the number of frequency hops included in a single frequency hopping period of the SRS resource.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of second time units occupied by the SRS resource within a single first time unit to an eighth product. The eighth product is a product of the repetition factor of the SRS resource and the number of frequency hops included in a single frequency hopping period of the SRS resource.

For example, one calculation way may be:

$$M = \frac{N_s}{R * N_{hop}},$$

where *M* is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_s$ is the number of second time units occupied by the SRS resource within a single first time unit, *R* is the repetition factor of the SRS resource, and $N_{hop}$ is the number of frequency hops included in a single frequency hopping period of the SRS resource.

(8) The number of second time units occupied by the SRS resource within a single first time unit and the number of second time units to which a single antenna port of the SRS resource is mapped within a single first time unit.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of second time units occupied by the SRS resource within a single first time unit to the number of second time units to which a single antenna port of the SRS resource is mapped within a single first time unit.

For example, one calculation way may be:

$$M = \frac{N_s}{N_s^{ap}},$$

where $M$ is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_s$ is the number of second time units occupied by the SRS resource within a single first time unit, and $N_s^{ap}$ is the number of second time units to which a single antenna port of the SRS resource is mapped within a single first time unit.

(9) The number of second time units occupied by the SRS resource within a single first time unit and the number of second time units to which multiple antenna ports of the SRS resource are respectively mapped within a single first time unit.

In some embodiments, the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports may be determined based on a ratio of the number of second time units occupied by the SRS resource within a single first time unit to a maximum value or a minimum value of the number of second time units to which multiple antenna ports of the SRS resource are respectively mapped within a single first time unit.

For example, one calculation way may be:

$$M = \frac{N_s}{N_s^{ap}},$$

where $M$ is the number of antenna port groups included in the SRS resource, or the number of third time unit groups to which all antenna ports of the SRS resource are mapped, or the minimum number of third time units required for all antenna ports of the SRS resource being mapped once, or the number of third time units to which all antenna ports of the SRS resource are mapped in case that one repetition is performed on the all antenna ports, $N_s$ is the number of second time units occupied by the SRS resource within a single first time unit, and $N_s^{ap}$ is the maximum value or the minimum value of number of second time units to which multiple antenna ports of the SRS resource are respectively mapped within a single first time unit.

In some embodiments, the number of second time units to which a single antenna port of the SRS resource is mapped within a single first time unit, or the number of second time units to which multiple antenna ports of the SRS resource are respectively mapped within a single first time unit, is determined based on any of the following.

(1) The number of SRS antenna ports mapped on a single third time unit, the number of second time units occupied by the SRS resource within a single first time unit, and the number of antenna ports of the SRS resource.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of a ninth product to the number of antenna ports of the SRS resource. The ninth product is a product of the number of SRS antenna ports mapped on a single third time unit and the number of second time units occupied by the SRS resource within a single first time unit.

For example, one calculation way may be:

$$N_s^{ap} = \frac{N_{ap}^s * N_s}{N_{ap}},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_{ap}^s$ is the number of SRS antenna ports mapped on a single third time unit, $N_s$ is the number of second time units occupied by the SRS resource within a single first time unit, and $N_{ap}$ is the number of antenna ports of the SRS resource.

(2) The number of second time units occupied by the SRS resource within a single first time unit, the number of antenna ports of the SRS resource, and the number of SRS antenna ports respectively mapped on multiple third time units.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of a tenth product to the number of antenna ports of the SRS resource. The tenth product is a product of a maximum value or a minimum value of the number of SRS antenna ports respectively mapped on multiple third time units and the number of second time units occupied by the SRS resource within a single first time unit.

For example, one calculation way may be:

$$N_s^{ap} = \frac{N_{ap}^S * N_s}{N_{ap}},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_{ap}^s$ is the maximum value or the minimum value of the number of SRS antenna ports respectively mapped on multiple third time units, $N_s$ is the number of second time units occupied by the SRS resource within a single first time unit, and $N_{ap}$ is the number of antenna ports of the SRS resource.

(3) The number of antenna ports of the SRS resource mapped on a single third time unit, the number of second time units occupied by the SRS resource within a single first time unit, and the number of antenna ports of the SRS resource.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of an eleventh product to the number of antenna ports of the SRS resource. The eleventh product is a product of the number of antenna ports of the SRS resource mapped on a single third time unit and the number of second time units occupied by the SRS resource within a single first time unit.

For example, one calculation way may be:

$$N_s^{ap} = \frac{N_{ap}^S * N_s}{N_{ap}},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_{ap}^s$ is the number of antenna ports of the SRS resource mapped on a single third time unit, $N_s$ is the number of second time units occupied by the SRS resource within a single first time unit, and $N_{ap}$ is the number of antenna ports of the SRS resource.

(4) The number of antenna ports of the SRS resource respectively mapped on multiple third time units, the number of second time units occupied by the SRS resource within a single first time unit, and the number of antenna ports of the SRS resource.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of a twelfth product to the number of antenna ports of the SRS resource. The twelfth product is a product of a maximum value or a minimum value of the number of antenna ports of the SRS resource respectively mapped on multiple third time units and the number of second time units occupied by the SRS resource within a single first time unit.

For example, one calculation way may be:

$$N_s^{ap} = \frac{N_{ap}^S * N_s}{N_{ap}},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_{ap}^S$ is the maximum value or the minimum value of the number of antenna ports of the SRS resource respectively mapped on multiple third time units, $N_s$ is the number of second time units occupied by the SRS resource within a single first time unit, and $N_{ap}$ is the number of antenna ports of the SRS resource.

(5) The repetition factor of the SRS resource and the number of frequency hops of a single antenna port of the SRS resource within a single third time unit.

In some embodiments, the number of second time units to which a single antenna port of the SRS resource is mapped within a single first time unit, or the number of second time units to which multiple antenna ports of the SRS resource are respectively mapped within a single first time unit may be determined based on a product of the repetition factor of the SRS resource and the number of frequency hops of a single antenna port of the SRS resource within a single third time unit.

For example, one calculation way may be:

$$N_s^{ap} = R * N_{hop},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $R$ is the repetition factor of the SRS resource, and $N_{hop}$ is the number of frequency hops of a single antenna port of the SRS resource within a single third time unit.

(6) The repetition factor of the SRS resource and the number of frequency hops of multiple antenna ports of the SRS resource within a single third time unit respectively.

In some embodiments, the number of second time units to which a single antenna port of the SRS resource is mapped within a single first time unit, or the number of second time units to which multiple antenna ports of the SRS resource are respectively mapped within a single first time unit may be determined based on a product of the repetition factor of the SRS resource and a maximum value or a minimum value of the number of frequency hops of multiple antenna ports of the SRS resource within a single third time unit respectively.

For example, one calculation way may be:

$$N_s^{ap} = R * N_{hop},$$

where $N_s^{ap}$ is the number of second time units to which a single antenna port of the SRS resource is mapped within a single first time unit, or the number of second time units to which multiple antenna ports of the SRS resource are respectively mapped within a single first time unit, R is the repetition factor of the SRS resource, and $N_{hop}$ is the is the maximum value or the minimum value of the number of frequency hops of multiple antenna ports of the SRS resource within a single third time unit respectively.

(7) The repetition factor of the SRS resource and the number of frequency hops included in a single frequency hopping period of the SRS resource.

In some embodiments, the number of second time units to which a single antenna port of the SRS resource is mapped within a single first time unit, or the number of second time units to which multiple antenna ports of the SRS resource are respectively mapped within a single first time unit may be determined based on a product of the repetition factor of the SRS resource and the number of frequency hops included in a single frequency hopping period of the SRS resource.

For example, one calculation way may be:

$$N_s^{ap} = R * N_{hop},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $R$ is the repetition factor of the SRS resource, and $N_{hop}$ is the number of frequency hops included in a single frequency hopping period of the SRS resource.

(8) The number of second time units occupied by the SRS resource within a single first time unit and the number of antenna port groups included in the SRS resource.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of the number of second time units occupied by the SRS resource within a single first time unit to the number of antenna port groups included in the SRS resource.

For example, one calculation way may be:

$$N_s^{ap} = \frac{N_s}{M},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_s$ is the number of second time units occupied by the SRS resource within a single first time unit, and $M$ is the number of antenna port groups included in the SRS resource.

(9) The number of second time units occupied by the SRS resource within a single first time unit and the number of third time unit groups to which all antenna ports of the SRS resource are mapped.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of the number of second time units occupied by the SRS resource within a single first time unit to the number of third time unit groups to which all antenna ports of the SRS resource are mapped.

For example, one calculation way may be:

$$N_s^{ap} = \frac{N_s}{M},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_s$ is the number of second time units occupied by the SRS resource within a single first time unit, and $M$ is the number of third time unit groups to which all antenna ports of the SRS resource are mapped.

(10) The number of second time units occupied by the SRS resource within a single first time unit and the minimum number of third time units required for all antenna ports of the SRS resource being mapped once.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of the number of second time units occupied by the SRS resource within a single first time unit to the minimum number of third time units required for all antenna ports of the SRS resource being mapped once.

For example, one calculation way may be:

$$N_s^{ap} = \frac{N_s}{M},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_s$ is the number of second time units occupied by the SRS resource within a single first time unit, and $M$ is the minimum number of third time units required for all antenna ports of the SRS resource being mapped once.

(11) The number of second time units occupied by the SRS resource within a single first time unit and the number of third time units to which all antenna ports of the SRS resource are mapped in case that one repetition is performed on the all antenna ports.

In some embodiments, the number of second time units to which a single antenna port of the SRS resource is mapped within a single first time unit, or the number of second time units to which multiple antenna ports of the SRS resource are respectively mapped within a single first time unit may be determined based on a ratio of the number of second time units occupied by the SRS resource within a single first time unit to the number of third time units to which all antenna ports of the SRS resource are mapped in case that one repetition is performed on the all antenna ports.

For example, one calculation way may be:

$$N_s^{ap} = \frac{N_s}{M},$$

where $N_s^{ap}$ is the number of second time units to which a single antenna port of the SRS resource is mapped within a single first time unit, or the number of second time units to which multiple antenna ports of the SRS resource are respectively mapped within a single first time unit, $N_s$ is the number of second time units occupied by the SRS resource within a single first time unit, and $M$ is the number of third time units to which all antenna ports of the SRS resource are mapped in case that one repetition is performed on the all antenna ports.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of the following.

(1) The number of antenna ports of the SRS resource and the number of antenna port groups included in the SRS resource.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of the number of antenna ports of the SRS resource to the number of antenna port groups included in the SRS resource.

For example, one calculation way may be:

$$N_{ap}^s = \frac{N_{ap}}{M},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, and $M$ is the number of antenna port groups included in the SRS resource.

(2) The number of antenna ports of the SRS resource and the number of third time unit groups to which all antenna ports of the SRS resource are mapped.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of the number of antenna ports of the SRS resource to the number of third time unit groups to which all antenna ports of the SRS resource are mapped.

For example, one calculation way may be:

$$N_{ap}^s = \frac{N_{ap}}{M},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, and $M$ is the number of third time unit groups to which all antenna ports of the SRS resource are mapped.

(3) The number of antenna ports of the SRS resource and the minimum number of third time units required for all antenna ports of the SRS resource being mapped once.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of the number of antenna ports of the SRS resource to the minimum number of third time units required for all antenna ports of the SRS resource being mapped once.

For example, one calculation way may be:

$$N_{ap}^{s} = \frac{N_{ap}}{M},$$

where $N_{ap}^{s}$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, and $M$ is the minimum number of third time units required for all antenna ports of the SRS resource being mapped once.

(4) The number of antenna ports of the SRS resource and the number of third time units to which all antenna ports of the SRS resource are mapped in case that one repetition is performed on the all antenna ports.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of the number of antenna ports of the SRS resource to the number of third time units to which all antenna ports of the SRS resource are mapped in case that one repetition is performed on the all antenna ports.

For example, one calculation way may be:

$$N_{ap}^{s} = \frac{N_{ap}}{M},$$

where $N_{ap}^{s}$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, and $M$ is the number of third time units to which all antenna ports of the SRS resource are mapped in case that one repetition is performed on the all antenna ports.

(5) The number of second time units occupied by the SRS resource within a single first time unit, the number of antenna ports of the SRS resource, the repetition factor of the SRS resource, and the number of frequency hops of a single antenna port of the SRS resource within a single third time unit.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of a thirteenth product to the number of second time units occupied by the SRS resource within a single first time unit. The thirteenth product is a product of the number of antenna ports of the SRS resource, the repetition factor of the SRS resource, and the number of frequency hops of a single antenna port of the SRS resource within a single third time unit.

For example, one calculation way may be:

$$N_{ap}^{s} = \frac{N_{ap} * R * N_{hop}}{N_{s}},$$

where $N_{ap}^{s}$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, $R$ is the repetition factor of the SRS resource, $N_{hop}$ is the number of frequency hops of a single antenna port of the SRS resource within a single third time unit, and $N_{s}$ is the number of second time units occupied by the SRS resource within a single first time unit.

(6) The number of second time units occupied by the SRS resource within a single first time unit, the number of antenna ports of the SRS resource, the repetition factor of the SRS resource, and the number of frequency hops of multiple antenna ports of the SRS resource within a single third time unit respectively.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of a fourteenth product to the number of second time units occupied by the SRS resource within a single first time unit. The fourteenth product is a product of the number of antenna ports of the SRS resource, the repetition factor of the SRS resource, and a maximum value or a minimum value of the number of frequency hops of multiple antenna ports of the SRS resource within a single third time unit respectively.

For example, one calculation way may be:

$$N_{ap}^s = \frac{N_{ap}*R*N_{hop}}{N_s},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, $R$ is the repetition factor of the SRS resource, $N_{hop}$ is the maximum value or the minimum value of the number of frequency hops of multiple antenna ports of the SRS resource within a single third time unit respectively, and $N_s$ is the number of second time units occupied by the SRS resource within a single first time unit.

(7) The number of second time units occupied by the SRS resource within a single first time unit, the number of antenna ports of the SRS resource, the repetition factor of the SRS resource, and the number of frequency hops included in a single frequency hopping period of the SRS resource.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of a fifteenth product to the number of second time units occupied by the SRS resource within a single first time unit. The fifteenth product is a product of the number of antenna ports of the SRS resource, the repetition factor of the SRS resource, and the number of frequency hops included in a single frequency hopping period of the SRS resource.

For example, one calculation way may be:

$$N_{ap}^s = \frac{N_{ap}*R*N_{hop}}{N_s},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, $R$ is the repetition factor of the SRS resource, $N_{hop}$ is the number of frequency hops included in a single frequency hopping period of SRS resources, and $N_s$ is the number of second time units occupied by the SRS resource within a single first time unit.

(8) The number of second time units occupied by the SRS resource within a single first time unit, the number of antenna ports of the SRS resource, and the number of second time units to which a single antenna port of the SRS resource is mapped within a single first time unit.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of a sixteenth product to the number of second time units occupied by the SRS resource within a single first time unit. The sixteenth product is a product of the number of antenna ports of the SRS resource and the number of second time units to which a single antenna port of the SRS resource is mapped within a single first time unit.

For example, one calculation way may be:

$$N_{ap}^s = \frac{N_{ap}*N_s^{ap}}{N_s},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, $N_s^{ap}$ is the number of second time units to which a single antenna port of the SRS resource is mapped within a single first time unit, and $N_s$ is the number of second time units occupied by the SRS resource within a single first time unit.

(9) The number of second time units occupied by the SRS resource within a single first time unit, the number of antenna ports of the SRS resource, and the number of second time units to which multiple antenna ports of the SRS resource are respectively mapped within a single first time unit.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units may be determined based on a ratio of a seventeenth product to the number of second time units occupied by the SRS resource within a single first time unit. The seventeenth product is a product of the number of antenna ports of the SRS resource and a maximum value or a minimum value of the second time units to which multiple antenna ports of the SRS resource are respectively mapped within a single first time unit.

For example, one calculation way may be:

$$N_{ap}^s = \frac{N_{ap} * N_s^{ap}}{N_s},$$

where $N_{ap}^s$ is the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, $N_{ap}$ is the number of antenna ports of the SRS resource, $N_s^{ap}$ is the maximum value or the minimum value of the number of second time units to which multiple antenna ports of the SRS resource are respectively mapped within a single first time unit, and $N_s$ is the number of second time units occupied by the SRS resource within a single first time unit.

In some embodiments, determining, based on the first information, the time domain resource and/or the frequency domain resource to which multiple antenna ports of the SRS resource are mapped includes:

based on the number of antenna ports of the SRS resource and/or indication information sent from the network device to the terminal, determining, based on the first information, the time domain resource and/or the frequency domain resource to which multiple antenna ports of the SRS resource are mapped.

In some embodiments, the network device may determine, based on whether the number of antenna ports of the SRS resource is greater than a given value and/or whether the network device sends the indication message to the terminal, whether the terminal determines, based on the first information, the time domain resource and/or the frequency domain resource to which multiple antenna ports of the SRS resource are mapped.

For example, in case that the number of antenna ports of the SRS resource is greater than the given value, the network device may determine that the terminal determines, based on the first information, the time domain resource and/or the frequency domain resource to which multiple antenna ports of the SRS resource are mapped; and in case that the number of antenna ports of the SRS resource is less than or equal to the given value, the network device may determine that the terminal determines the time domain resource and/or the frequency domain resource to which multiple antenna ports of the SRS resource are mapped by using the related art (all SRS ports of the SRS resource are mapped to all OFDM symbols configured by the base station for the SRS resource).

In some embodiments, the given value of the number of antenna ports of the SRS resource may be 4.

For example, in case that $N_{ap}$=8, the network device may determine that the terminal adopts the method provided by the embodiment of the present application; and in case that $N_{ap}$=1, 2 or 4, the network device may determine that the terminal adopts a method in the related art.

The network device may send enable information to the terminal, for example, send one piece of indication information. In case that the indication information indicates the terminal to map multiple ports of the SRS resource to different OFDM symbols (i.e., the SRS ports are mapped in a time division multiplexing (TDM) manner, i.e., at least 2 groups of SRS ports are mapped to different OFDM symbols), the method provided by the embodiment of the present application is adopted; otherwise, the terminal maps all antenna ports of the SRS resource to all OFDM symbols, i.e., the method in the related art is adopted. The indication information may be included in configuration information of the SRS resource, i.e., it is indicated for each SRS resource (which is more suitable for one or more SRS port numbers (i.e., the value of $N_{ap}$), and a fixed rule is adopted to map the SRS resource to multiple OFDM symbols in the TDM manner).

In some embodiments, before receiving the SRS corresponding to the SRS resource sent from the terminal, the method further includes:

determining, based on the time domain resource and/or the frequency domain resource to which multiple antenna ports of the SRS resource are mapped, the second information; and
sending the second information to the terminal.

In some embodiments, the network device may send the second information to the terminal, and the second information may be used to indicate one or more items of the first information. After receiving the second information sent from the network device, the terminal may determine the time domain resource and/or the frequency domain resource to which multiple antenna ports of the SRS resource are mapped based on one or more items of the first information indicated by the second information.

The methods provided by the various embodiments of the present application are based on the same concept, the implementation of each method may refer to each other, and the repetitions are not repeated.

The methods provided by the above embodiments of the present application are explained in the following by using embodiments of specific application scenarios.

Embodiment 1: a scheme that each SRS port of an SRS resource is mapped to the same number of OFDM symbols.

Scheme 1: each SRS port of an SRS resource is mapped to $\frac{N_s}{M}$ / $N_s^{ap}$ / $\frac{N_{ap}^S * N_s}{N_{ap}}$ / $(R * N_{hop})$ OFDM symbols within one slot, and is mapped to the same subcarrier set on $\frac{N_s}{M}$ / $N_s^{ap}$ / $\frac{N_{ap}^S * N_s}{N_{ap}}$ / $(R * N_{hop})$ OFDM symbols. In some embodiments, the subcarrier set is a set consisting of subcarriers on all PRBs of the full hopping bandwidth (not necessarily all subcarriers, but may be a part of subcarriers). $N_s$ may be divisible by $M$. $N_{ap}^S * N_s$ may be divisible by $N_{ap}$.

The PRBs included in the full hopping bandwidth are determined based on a bandwidth configured for the SRS resource. In some embodiments, the PRBs included in the full hopping bandwidth are a number of PRBs corresponding to the bandwidth configured for the SRS resource.

In some embodiments, in case that a first condition is satisfied, each SRS port is mapped to the same subcarrier set on $\frac{N_s}{M}$ / $N_s^{ap}$ / $\frac{N_{ap}^S * N_s}{N_{ap}}$ / $(R * N_{hop})$ OFDM symbols. The first condition includes: the SRS resource is not configured for frequency hopping, and/or $R = N_s$.

In some embodiments, the SRS resource is an aperiodic SRS resource, or a periodic SRS resource, or a semi-persistent SRS resource.

The periodic SRS resource refers to an SRS resource that is transmitted periodically. A semi-persistent SRS resource is an SRS resource that may be activated by an activation signaling and deactivated by a deactivation signaling. The semi-persistent SRS resource is transmitted only during an activation period. During the activation period, the semi-persistent SRS resource may be transmitted periodically, or single transmission may be transmitted once. The aperiodic SRS resource is an SRS resource that is sent based on a trigger signaling and may include one or more transmission occasions.

Scheme 2: each SRS port of an SRS resource is mapped to $\frac{N_s}{M}$ / $N_s^{ap}$ / $\frac{N_{ap}^S * N_s}{N_{ap}}$ / $(R * N_{hop})$ OFDM symbols within one slot, and is mapped to different PRB sets on $\frac{N_s}{M}$ / $N_s^{ap}$ / $\frac{N_{ap}^S * N_s}{N_{ap}}$ / $(R * N_{hop})$ different OFDM symbols. $N_s$ may be divisible by $M$. $N_{ap}^S * N_s$ may be divisible

by $N_{ap}$.

In some embodiments, each SRS port of the SRS resource is mapped to the same number of PRBs on each OFDM symbol. That is, one SRS port of the SRS resource is mapped to the same number of PRBs in each hop. For example, a ratio of a number of PRBs included in a hopping bandwidth to a number of PRBs to which each SRS port is mapped on each OFDM symbol is $\frac{N_s}{M}$ / $N_s^{ap}$ / $\frac{N_{ap}^S * N_s}{N_{ap}}$ / $(R * N_{hop})$.

It is assumed that a number of PRBs included in a hopping bandwidth of the SRS resource is $N_{PRB}$. In some embodiments, a number of PRBs to which each SRS port of the SRS resource is mapped on a part of the OFDM symbol is $\frac{M}{N_s} * N_{PRB}$ (i.e., a number of PRBs for a part of hops of each SRS port of the SRS resource is $\frac{M}{N_s} * N_{PRB}$).

In some embodiments, in case that a second condition is satisfied, each SRS port is mapped to different subcarrier sets on $\frac{N_s}{M}$ / $N_s^{ap}$ / $\frac{N_{ap}^S * N_s}{N_{ap}}$ / $(R * N_{hop})$ OFDM symbols. The second condition includes: $R = 1$.

In some embodiments, the second condition further includes: the SRS resource is configured for performing frequency hopping transmission.

In some embodiments, the SRS resource is an aperiodic SRS resource, or a periodic SRS resource, or a semi-persistent SRS resource.

Scheme 3: each SRS port of an SRS resource is mapped to $\frac{N_s}{M}$ / $N_s^{ap}$ / $\frac{N_{ap}^S * N_s}{N_{ap}}$ / $(R * N_{hop})$ OFDM symbols within one slot, where the $\frac{N_s}{M}$ / $N_s^{ap}$ / $\frac{N_{ap}^S * N_s}{N_{ap}}$ / $(R * N_{hop})$ symbols include (i.e., are divided into) $\frac{N_s}{MR}$ / $\frac{N_s^{ap}}{R}$ / $\frac{N_{ap}^S * N_s}{R * N_{ap}}$ / $N_{hop}$ groups (sets), each group has R symbols, each SRS port of the SRS resource is mapped to different PRB sets on different symbol groups, and each SRS port is mapped to the same subcarrier on R symbols of the same group. $N_s$ may be divisible by $R$. $N_s$ may be divisible by $M$. $N_{ap}^S * N_s$ may be divisible by $N_{ap}$.

In some embodiments, an SRS port of the SRS resource is mapped to multiple OFDM symbols by using one of the following frequency hopping modes.

Scheme a (cyclic mapping): among multiple OFDM symbols to which one SRS port is mapped, a first hop of the SRS port is mapped to a first OFDM symbol, a second hop of the SRS port is mapped to a second OFDM symbol, and so on, until all hops are mapped, a same frequency hopping pattern continues to a remaining OFDM symbol.

Example 1: in case that one SRS port is mapped to 4 OFDM symbols, including 2 hops, the frequency hopping pattern on the 4 OFDM symbols is: #1#2#1#2, where #1 and #2 represent different hops respectively, that is, PRBs being mapped to on the OFDM symbols corresponding to #1 and #2 are different.

Example 2: in case that one SRS port is mapped to 8 OFDM symbols, including 4 hops, the frequency hopping pattern on the 8 OFDM symbols is: #1#2#3#4#1#2#3#4, where #1, #2, #3 and #4 represent different hops respectively.

Example 3: in case that one SRS port is mapped to 8 OFDM symbols, and including 2 hops, the frequency hopping pattern on the 8 OFDM symbols is: #1#2#1#2#1#2#1#2.

Scheme b (sequential mapping): among multiple OFDM symbols to which one SRS port is mapped, a first hop of the SRS port is mapped to a first OFDM symbol and a second OFDM symbol, a second hop of the SRS port is mapped to a third OFDM symbol and a fourth OFDM symbol, and so on, until all hops are mapped, a same frequency hopping pattern continues to a remaining OFDM symbol.

Example 1: in case that one SRS port is mapped to 4 OFDM symbols, including 2 hops, the frequency hopping pattern on the 4 OFDM symbols is: #1#1#2#2, where #1 and #2 represent different hops respectively, that is, PRBs being mapped to on the OFDM symbols corresponding to #1 and #2 are different.

Example 2: in case that one SRS port is mapped to 8 OFDM symbols, including 4 hops, the frequency hopping pattern on the 8 OFDM symbols is: #1#1#2#2#3#3#4#4, where #1, #2, #3 and #4 represent different hops respectively.

Example 3: in case that one SRS port is mapped to 8 OFDM symbols, including 2 hops, the frequency hopping pattern on the 8 OFDM symbols is: #1#1#2#2#1#1#2#2.

Scheme c (each hop is mapped to an adjacent OFDM symbol): among multiple OFDM symbols to which one SRS port is mapped, a first hop of the SRS port is mapped to first R OFDM symbols, a second hop of the SRS port is mapped to (R+1)-th to (2*R)-th OFDM symbols, and so on, until all hops are mapped, a same frequency hopping pattern continues to a remaining OFDM symbol. That is, each hop is mapped to an adjacent OFDM symbol.

Example 1: in case that one SRS port is mapped to 4 OFDM symbols, including 2 hops, the frequency hopping pattern on the 4 OFDM symbols is: #1#1#2#2, where #1 and #2 represent different hops respectively.

Example 2: in case that one SRS port is mapped to 8 OFDM symbols, including 4 hops, the frequency hopping pattern on the 8 OFDM symbols is: #1#1#2#2#3#3#4#4, where #1, #2, #3 and #4 represent different hops respectively.

Example 3: in case that one SRS port is mapped to 8 OFDM symbols, including 2 hops, the frequency hopping pattern on the 8 OFDM symbols is: #1#1#1#1#2#2#2#2.

In some embodiments, a base station configures a frequency hopping mode of the SRS resource, where the frequency hopping mode indicates at least one of the above scheme a, scheme b, or scheme c.

In some embodiments, in case that the SRS resource performs intra-slot frequency hopping and a number of hops of the SRS port is equal to the number of OFDM symbols to which the SRS port is mapped, the frequency hopping mode in scheme a is always adopted; and in case that the SRS resource performs intra-slot frequency hopping and the number of hops of the SRS port is less than the number of OFDM symbols to which the SRS port is mapped, the mapping method is determined based on the frequency hopping mode configured by the base station.

In some embodiments, in case that a third condition is satisfied, each SRS port is mapped to different subcarrier sets on $\frac{N_s}{M} / N_s^{ap} / \frac{N_{ap}^S * N_s}{N_{ap}} / (R * N_{hop})$ OFDM symbols. The third condition includes: $R \geq 2$.

In some embodiments, the third condition further includes: the SRS resource is configured for performing frequency hopping transmission.

In some embodiments, the SRS resource is an aperiodic SRS resource, or a periodic SRS resource, or a semi-persistent SRS resource.

Scheme 4: each SRS port of an SRS resource is mapped to $\frac{N_s}{M} / N_s^{ap} / \frac{N_{ap}^S * N_s}{N_{ap}} / (R * N_{hop})$ OFDM symbols within each slot, and is mapped to the same subcarrier set. In some embodiments, a ratio of a number of PRBs to which each SRS port is mapped within each slot to a number of PRBs included in a hopping bandwidth is $\frac{M}{N_s}$. $N_s$ may be divisible by $M$. $N_{ap}^S * N_s$ may be divisible by $N_{ap}$.

In some embodiments, in case that the fourth condition is satisfied, each SRS port is mapped to the same subcarrier set on $\frac{N_s}{M} / N_s^{ap} / \frac{N_{ap}^S * N_s}{N_{ap}} / (R * N_{hop})$ OFDM symbols within the same slot. The fourth condition includes:

$\frac{N_s}{M} = R / N_s^{ap} = R / \frac{N_{ap}^S * N_s}{N_{ap}} = R / (R * N_{hop}) = R$, and the SRS resource is configured for performing frequency hopping transmission.

In some embodiments, the SRS resource is an aperiodic SRS resource, or a periodic SRS resource, or a semi-persistent SRS resource.

In some embodiments, in case that the SRS resource performs inter-slot frequency hopping, an SRS port of the SRS resource is mapped to multiple slots by using one of the following frequency hopping modes.

Scheme a (cyclic mapping): among multiple slots to which one SRS port is mapped (in a protocol, one slot for transmitting the SRS may also be referred to as one transmission occasion of the SRS resource), a first hop of the SRS port is mapped to a first slot, a second hop of the SRS port is mapped to a second slot, and so on, until all hops are mapped, a same frequency hopping pattern continues to a remaining slot.

Example 1: in case that one SRS port is mapped to 4 slots, including 2 hops, the frequency hopping pattern on the 4 slots is: #1#2#1#2, where #1 and #2 represent different hops respectively, that is, the PRBs being mapped to on the slots corresponding to #1 and #2 are different.

Example 2: in case that one SRS port is mapped to 8 slots, including 4 hops, the frequency hopping pattern on the 8 slots is: #1#2#3#4#1#2#3#4, where #1, #2, #3 and #4 represent different hops respectively.

Example 3: in case that one SRS port is mapped to 8 slots, including 2 hops, the frequency hopping pattern on the 8 slots is: #1#2#1#2#1#2#1#2.

Scheme b (sequential mapping): among multiple slots to which one SRS port is mapped, a first hop of the SRS port is mapped to a first slot and a second slot, a second hop of the SRS port is mapped to a third slot and a fourth slot, and so on, until all hops are mapped, a same frequency hopping pattern continues to a remaining slot.

Example 1: in case that one SRS port is mapped to 4 slots, including 2 hops, the frequency hopping pattern on the 4 slots is: #1#1#2#2, where #1 and #2 represent different hops respectively, that is, the PRBs being mapped to on the slots corresponding to #1 and #2 are different.

Example 2: in case that one SRS port is mapped to 8 slots, including 4 hops, the frequency hopping pattern on the 8 slots is: #1#1#2#2#3#3#4#4, where #1, #2, #3 and #4 represent different hops respectively.

Example 3: in case that one SRS port is mapped to 8 slots, including 2 hops, the frequency hopping pattern on the 8 slots is: #1#1#2#2#1#1#2#2.

Scheme c (each hop is mapped to R adjacent slots): among multiple slots to which one SRS port is mapped, a first hop of the SRS port is mapped to first R slots, a second hop of the SRS port is mapped to (R+1)-th to (2*R)-th slots, and so on, until all hops are mapped, a same frequency hopping pattern continues to a remaining slot. That is, each hop is mapped to an adjacent slot of the slot to which the SRS port is mapped (adjacent transmission occasion of a transmission occasion corresponding to the SRS port).

Example 1: in case that one SRS port is mapped to 4 slots, including 2 hops, the frequency hopping pattern on the 4 slots is: #1#1#2#2, where #1 and #2 represent different hops respectively.

Example 2: in case that one SRS port is mapped to 8 slots, including 4 hops, the frequency hopping pattern on the 8 slots is: #1#1#2#2#3#3#4#4, where #1, #2, #3 and #4 represent different hops respectively.

Example 3: in case that one SRS port is mapped to 8 slots, including 2 hops, the frequency hopping pattern on the 8 slots is: #1#1#1#1#2#2#2#2.

In some embodiments, all SRS ports in the SRS resource are mapped to the same slot.

In some embodiments, at least part of SRS ports in the SRS resource are mapped to different slots.

In some embodiments, a base station configures a frequency hopping mode of the SRS resource, where the frequency hopping mode indicates at least one of the above scheme a, scheme b, or scheme c.

In some embodiments, in case that the SRS resource performs inter-slot frequency hopping and a number of hops of one SRS port is equal to the number of slots to which the SRS port is mapped, the frequency hopping mode in scheme a is always adopted; and in case that the SRS resource performs inter-slot frequency hopping and the number of hops of one SRS port is less than the number of slots to which the SRS port is mapped, the mapping method is determined based on the frequency hopping mode configured by the base station.

The above schemes may be used in combination.

M is a positive integer.

In some embodiments, M is a value agreed by a protocol, or is determined based on indication information sent from a base station.

In some embodiments, M being the value agreed by the protocol includes M is a value determined based on a rule agreed by the protocol.

A method for determining M is as follows.

(1) M is determined based on a number $N_{ap}^s$ of SRS ports included in one OFDM symbol (or a positive integer agreed by the protocol) and a number $N_{ap}$ of ports included in the SRS resource. In some embodiments, M is a ratio of $N_{ap}$ to $N_{ap}^s$, that is,

$$M = \frac{N_{ap}}{N_{ap}^s}.$$

(2) M is determined based on OFDM symbols $N_s$ occupied by the SRS resource within one slot, a repetition factor $R$ and a number $N_{hop}$ of frequency hoppings of the SRS port within one slot (or, a positive integer agreed by the protocol). In some embodiments, $M$ is a ratio of $N_s$ to $R * N_{hop}$, where $R * N_{hop}$ represents a product of $N_s^{ap}$ and $R$, that is,

$$M = \frac{N_s}{R * N_{hop}}.$$

(3) M is determined based on OFDM symbols $N_s$ occupied by the SRS resource within one slot and a number $N_s^{ap}$ of OFDM symbols to which one SRS port is mapped within one slot. In some embodiments, M is a ratio of $N_s$ to $N_s^{ap}$, that is,

$$M = \frac{N_s}{N_s^{ap}},$$

where $N_s^{ap}$ is a positive integer.

In some embodiments, the value of $N_s^{ap}$ is agreed by the protocol, or is a value determined based on indication information sent from the base station.

In some embodiments, $N_s^{ap}$ being the value agreed by the protocol includes $N_s^{ap}$ is a value determined based on a rule agreed by the protocol.

A method for determining $N_s^{ap}$ is as follows.

(1) $N_s^{ap}$ is determined based on a number $N_{ap}^s$ of SRS ports included in one OFDM symbol (or a positive integer agreed by the protocol) and OFDM symbols $N_s$ occupied by the SRS resource within one slot and a number $N_{ap}$ of ports included in the SRS resource. In some embodiments, $N_s^{ap}$ is a ratio of $N_{ap}^s * N_s$ to $N_{ap}$, that is,

$$N_s^{ap} = \frac{N_{ap}^s * N_s}{N_{ap}},$$

where $N_{ap}^s * N_s$ represents a product of $N_{ap}^s$ and $N_s$.

(2) $N_s^{ap}$ is determined based on a repetition factor R and a number $N_{hop}$ of frequency hoppings of the SRS port within one slot (or, a positive integer agreed by the protocol). In some embodiments, $N_s^{ap}$ is a product of $R$ and $N_{hop}$, that is,

$$N_s^{ap} = R * N_{hop}.$$

(3) $N_s^{ap}$ is determined based on OFDM symbols $N_s$ occupied by the SRS resource within one slot and a value $M$ agreed by the protocol. In some embodiments, $N_s^{ap}$ is a ratio of $N_s$ to $M$, that is,

$$N_s^{ap} = \frac{N_s}{M},$$

where $N_{ap}^s$ is a positive integer.

In some embodiments, $N_{ap}^s$ is a value agreed by the protocol, or is a value determined based on indication information sent from the base station.

In some embodiments, $N_{ap}^s$ being the value agreed by the protocol includes $N_{ap}^s$ is a value determined based on a rule agreed by the protocol.

A method for determining $N_{ap}^s$ is as follows.

(1) $N_{ap}^s$ is determined based on a number $N_{ap}$ of ports included in the SRS resource and a value M agreed by the protocol. In some embodiments, $N_{ap}^s$ is a ratio of $N_{ap}$ to M, that is,

$$N_{ap}^s = \frac{N_{ap}}{M}.$$

(2) $N_{ap}^s$ is determined based on OFDM symbols $N_s$ occupied by the SRS resource within one slot, a repetition factor $R$, a number $N_{ap}$ of ports included in the SRS resource, and a number $N_{hop}$ of frequency hoppings of the SRS port within one slot (or, a positive integer agreed by the protocol). In some embodiments, $N_{ap}^s$ is a ratio of $N_{ap} * R * N_{hop}$ to $N_s$, that is,

$$N_{ap}^s = \frac{N_{ap} * R * N_{hop}}{N_s},$$

where $N_{ap} * R * N_{hop}$ represents a product of $N_{ap}$, R and $N_{hop}$.

(3) $N_{ap}^s$ is determined based on OFDM symbols $N_s$ occupied by the SRS resource within one slot, a number $N_{ap}$ of ports included in the SRS resource, and a number $N_s^{ap}$ of OFDM symbols to which one SRS port is mapped within one slot. In some embodiments, $N_{ap}^s$ is a ratio of $N_{ap} * N_s^{ap}$ to $N_s$, that is,

$$N_{ap}^s = \frac{N_{ap} * N_s^{ap}}{N_s},$$

where $N_{ap} * N_s^{ap}$ represents a product of $N_{ap}$ and $N_s^{ap}$.

Embodiment 2: a scheme that some SRS ports of an SRS resource are mapped to one number of OFDM symbols, and some SRS ports are mapped to another number of OFDM symbols.

(Similar to the previous scheme where all ports are mapped to the same number of symbols, the difference is that $N_s$ is not required to be divisible by M, and $N_{ap}^s * N_s$ is not required to be divisible by $N_{ap}$. $\lfloor . \rfloor$ refers to an operation of round down, and $\lceil . \rceil$ indicates an operation of round up.)

Scheme 1: at least part of SRS ports of an SRS resource are mapped to $\left\lfloor \frac{N_s}{M} \right\rfloor / \left\lceil \frac{N_{ap}^s * N_s}{N_{ap}} \right\rceil$ OFDM symbols within one slot, and are mapped to the same subcarrier set on $\left\lfloor \frac{N_s}{M} \right\rfloor / \left\lceil \frac{N_{ap}^s * N_s}{N_{ap}} \right\rceil$ OFDM symbols.

In some embodiments, at least part of SRS ports of the SRS resource are mapped to

$$N_s - (M-1)\left\lfloor\frac{N_s}{M}\right\rfloor / N_s - \left(\frac{N_{ap}}{N_{ap}^s}-1\right)\left\lceil\frac{N_{ap}^s*N_s}{N_{ap}}\right\rceil \quad \text{OFDM}$$

symbols within one slot, and are mapped to the same subcarrier set on these OFDM symbols. $N_{ap}$ may be divisible by $N_{ap}^s$ .

Scheme 2: at least part of SRS ports of an SRS resource are mapped to $\left\lfloor\frac{N_s}{M}\right\rfloor / \left\lceil\frac{N_{ap}^s*N_s}{N_{ap}}\right\rceil$ OFDM symbols within one slot, and are mapped to different PRB sets on $\left\lfloor\frac{N_s}{M}\right\rfloor / \left\lceil\frac{N_{ap}^s*N_s}{N_{ap}}\right\rceil$ different OFDM symbols.

In some embodiments, at least part of SRS ports of the SRS resource are mapped to $$N_s - (M-1)\left\lfloor\frac{N_s}{M}\right\rfloor / N_s - \left(\frac{N_{ap}}{N_{ap}^s}-1\right)\left\lceil\frac{N_{ap}^s*N_s}{N_{ap}}\right\rceil \quad \text{OFDM}$$ symbols within one slot, and are mapped to different PRB sets on different OFDM symbols in these OFDM symbols. $N_{ap}$ may be divisible by $N_{ap}^s$ .

In some embodiments, each SRS port of the SRS resource is mapped to the same number of PRBs on each OFDM symbol. That is, one SRS port of the SRS resource is mapped to the same number of PRBs in each hop. For example, a ratio of a number of PRBs included in a hopping bandwidth to a number of PRBs to which each SRS port is mapped on each OFDM symbol is $\left\lfloor\frac{N_s}{M}\right\rfloor/N_s^{ap} / \left\lceil\frac{N_{ap}^s*N_s}{N_{ap}}\right\rceil / (R*N_{hop})$ .

It is assumed that a number of PRBs included in a hopping bandwidth of the SRS resource is $N_{PRB}$. In some embodiments, a number of PRBs to which each SRS port of the SRS resource is mapped on a part of the OFDM symbol is $\frac{N_{PRB}}{\left\lfloor\frac{N_s}{M}\right\rfloor}$ (i.e., a number of PRBs for a part of hops of each SRS port of the SRS resource is $\frac{N_{PRB}}{\left\lfloor\frac{N_s}{M}\right\rfloor}$). In some embodiments, a number of PRBs to which each SRS port of the SRS resource is mapped on a part of the OFDM symbol is $\frac{N_{PRB}}{\left\lfloor\frac{N_s}{M}\right\rfloor}$ (i.e., a number of PRBs for a part of hops of each SRS port of the SRS resource is $\frac{N_{PRB}}{\left\lfloor\frac{N_s}{M}\right\rfloor}$).

Scheme 3: at least part of SRS ports of an SRS resource are mapped to $\left\lfloor\frac{N_s}{M}\right\rfloor / \left\lceil\frac{N_{ap}^s*N_s}{N_{ap}}\right\rceil$ OFDM symbols within one slot, and are mapped to different PRB sets on $\left\lfloor\frac{N_s}{M}\right\rfloor / \left\lceil\frac{N_{ap}^s*N_s}{N_{ap}}\right\rceil$ different OFDM symbols.

In some embodiments, at least part of SRS ports of the SRS resource are mapped to $$N_s - (M-1)\left\lfloor\frac{N_s}{M}\right\rfloor / N_s - \left(\frac{N_{ap}}{N_{ap}^s}-1\right)\left\lceil\frac{N_{ap}^s*N_s}{N_{ap}}\right\rceil \quad \text{OFDM}$$

symbols within one slot, and are mapped to different PRB sets on different OFDM symbols in these OFDM symbols. $N_{ap}$ may be divisible by $N_{ap}^s$ .

Each SRS port of the SRS resource is mapped to $\left\lfloor\frac{N_s}{M}\right\rfloor / \left\lceil\frac{N_{ap}^s*N_s}{N_{ap}}\right\rceil$ OFDM symbols within one slot, where the $\left\lfloor\frac{N_s}{M}\right\rfloor / \left\lceil\frac{N_{ap}^s*N_s}{N_{ap}}\right\rceil$ symbols include (i.e., are divided into) $\frac{\left\lfloor\frac{N_s}{M}\right\rfloor}{R} / \frac{\left\lceil\frac{N_{ap}^s*N_s}{N_{ap}}\right\rceil}{R}$ groups (sets), each group has R symbols, each SRS port of the SRS resource is mapped to different PRB sets on different symbol groups, and each SRS port is mapped to the same subcarrier on R symbols of the same group. $\left\lceil\frac{N_{ap}^s*N_s}{N_{ap}}\right\rceil$ may be divisible by R. $\left\lfloor\frac{N_s}{M}\right\rfloor$ may be divisible by R.

Scheme 4: each SRS port of an SRS resource is mapped to $\left\lfloor\frac{N_s}{M}\right\rfloor / \left\lceil\frac{N_{ap}^s*N_s}{N_{ap}}\right\rceil$ OFDM symbols within each slot, and is mapped to the same subcarrier set. In some embodiments, a ratio of a number of PRBs included in a hopping bandwidth to a number of PRBs to which each SRS port is mapped on each OFDM symbol is $\left\lfloor\frac{N_s}{M}\right\rfloor$ .

Embodiment 3: a network device configures a number of antenna port groups included in an SRS resource, or a number of third time unit groups to which all antenna ports of the SRS resource are mapped, or a minimum number of third time units required for all antenna ports of the SRS resource being mapped once, and adopts a third frequency hopping mode for frequency hopping.

In case that R = 1, each SRS port of the SRS resource is mapped to different PRB sets on $\frac{N_s}{M}$ different OFDM symbols. In some embodiments, each SRS port of the SRS resource is mapped to the same number of PRBs on each OFDM symbol. For example, a ratio of a number of PRBs to which each SRS port is mapped on each OFDM symbol to a number of PRBs included in a hopping bandwidth is $\frac{M}{N_s}$ .

In case that $R \ge 2$, $\frac{N_s}{M}$ symbols include (i.e., are divided into) $\frac{N_s}{MR}$ groups, each group has R adjacent symbols, each SRS port is mapped to different PRB sets on different symbol groups, and each SRS port is mapped to the same subcarrier on the R adjacent symbols in the same group. $N_s$ may be divisible by R.

For an aperiodic SRS resource, in case that frequency hopping is not configured or $R = \frac{N_s}{M}$ , each SRS port of the SRS resource is mapped to $\frac{N_S}{M}$ adjacent OFDM symbols within one slot, and is mapped to the same subcarrier set on $\frac{N_S}{M}$ adjacent OFDM symbols. In some embodiments, the subcarrier set is a set consisting of subcarriers on all PRBs of the full hopping bandwidth (not necessarily all subcarriers, but may be a part of subcarriers). Subcarrier sets to which each SRS port of the SRS resource is mapped may be determined based on a frequency domain offset parameter configured by a base station for the SRS resource.

For a periodic SRS resource or a semi-persistent SRS resource, for $\frac{N_S}{M} = R$ , in case that frequency hopping is configured (or inter-slot frequency hopping is configured), each SRS port of the SRS resource is mapped to $R$ adjacent OFDM symbols within each slot, and is mapped to the same subcarrier set. A ratio of a number of PRBs to which each SRS port is mapped on each OFDM symbol to a number of PRBs included in a hopping bandwidth is $\frac{M}{N_S}$ .

The methods and apparatuses provided by various embodiments of the present application are based on the same concept. Since the methods and apparatuses solve problems based on similar principles, the implementation of the apparatuses and methods may refer to each other, and the repetitions are not repeated.

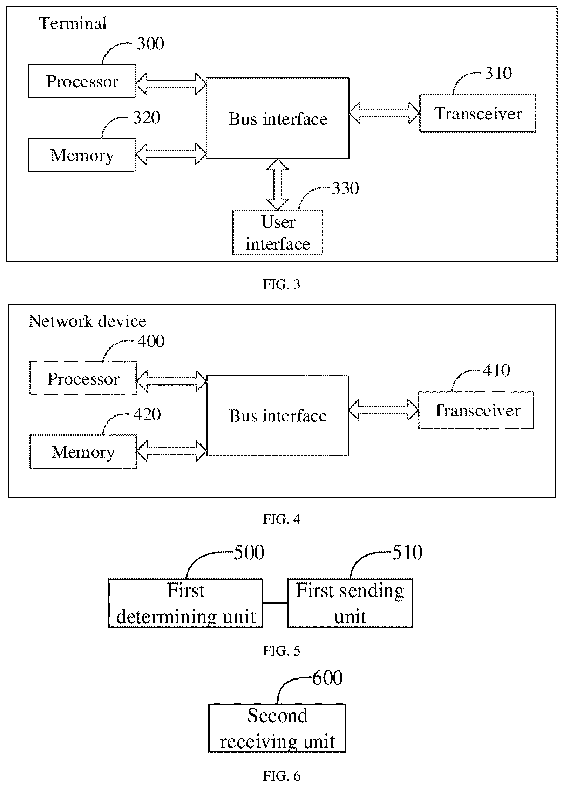

FIG. 3 is a schematic structural diagram of a terminal according to an embodiment of the present application. As shown in FIG. 3, the terminal includes a memory 320, a transceiver 310 and a processor 300, where the processor 300 and the memory 320 may also be arranged physically separately.

The memory 320 is used for storing a computer program, and the transceiver 310 is used for receiving and sending data under control of the processor 300.

In some embodiments, the transceiver 310 is used for receiving and sending data under control of the processor 300.

In FIG. 3, a bus architecture may include any number of interconnected buses and bridges, which are linked together through various circuits of one or more processors represented by the processor 300 and one or more memories represented by the memory 320. The bus architecture may also link together various other circuits, such as peripherals, voltage regulators, and power management circuits, etc., which are well known in the art, and therefore are not further described in the present application. The bus interface provides an interface. The transceiver 310 may include multiple elements, i.e., including a transmitter and a receiver, units for providing communication with various other devices over transmission media including wireless channels, wired channels, fiber optic cables, and the like. For different user devices, a user interface 330 may be an interface capable of externally or internally connecting the required equipment, and the connected equipment includes, but not limited to, a small keypad, a display, a speaker, a microphone, a joystick, and the like.

The processor 300 is responsible for managing the bus architecture and general processing, and the memory 320 may store data used by the processor 300 when performing operations.

The processor 300 may be a central processing unit (CPU), an application specific integrated circuit (ASIC), a field-programmable gate array (FPGA), or a complex programmable logic device (CPLD), the processor may also use a multi-core architecture.

The processor 300 is used for performing any method performed by the terminal provided by the embodiments of the present application according to an obtained executable instruction by calling the computer program stored in the memory 320, for example: determining, based on first information, a time domain resource and/or a frequency domain resource to which multiple antenna ports of a sounding reference signal (SRS) resource are mapped, where at least two antenna ports among the multiple antenna ports of the SRS resource are mapped to different time domain resources; and

sending, based on the time domain resource and/or the frequency domain resource, an SRS corresponding to the SRS resource to a network device, where the first information includes one or more of:

a number of antenna ports of the SRS resource; or

a number of second time units occupied by the SRS resource within a single first time unit; or

a repetition factor of the SRS resource; or

a number of SRS antenna ports mapped on a single third time unit, or a number of SRS antenna ports respectively mapped on multiple third time units; or

a number of antenna ports of the SRS resource mapped on a single third time unit, or a number of antenna ports of the SRS resource respectively mapped on multiple third time units; or

a number of second time units to which a single antenna port of the SRS resource is mapped within a single first time unit, or a number of second time units to which multiple antenna ports of the SRS resource are respectively mapped within a single first time unit; or

a number of antenna port groups included in the SRS resource; or

a number of third time unit groups to which all antenna ports of the SRS resource are mapped; or

a minimum number of third time units required for all antenna ports of the SRS resource being mapped once; or

a number of frequency hops of a single antenna port of the SRS resource within a single third time unit, or a number of frequency hops of multiple antenna ports of the SRS resource within a single third time unit respectively; or
a number of frequency hops included in a single frequency hopping period of the SRS resource; or
a second time unit to which one or more antenna ports of the SRS resource are mapped within a single first time unit.

In some embodiments, a number of second time units to which each antenna port of the SRS resource is mapped within a single first time unit is the same.

In some embodiments, the number of second time units to which each antenna port of the SRS resource is mapped within a single first time unit is a first value, and the first value is any of:

a value determined based on the number of second time units occupied by the SRS resource within a single first time unit and the number of third time unit groups to which all antenna ports of the SRS resource are mapped; or
a value determined based on the number of second time units occupied by the SRS resource within a single first time unit and the minimum number of third time units required for all antenna ports of the SRS resource being mapped once; or
a value determined based on the number of second time units occupied by the SRS resource within a single first time unit and a value agreed by a protocol; or
the number of second time units to which a single antenna port of the SRS resource is mapped within a single first time unit; or
a value determined based on the number of second time units to which multiple antenna ports of the SRS resource are respectively mapped within a single first time unit; or
a value agreed by a protocol; or
a value determined based on the number of SRS antenna ports mapped on a single third time unit, the number of second time units occupied by the SRS resource within a single first time unit, and the number of antenna ports of the SRS resource; or
a value determined based on the number of SRS antenna ports respectively mapped on multiple third time units, the number of second time units occupied by the SRS resource within a single first time unit, and the number of antenna ports of the SRS resource; or
a value determined based on the number of antenna ports of the SRS resource mapped on a single third time unit, the number of second time units occupied by the SRS resource within a single first time unit, and the number of antenna ports of the SRS resource; or
a value determined based on the number of antenna ports of the SRS resource respectively mapped on multiple third time units, the number of second time units occupied by the SRS resource within a single first time unit, and the number of antenna ports of the SRS resource; or
a value determined based on a value agreed by a protocol, the number of second time units occupied by the SRS resource within a single first time unit, and the number of antenna ports of the SRS resource; or
a value determined based on the repetition factor of the SRS resource and the number of frequency hops of a single antenna port of the SRS resource within a single third time unit; or
a value determined based on the repetition factor of the SRS resource and the number of frequency hops of multiple antenna ports of the SRS resource within a single third time unit respectively; or
a value determined based on the repetition factor of the SRS resource and the number of frequency hops included in a single frequency hopping period of the SRS resource; or
a value determined based on the repetition factor of the SRS resource and a value agreed by a protocol.

In some embodiments, at least two antenna ports of the SRS resource are mapped to different numbers of second time units within a single first time unit.

In some embodiments, a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or
a value determined based on the number of second time units occupied by the SRS resource within a single first time unit and the minimum number of third time units required for all antenna ports of the SRS resource being mapped once; or
a value determined based on the number of second time units occupied by the SRS resource within a single first time unit and a value agreed by a protocol; or
a value determined based on the number of SRS antenna ports mapped on a single third time unit, the number of second time units occupied by the SRS resource within a single first time unit, and the number of antenna ports of the SRS resource; or
a value determined based on the number of SRS antenna ports respectively mapped on multiple third time units, the number of second time units occupied by the SRS resource within a single first time unit,

and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops included in a single frequency hopping period of the SRS resource; or

a value determined based on the repetition factor of the SRS resource and a value agreed by a protocol.

In some embodiments, a number of second time units to which a second part of antenna ports of the SRS resource are mapped within a single first time unit is a third value, and the third value is any of:

a value determined based on the number of second time units occupied by the SRS resource within a single first time unit, the number of antenna port groups included in the SRS resource, and the second value; or

a value determined based on the number of second time units occupied by the SRS resource within a single first time unit, the number of third time unit groups to which all antenna ports of the SRS resource are mapped, and the second value; or

a value determined based on the number of second time units occupied by the SRS resource within a single first time unit, the minimum number of third time units required for all antenna ports of the SRS resource being mapped once, and the second value; or

a value determined based on the number of second time units occupied by the SRS resource within a single first time unit, the number of antenna ports of the SRS resource, the number of SRS antenna ports mapped on a single third time unit, and the second value; or

a value determined based on the number of second time units occupied by the SRS resource within a single first time unit, the number of antenna ports of the SRS resource, the number of SRS antenna ports respectively mapped on multiple third time units, and the second value; or

a value determined based on the number of second time units occupied by the SRS resource within a single first time unit, the number of antenna ports of the SRS resource, the number of antenna ports of the SRS resource mapped on a single third time unit, and the second value; or

a value determined based on the number of second time units occupied by the SRS resource within a single first time unit, the number of antenna ports of the SRS resource, the number of antenna ports of the SRS resource respectively mapped on multiple third time units, and the second value.

In some embodiments, a first antenna port of the SRS resource is mapped to a same set of frequency domain units on all second time units being mapped to within a single first time unit.

In some embodiments, a first antenna port of the SRS resource is mapped to different sets of frequency domain units on different second time units being mapped to within a single first time unit.

In some embodiments, all second time units to which a first antenna port of the SRS resource is mapped within a single first time unit are divided into multiple symbol groups, each symbol group includes R second time units, and the first antenna port is mapped to different sets of frequency domain units on different symbol groups, and is mapped to a same set of frequency domain units on R second time units within a same symbol group, where R is a value of the repetition factor of the SRS resource.

In some embodiments, the same set of frequency domain units is a set consisting of frequency domain units included in a full hopping bandwidth of the SRS resource.

In some embodiments, the first antenna port of the SRS resource is mapped to different sets of frequency domain units on multiple first time units, and is mapped to the same set of frequency domain units on all second time units being mapped to within the same first time unit.

In some embodiments, the different sets of frequency domain units include a same number of frequency domain units.

In some embodiments, a number of frequency domain units included in any set of frequency domain units is equal to a ratio of a number of frequency domain units included in a full hopping bandwidth of the SRS resource to a number of second time units to which the first antenna port is mapped within a single first time unit.

In some embodiments, the SRS resource is not configured for performing frequency hopping transmission, and/or a value of the repetition factor of the SRS resource is equal to the number of second time units occupied by the SRS resource within a single first time unit.

In some embodiments, the SRS resource is configured for performing frequency hopping transmission, and a value of the repetition factor of the SRS resource is equal to a number of second time units to which the first antenna port is mapped within a single first time unit.

In some embodiments, the SRS resource is configured for performing frequency hopping transmission, and/or a value of the repetition factor of the SRS resource is 1.

In some embodiments, the SRS resource is configured for performing frequency hopping transmission, and/or a value of the repetition factor of the SRS resource is greater than or equal to 2.

In some embodiments, a frequency hopping mode used by a frequency domain resource to which a first antenna port of the SRS resource is mapped is a first frequency hopping mode, a second frequency hopping mode, or a third frequency hopping mode,

where the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;

the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and

the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, where R is a value of the repetition factor of the SRS resource.

In some embodiments, the number of antenna port groups included in the SRS resource, or the number of third time unit groups to which all antenna ports of the SRS resource are mapped, or the minimum number of third time units required for all antenna ports of the SRS resource being mapped once, is determined based on any of:

the number of antenna ports of the SRS resource and the number of SRS antenna ports mapped on a single third time unit; or

the number of antenna ports of the SRS resource and the number of SRS antenna ports respectively mapped on multiple third time units; or

the number of antenna ports of the SRS resource and the number of antenna ports of the SRS resource mapped on a single third time unit; or

the number of antenna ports of the SRS resource and the number of antenna ports of the SRS resource respectively mapped on multiple third time units; or

the number of second time units occupied by the SRS resource within a single first time unit, the repetition factor of the SRS resource, and the number of frequency hops of a single antenna port of the SRS resource within a single third time unit; or

the number of second time units occupied by the SRS resource within a single first time unit, the repetition factor of the SRS resource, and the number of frequency hops of multiple antenna ports of the SRS resource within a single third time unit respectively; or

the number of second time units occupied by the SRS resource within a single first time unit, the repetition factor of the SRS resource, and the number of frequency hops included in a single frequency hopping period of the SRS resource; or

the number of second time units occupied by the SRS resource within a single first time unit and the number of second time units to which a single antenna port of the SRS resource is mapped within a single first time unit; or

the number of second time units occupied by the SRS resource within a single first time unit and the number of second time units to which multiple antenna ports of the SRS resource are respectively mapped within a single first time unit.

In some embodiments, the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or

the number of second time units occupied by the SRS resource within a single first time unit, the number of antenna ports of the SRS resource, and the number of SRS antenna ports respectively mapped on multiple third time units; or

the number of antenna ports of the SRS resource mapped on a single third time unit, the number of second time units occupied by the SRS resource within a single first time unit, and the number of antenna ports of the SRS resource; or

the number of antenna ports of the SRS resource respectively mapped on multiple third time units, the number of second time units occupied by the SRS resource within a single first time unit, and the number of antenna ports of the SRS resource; or

the repetition factor of the SRS resource and the number of frequency hops of a single antenna port of the SRS resource within a single third time unit; or

the repetition factor of the SRS resource and the number of frequency hops of multiple antenna ports of the SRS resource within a single third time unit respectively; or

the repetition factor of the SRS resource and the number of frequency hops included in a single frequency hopping period of the SRS resource; or

the number of second time units occupied by the SRS resource within a single first time unit and the number of third time unit groups to which all antenna ports of the SRS resource are mapped; or

the number of second time units occupied by the SRS resource within a single first time unit and the minimum number of third time units required for all antenna ports of the SRS resource being mapped once.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource and the number of antenna port groups included in the SRS resource; or

the number of antenna ports of the SRS resource and the number of third time unit groups to which all antenna ports of the SRS resource are mapped; or

the number of antenna ports of the SRS resource and the minimum number of third time units required for all antenna ports of the SRS resource being mapped once; or

the number of second time units occupied by the SRS resource within a single first time unit, the number of antenna ports of the SRS resource, the repetition factor of the SRS resource, and the number of frequency hops of a single antenna port of the SRS resource within a single third time unit; or

the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or

the number of second time units occupied by the SRS resource within a single first time unit, the number of antenna ports of the SRS resource, the repetition factor of the SRS resource, and the number of frequency hops included in a single frequency hopping period of the SRS resource; or

the number of second time units occupied by the SRS resource within a single first time unit, the number of antenna ports of the SRS resource, and the number of second time units to which a single antenna port of the SRS resource is mapped within a single first time unit; or

the number of second time units occupied by the SRS resource within a single first time unit, the number of antenna ports of the SRS resource, and the number of second time units to which multiple antenna ports of the SRS resource are respectively mapped within a single first time unit.

In some embodiments, determining, based on the first information, the time domain resource and/or the frequency domain resource to which multiple antenna ports of the SRS resource are mapped includes:

based on the number of antenna ports of the SRS resource and/or indication information sent from the network device, determining, based on the first information, the time domain resource and/or the frequency domain resource to which multiple antenna ports of the SRS resource are mapped.

In some embodiments, the method further includes:

receiving second information sent from the network device, where the second information is used to indicate one or more items of the first information.

FIG. 4 is a schematic structural diagram of a network device according to an embodiment of the present application. As shown in FIG. 4, the network device includes a memory 420, a transceiver 410, and a processor 400, where the processor 400 and the memory 420 may also be arranged physically separately.

The memory 420 is used for storing a computer program, the transceiver 410 is used for receiving and sending data under control of the processor 400.

In some embodiments, the transceiver 410 is used for receiving and sending data under control of the processor 400.

In FIG. 4, a bus architecture may include any number of interconnected buses and bridges, which are linked together through various circuits of one or more processors represented by the processor 400 and one or more memories represented by the memory 420. The bus architecture may also link together various other circuits, such as peripherals, voltage regulators, and power management circuits, etc., which are well known in the art, and therefore are not further described in the present application. A bus interface provides an interface. The transceiver 410 may include multiple elements, i.e., including a transmitter and a receiver, units for providing communication with various other devices over transmission media including wireless channels, wired channels, fiber optic cables, and the like.

The processor 400 is responsible for managing the bus architecture and general processing, and the memory 420 may store data used by the processor 400 when performing operations.

The processor 400 may be a CPU, an ASIC, an FPGA, or a CPLD, the processor 420 may also use a multi-core architecture.

The processor 400 is used for performing any method performed by the network device provided by the embodiments of the present application according to an obtained executable instruction by calling the computer program stored in the memory 420, for example: receiving, based on a time domain resource and/or a frequency domain resource to which multiple antenna ports of a sounding reference signal (SRS) resource are mapped, an SRS corresponding to the SRS resource sent from a terminal, where the time domain resource and/or the frequency domain resource is determined based on first information, or the time domain resource and/or the frequency domain resource is used to determine second information, and the second information is used to indicate one or more items of the first information,

> where among the multiple antenna ports of the SRS resource, at least two antenna ports are mapped to different time units; and
> where the first information includes one or more of:
>
> > a number of antenna ports of the SRS resource; or
> > a number of second time units occupied by the SRS resource within a single first time unit; or
> > a repetition factor of the SRS resource; or
> > a number of SRS antenna ports mapped on a single third time unit, or a number of SRS antenna ports respectively mapped on multiple third time units; or
> > a number of antenna ports of the SRS resource mapped on a single third time unit, or a number of antenna ports of the SRS resource respectively mapped on multiple third time units; or
> > a number of second time units to which a single antenna port of the SRS resource is mapped within a single first time unit, or a number of second time units to which multiple antenna ports of the SRS resource are respectively mapped within a single first time unit; or
a number of antenna port groups included in the SRS resource; or
a number of third time unit groups to which all antenna ports of the SRS resource are mapped; or
a minimum number of third time units required for all antenna ports of the SRS resource being mapped once; or
a number of frequency hops of a single antenna port of the SRS resource within a single third time unit, or a number of frequency hops of multiple antenna ports of the SRS resource within a single third time unit respectively; or
a number of frequency hops included in a single frequency hopping period of the SRS resource; or
a second time unit to which one or more antenna ports of the SRS resource are mapped within a single first time unit.

In some embodiments, a number of second time units to which each antenna port of the SRS resource is mapped within a single first time unit is the same.

In some embodiments, the number of second time units to which each antenna port of the SRS resource is mapped within a single first time unit is a first value, and the first value is any of:

> a value determined based on the number of second time units occupied by the SRS resource within a single first time unit and the number of third time unit groups to which all antenna ports of the SRS resource are mapped; or
> a value determined based on the number of second time units occupied by the SRS resource within a single first time unit and the minimum number of third time units required for all antenna ports of the SRS resource being mapped once; or
> a value determined based on the number of second time units occupied by the SRS resource within a single first time unit and a value agreed by a protocol; or
> the number of second time units to which a single antenna port of the SRS resource is mapped within a single first time unit; or
> a value determined based on the number of second time units to which multiple antenna ports of the SRS resource are respectively mapped within a single first time unit; or
> a value agreed by a protocol; or
> a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops included in a single frequency hopping period of the SRS resource; or

a value determined based on the repetition factor of the SRS resource and a value agreed by a protocol.

In some embodiments, at least two antenna ports of the SRS resource are mapped to different numbers of second time units within a single first time unit.

In some embodiments, a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops included in a single frequency hopping period of the SRS resource; or

a value determined based on the repetition factor of the SRS resource and a value agreed by a protocol.

In some embodiments, a number of second time units to which a second part of antenna ports of the SRS resource are mapped within a single first time unit is a third value, and the third value is any of:

a value determined based on the number of second time units occupied by the SRS resource within a single first time unit, the number of antenna port groups included in the SRS resource, and the second value; or

a value determined based on the number of second time units occupied by the SRS resource within a single first time unit, the number of third time unit groups to which all antenna ports of the SRS resource are mapped, and the second value; or

a value determined based on the number of second time units occupied by the SRS resource within a single first time unit, the minimum number of third time units required for all antenna ports of the SRS resource being mapped once, and the second value; or

a value determined based on the number of second time units occupied by the SRS resource within a single first time unit, the number of antenna ports of the SRS resource, the number of SRS antenna ports mapped on a single third time unit, and the second value; or

a value determined based on the number of second time units occupied by the SRS resource within a single first time unit, the number of antenna ports of the SRS resource, the number of SRS antenna ports respectively mapped on multiple third time units, and the second value; or

a value determined based on the number of second time units occupied by the SRS resource within a single first time unit, the number of antenna ports of the SRS resource, the number of antenna ports of the SRS resource mapped on a single third time unit, and the second value; or

a value determined based on the number of second time units occupied by the SRS resource within a single first time unit, the number of antenna ports of the SRS resource, the number of antenna ports of the SRS resource respectively mapped on multiple third time units, and the second value.

In some embodiments, a first antenna port of the SRS resource is mapped to a same set of frequency domain units on all second time units being mapped to within a single first time unit.

In some embodiments, a first antenna port of the SRS resource is mapped to different sets of frequency domain units on different second time units being mapped to within a single first time unit.

In some embodiments, all second time units to which a first antenna port of the SRS resource is mapped within a single first time unit are divided into multiple symbol groups, each symbol group includes R second time units, and the first antenna port is mapped to different sets of frequency domain units on different symbol groups, and is mapped to a same set of frequency domain units on R second time units within a same symbol group, where R is a value of the repetition factor of the SRS resource.

In some embodiments, the same set of frequency domain units is a set consisting of frequency domain units included in a full hopping bandwidth of the SRS resource.

In some embodiments, the first antenna port of the SRS resource is mapped to different sets of frequency domain units on multiple first time units, and is mapped to the same set of frequency domain units on all second time units being mapped to within the same first time unit.

In some embodiments, the different sets of frequency domain units include a same number of frequency domain units.

In some embodiments, a number of frequency domain units included in any set of frequency domain units is equal to a ratio of a number of frequency domain units included in a full hopping bandwidth of the SRS resource to a number of second time units to which the first antenna port is mapped within a single first time unit.

In some embodiments, the SRS resource is not configured for performing frequency hopping transmission, and/or a value of the repetition factor of the SRS resource is equal to the number of second time units occupied by the SRS resource within a single first time unit.

In some embodiments, the SRS resource is configured for performing frequency hopping transmission, and a value of the repetition factor of the SRS resource is equal to a number of second time units to which the first antenna port is mapped within a single first time unit.

In some embodiments, the SRS resource is configured for performing frequency hopping transmission, and/or a value of the repetition factor of the SRS resource is 1.

In some embodiments, the SRS resource is configured for performing frequency hopping transmission, and/or a value of the repetition factor of the SRS resource is greater than or equal to 2.

In some embodiments, a frequency hopping mode used by a frequency domain resource to which a first antenna port of the SRS resource is mapped is a first frequency hopping mode, a second frequency hopping mode, or a third frequency hopping mode,

where the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;

the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and

the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, where R is a value of the repetition factor of the SRS resource.

In some embodiments, the number of antenna port groups included in the SRS resource, or the number of third time unit groups to which all antenna ports of the SRS resource are mapped, or the minimum number of third time units required for all antenna ports of the SRS resource being mapped once, is determined based on any of:

the number of antenna ports of the SRS resource and the number of SRS antenna ports mapped on a single third time unit; or

the number of antenna ports of the SRS resource and the number of SRS antenna ports respectively mapped on multiple third time units; or

the number of antenna ports of the SRS resource and the number of antenna ports of the SRS resource mapped on a single third time unit; or

the number of antenna ports of the SRS resource and the number of antenna ports of the SRS resource respectively mapped on multiple third time units; or

the number of second time units occupied by the SRS resource within a single first time unit, the repetition factor of the SRS resource, and the number of frequency hops of a single antenna port of the SRS resource within a single third time unit; or

the number of second time units occupied by the SRS resource within a single first time unit, the repetition factor of the SRS resource, and the number of frequency hops of multiple antenna ports of the SRS resource within a single third time unit respectively; or

the number of second time units occupied by the SRS resource within a single first time unit, the repetition factor of the SRS resource, and the number of frequency hops included in a single frequency hopping period of the SRS resource; or

the number of second time units occupied by the SRS resource within a single first time unit and the number of second time units to which a single antenna port of the SRS resource is mapped within a single first time unit; or

the number of second time units occupied by the SRS resource within a single first time unit and the number of second time units to which multiple antenna ports of the SRS resource are respectively mapped within a single first time unit.

In some embodiments, the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or

the number of second time units occupied by the SRS resource within a single first time unit, the number of antenna ports of the SRS resource, and the number of SRS antenna ports respectively mapped on multiple third time units; or

the number of antenna ports of the SRS resource mapped on a single third time unit, the number of second time units occupied by the SRS resource within a single first time unit, and the number of antenna ports of the SRS resource; or

the number of antenna ports of the SRS resource respectively mapped on multiple third time units, the number of second time units occupied by the SRS resource within a single first time unit, and the number of antenna ports of the SRS resource; or

the repetition factor of the SRS resource and the number of frequency hops of a single antenna port of the SRS resource within a single third time unit; or

the repetition factor of the SRS resource and the number of frequency hops of multiple antenna ports of the SRS resource within a single third time unit respectively; or

the repetition factor of the SRS resource and the number of frequency hops included in a single frequency hopping period of the SRS resource; or

the number of second time units occupied by the SRS resource within a single first time unit and the number of third time unit groups to which all antenna ports of the SRS resource are mapped; or

the number of second time units occupied by the SRS resource within a single first time unit and the minimum number of third time units required for all antenna ports of the SRS resource being mapped once.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource

and the number of antenna port groups included in the SRS resource; or

the number of antenna ports of the SRS resource and the number of third time unit groups to which all antenna ports of the SRS resource are mapped; or

the number of antenna ports of the SRS resource and the minimum number of third time units required for all antenna ports of the SRS resource being mapped once; or

the number of second time units occupied by the SRS resource within a single first time unit, the number of antenna ports of the SRS resource, the repetition factor of the SRS resource, and the number of frequency hops of a single antenna port of the SRS resource within a single third time unit; or

the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or

the number of second time units occupied by the SRS resource within a single first time unit, the number of antenna ports of the SRS resource, the repetition factor of the SRS resource, and the number of frequency hops included in a single frequency hopping period of the SRS resource; or

the number of second time units occupied by the SRS resource within a single first time unit, the number of antenna ports of the SRS resource, and the number of second time units to which a single antenna port of the SRS resource is mapped within a single first time unit; or

the number of second time units occupied by the SRS resource within a single first time unit, the number of antenna ports of the SRS resource, and the number of second time units to which multiple antenna ports of the SRS resource are respectively mapped within a single first time unit.

In some embodiments, determining, based on the first information, the time domain resource and/or the frequency domain resource to which multiple antenna ports of the SRS resource are mapped includes:

based on the number of antenna ports of the SRS resource and/or indication information sent from the network device to the terminal, determining, based on the first information, the time domain resource and/or the frequency domain resource to which multiple antenna ports of the SRS resource are mapped.

In some embodiments, before receiving the SRS corresponding to the SRS resource sent from the terminal, the method further includes:

determining, based on the time domain resource and/or the frequency domain resource to which multiple antenna ports of the SRS resource are mapped, the second information; and
sending the second information to the terminal.

The above-mentioned terminal and network device provided by the embodiments of the present application may implement all the method steps implemented in the above-mentioned method embodiments, and may achieve the same effect. The parts and beneficial effects of the embodiments that are the same as the method embodiments are not described in detail here.

FIG. 5 is a first schematic structural diagram of an apparatus for SRS transmission according to an embodiment of the present application. As shown in FIG. 5, the apparatus includes:

a first determining unit 500, used for determining, based on first information, a time domain resource and/or a frequency domain resource to which multiple antenna ports of an SRS resource are mapped, where at least two antenna ports among the multiple antenna ports of the SRS resource are mapped to different time domain resources; and

a first sending unit 510, used for sending, based on the time domain resource and/or the frequency domain resource, an SRS corresponding to the SRS resource to a network device,

where the first information includes one or more of:

a number of antenna ports of the SRS resource; or

a number of second time units occupied by the SRS resource within a single first time unit; or

a repetition factor of the SRS resource; or

a number of SRS antenna ports mapped on a single third time unit, or a number of SRS antenna ports respectively mapped on multiple third time units; or

a number of antenna ports of the SRS resource mapped on a single third time unit, or a number of antenna ports of the SRS resource respectively mapped on multiple third time units; or

a number of second time units to which a single antenna port of the SRS resource is mapped within a single first time unit, or a number of second time units to which multiple antenna ports of the SRS resource are respectively mapped within a single first time unit; or

a number of antenna port groups included in the SRS resource; or

a number of third time unit groups to which all antenna ports of the SRS resource are mapped; or

a minimum number of third time units required for all antenna ports of the SRS resource being mapped once; or

a number of frequency hops of a single antenna port of the SRS resource within a single third time unit, or a number of frequency hops of multiple antenna ports of the SRS resource within a single third time unit respectively; or
a number of frequency hops included in a single frequency hopping period of the SRS resource; or
a second time unit to which one or more antenna ports of the SRS resource are mapped within a single first time unit.

In some embodiments, a number of second time units to which each antenna port of the SRS resource is mapped within a single first time unit is the same.

In some embodiments, the number of second time units to which each antenna port of the SRS resource is mapped within a single first time unit is a first value, and the first value is any of:

a value determined based on the number of second time units occupied by the SRS resource within a single first time unit and the number of third time unit groups to which all antenna ports of the SRS resource are mapped; or
a value determined based on the number of second time units occupied by the SRS resource within a single first time unit and the minimum number of third time units required for all antenna ports of the SRS resource being mapped once; or
a value determined based on the number of second time units occupied by the SRS resource within a single first time unit and a value agreed by a protocol; or
the number of second time units to which a single antenna port of the SRS resource is mapped within a single first time unit; or
a value determined based on the number of second time units to which multiple antenna ports of the SRS resource are respectively mapped within a single first time unit; or
a value agreed by a protocol; or
a value determined based on the number of SRS antenna ports mapped on a single third time unit, the number of second time units occupied by the SRS resource within a single first time unit, and the number of antenna ports of the SRS resource; or
a value determined based on the number of SRS antenna ports respectively mapped on multiple third time units, the number of second time units occupied by the SRS resource within a single first time unit, and the number of antenna ports of the SRS resource; or
a value determined based on the number of antenna ports of the SRS resource mapped on a single third time unit, the number of second time units occupied by the SRS resource within a single first time unit, and the number of antenna ports of the SRS resource; or
a value determined based on the number of antenna ports of the SRS resource respectively mapped on multiple third time units, the number of second time units occupied by the SRS resource within a single first time unit, and the number of antenna ports of the SRS resource; or
a value determined based on a value agreed by a protocol, the number of second time units occupied by the SRS resource within a single first time unit, and the number of antenna ports of the SRS resource; or
a value determined based on the repetition factor of the SRS resource and the number of frequency hops of a single antenna port of the SRS resource within a single third time unit; or
a value determined based on the repetition factor of the SRS resource and the number of frequency hops of multiple antenna ports of the SRS resource within a single third time unit respectively; or
a value determined based on the repetition factor of the SRS resource and the number of frequency hops included in a single frequency hopping period of the SRS resource; or
a value determined based on the repetition factor of the SRS resource and a value agreed by a protocol.

In some embodiments, at least two antenna ports of the SRS resource are mapped to different numbers of second time units within a single first time unit.

In some embodiments, a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or
a value determined based on the number of second time units occupied by the SRS resource within a single first time unit and the minimum number of third time units required for all antenna ports of the SRS resource being mapped once; or
a value determined based on the number of second time units occupied by the SRS resource within a single first time unit and a value agreed by a protocol; or
a value determined based on the number of SRS antenna ports mapped on a single third time unit, the number of second time units occupied by the SRS resource within a single first time unit, and the number of antenna ports of the SRS resource; or
a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops included in a single frequency hopping period of the SRS resource; or

a value determined based on the repetition factor of the SRS resource and a value agreed by a protocol.

In some embodiments, a number of second time units to which a second part of antenna ports of the SRS resource are mapped within a single first time unit is a third value, and the third value is any of:

a value determined based on the number of second time units occupied by the SRS resource within a single first time unit, the number of antenna port groups included in the SRS resource, and the second value; or

a value determined based on the number of second time units occupied by the SRS resource within a single first time unit, the number of third time unit groups to which all antenna ports of the SRS resource are mapped, and the second value; or

a value determined based on the number of second time units occupied by the SRS resource within a single first time unit, the minimum number of third time units required for all antenna ports of the SRS resource being mapped once, and the second value; or

a value determined based on the number of second time units occupied by the SRS resource within a single first time unit, the number of antenna ports of the SRS resource, the number of SRS antenna ports mapped on a single third time unit, and the second value; or

a value determined based on the number of second time units occupied by the SRS resource within a single first time unit, the number of antenna ports of the SRS resource, the number of SRS antenna ports respectively mapped on multiple third time units, and the second value; or

a value determined based on the number of second time units occupied by the SRS resource within a single first time unit, the number of antenna ports of the SRS resource, the number of antenna ports of the SRS resource mapped on a single third time unit, and the second value; or

a value determined based on the number of second time units occupied by the SRS resource within a single first time unit, the number of antenna ports of the SRS resource, the number of antenna ports of the SRS resource respectively mapped on multiple third time units, and the second value.

In some embodiments, a first antenna port of the SRS resource is mapped to a same set of frequency domain units on all second time units being mapped to within a single first time unit.

In some embodiments, a first antenna port of the SRS resource is mapped to different sets of frequency domain units on different second time units being mapped to within a single first time unit.

In some embodiments, all second time units to which a first antenna port of the SRS resource is mapped within a single first time unit are divided into multiple symbol groups, each symbol group includes R second time units, and the first antenna port is mapped to different sets of frequency domain units on different symbol groups, and is mapped to a same set of frequency domain units on R second time units within a same symbol group, where R is a value of the repetition factor of the SRS resource.

In some embodiments, the same set of frequency domain units is a set consisting of frequency domain units included in a full hopping bandwidth of the SRS resource.

In some embodiments, the first antenna port of the SRS resource is mapped to different sets of frequency domain units on multiple first time units, and is mapped to the same set of frequency domain units on all second time units being mapped to within the same first time unit.

In some embodiments, the different sets of frequency domain units include a same number of frequency domain units.

In some embodiments, a number of frequency domain units included in any set of frequency domain units is equal to a ratio of a number of frequency domain units included in a full hopping bandwidth of the SRS resource to a number of second time units to which the first antenna port is mapped within a single first time unit.

In some embodiments, the SRS resource is not configured for performing frequency hopping transmission, and/or a value of the repetition factor of the SRS resource is equal to the number of second time units occupied by the SRS resource within a single first time unit.

In some embodiments, the SRS resource is configured for performing frequency hopping transmission, and a value of the repetition factor of the SRS resource is equal to a number of second time units to which the first antenna port is mapped within a single first time unit.

In some embodiments, the SRS resource is configured for performing frequency hopping transmission, and/or a value of the repetition factor of the SRS resource is 1.

In some embodiments, the SRS resource is configured for performing frequency hopping transmission, and/or a value of the repetition factor of the SRS resource is greater than or equal to 2.

In some embodiments, a frequency hopping mode used by a frequency domain resource to which a first antenna port of the SRS resource is mapped is a first frequency hopping mode, a second frequency hopping mode, or a third frequency hopping mode,

where the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;

the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and

the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, where R is a value of the repetition factor of the SRS resource.

In some embodiments, the number of antenna port groups included in the SRS resource, or the number of third time unit groups to which all antenna ports of the SRS resource are mapped, or the minimum number of third time units required for all antenna ports of the SRS resource being mapped once, is determined based on any of:

the number of antenna ports of the SRS resource and the number of SRS antenna ports mapped on a single third time unit; or

the number of antenna ports of the SRS resource and the number of SRS antenna ports respectively mapped on multiple third time units; or

the number of antenna ports of the SRS resource and the number of antenna ports of the SRS resource mapped on a single third time unit; or

the number of antenna ports of the SRS resource and the number of antenna ports of the SRS resource respectively mapped on multiple third time units; or

the number of second time units occupied by the SRS resource within a single first time unit, the repetition factor of the SRS resource, and the number of frequency hops of a single antenna port of the SRS resource within a single third time unit; or

the number of second time units occupied by the SRS resource within a single first time unit, the repetition factor of the SRS resource, and the number of frequency hops of multiple antenna ports of the SRS resource within a single third time unit respectively; or

the number of second time units occupied by the SRS resource within a single first time unit, the repetition factor of the SRS resource, and the number of frequency hops included in a single frequency hopping period of the SRS resource; or

the number of second time units occupied by the SRS resource within a single first time unit and the number of second time units to which a single antenna port of the SRS resource is mapped within a single first time unit; or

the number of second time units occupied by the SRS resource within a single first time unit and the number of second time units to which multiple antenna ports of the SRS resource are respectively mapped within a single first time unit.

In some embodiments, the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or

the number of second time units occupied by the SRS resource within a single first time unit, the number of antenna ports of the SRS resource, and the number of SRS antenna ports respectively mapped on multiple third time units; or

the number of antenna ports of the SRS resource mapped on a single third time unit, the number of second time units occupied by the SRS resource within a single first time unit, and the number of antenna ports of the SRS resource; or

the number of antenna ports of the SRS resource respectively mapped on multiple third time units, the number of second time units occupied by the SRS resource within a single first time unit, and the number of antenna ports of the SRS resource; or

the repetition factor of the SRS resource and the number of frequency hops of a single antenna port of the SRS resource within a single third time unit; or

the repetition factor of the SRS resource and the number of frequency hops of multiple antenna ports of the SRS resource within a single third time unit respectively; or

the repetition factor of the SRS resource and the number of frequency hops included in a single frequency hopping period of the SRS resource; or

the number of second time units occupied by the SRS resource within a single first time unit and the number of third time unit groups to which all antenna ports of the SRS resource are mapped; or

the number of second time units occupied by the SRS resource within a single first time unit and the minimum number of third time units required for all antenna ports of the SRS resource being mapped once.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource and the number of antenna port groups included in the SRS resource; or

the number of antenna ports of the SRS resource and the number of third time unit groups to which all antenna ports of the SRS resource are mapped; or

the number of antenna ports of the SRS resource and the minimum number of third time units required for all antenna ports of the SRS resource being mapped once; or

the number of second time units occupied by the SRS resource within a single first time unit, the number of antenna ports of the SRS resource, the repetition factor of the SRS resource, and the number of frequency hops of a single antenna port of the SRS resource within a single third time unit; or

the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or

the number of second time units occupied by the SRS resource within a single first time unit, the number of antenna ports of the SRS resource, the repetition factor of the SRS resource, and the number of frequency hops included in a single frequency hopping period of the SRS resource; or

the number of second time units occupied by the SRS resource within a single first time unit, the number of antenna ports of the SRS resource, and the number of second time units to which a single antenna port of the SRS resource is mapped within a single first time unit; or

the number of second time units occupied by the SRS resource within a single first time unit, the number of antenna ports of the SRS resource, and the number of second time units to which multiple antenna ports of the SRS resource are respectively mapped within a single first time unit.

In some embodiments, determining, based on the first information, the time domain resource and/or the frequency domain resource to which multiple antenna ports of the SRS resource are mapped includes:

based on the number of antenna ports of the SRS resource and/or indication information sent from the network device, determining, based on the first information, the time domain resource and/or the frequency domain resource to which multiple antenna ports of the SRS resource are mapped.

In some embodiments, the apparatus further includes:

a first receiving unit, used for receiving second information sent from the network device, where the second information is used to indicate one or more items of the first information.

FIG. 6 is a second schematic structural diagram of an apparatus for SRS transmission according to an embodiment of the present application. As shown in FIG. 6, the apparatus includes:

a second receiving unit 600, used for receiving, based on a time domain resource and/or a frequency domain resource to which multiple antenna ports of a sounding reference signal (SRS) resource are mapped, an SRS corresponding to the SRS resource sent from a terminal, where the time domain resource and/or the frequency domain resource is determined based on first information, or the time domain resource and/or the frequency domain resource is used to determine second information, and the second information is used to indicate one or more items of the first information,

where among the multiple antenna ports of the SRS resource, at least two antenna ports are mapped to different time units; and

where the first information includes one or more of:

a number of antenna ports of the SRS resource; or

a number of second time units occupied by the SRS resource within a single first time unit; or

a repetition factor of the SRS resource; or

a number of SRS antenna ports mapped on a single third time unit, or a number of SRS antenna ports respectively mapped on multiple third time units; or

a number of antenna ports of the SRS resource mapped on a single third time unit, or a number of antenna ports of the SRS resource respectively mapped on multiple third time units; or

a number of second time units to which a single antenna port of the SRS resource is mapped within a single first time unit, or a number of second time units to which multiple antenna ports of the SRS resource are respectively mapped within a single first time unit; or

a number of antenna port groups included in the SRS resource; or

a number of third time unit groups to which all antenna ports of the SRS resource are mapped; or

a minimum number of third time units required for all antenna ports of the SRS resource being mapped once; or

a number of frequency hops of a single antenna port of the SRS resource within a single third time unit, or a number of frequency hops of multiple antenna ports of the SRS resource within a single third time unit respectively; or

a number of frequency hops included in a single frequency hopping period of the SRS resource; or

a second time unit to which one or more antenna ports of the SRS resource are mapped within a single first time unit.

In some embodiments, a number of second time units to which each antenna port of the SRS resource is mapped within a single first time unit is the same.

In some embodiments, the number of second time units to which each antenna port of the SRS resource is mapped within a single first time unit is a first value, and the first value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

the number of second time units to which a single antenna port of the SRS resource is mapped within a single first time unit; or

a value determined based on the number of second time units to which multiple antenna ports of the SRS resource are respectively mapped within a single first time unit; or

a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops included in a single frequency hopping period of the SRS resource; or
a value determined based on the repetition factor of the SRS resource and a value agreed by a protocol.

In some embodiments, at least two antenna ports of the SRS resource are mapped to different numbers of second time units within a single first time unit.

In some embodiments, a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or
a value determined based on the number of second time units occupied by the SRS resource within a single first time unit and the minimum number of third time units required for all antenna ports of the SRS resource being mapped once; or
a value determined based on the number of second time units occupied by the SRS resource within a single first time unit and a value agreed by a protocol; or
a value determined based on the number of SRS antenna ports mapped on a single third time unit, the number of second time units occupied by the SRS resource within a single first time unit, and the number of antenna ports of the SRS resource; or
a value determined based on the number of SRS antenna ports respectively mapped on multiple third time units, the number of second time units occupied by the SRS resource within a single first time unit, and the number of antenna ports of the SRS resource; or
a value determined based on the number of antenna ports of the SRS resource mapped on a single third time unit, the number of second time units occupied by the SRS resource within a single first time unit, and the number of antenna ports of the SRS resource; or
a value determined based on the number of antenna ports of the SRS resource respectively mapped on multiple third time units, the number of second time units occupied by the SRS resource within a single first time unit, and the number of antenna ports of the SRS resource; or
a value determined based on a value agreed by a protocol, the number of second time units occupied by the SRS resource within a single first time unit, and the number of antenna ports of the SRS resource; or
a value determined based on the repetition factor of the SRS resource and the number of frequency hops of a single antenna port of the SRS resource within a single third time unit; or
a value determined based on the repetition factor of the SRS resource and the number of frequency hops of multiple antenna ports of the SRS resource within a single third time unit respectively; or
a value determined based on the repetition factor of the SRS resource and the number of frequency hops included in a single frequency hopping period of the SRS resource; or
a value determined based on the repetition factor of the SRS resource and a value agreed by a protocol.

In some embodiments, a number of second time units to which a second part of antenna ports of the SRS resource are mapped within a single first time unit is a third value, and the third value is any of:

a value determined based on the number of second time units occupied by the SRS resource within a single first time unit, the number of antenna port groups included in the SRS resource, and the second value; or
a value determined based on the number of second time units occupied by the SRS resource within a single first time unit, the number of third time unit groups to which all antenna ports of the SRS resource are mapped, and the second value; or
a value determined based on the number of second time units occupied by the SRS resource within a single first time unit, the minimum number of third time units required for all antenna ports of the SRS resource being mapped once, and the second value; or
a value determined based on the number of second time units occupied by the SRS resource within a single first time unit, the number of antenna ports of the SRS resource, the number of SRS antenna ports mapped on a single third time unit, and the second value; or
a value determined based on the number of second time units occupied by the SRS resource within a single first time unit, the number of antenna ports of the SRS resource, the number of SRS antenna ports respectively mapped on multiple third time units, and the second value; or
a value determined based on the number of second time units occupied by the SRS resource within a single first time unit, the number of antenna ports of the SRS resource, the number of antenna ports of the SRS resource mapped on a single third time unit, and the second value; or
a value determined based on the number of second time units occupied by the SRS resource within a single first time unit, the number of antenna ports of the SRS resource, the number of antenna ports of the SRS resource respectively mapped on multiple third time units, and the second value.

In some embodiments, a first antenna port of the SRS resource is mapped to a same set of frequency domain units on all second time units being mapped to within a single first time unit.

In some embodiments, a first antenna port of the SRS resource is mapped to different sets of frequency domain units on different second time units being mapped to within a single first time unit.

In some embodiments, all second time units to which a first antenna port of the SRS resource is mapped within a single first time unit are divided into multiple symbol groups, each symbol group includes R second time units, and the first antenna port is mapped to different sets of frequency domain units on different symbol groups, and is mapped to a same set of frequency domain units on R second time units within a same symbol group, where R is a value of the repetition factor of the SRS resource.

In some embodiments, the same set of frequency domain units is a set consisting of frequency domain units included in a full hopping bandwidth of the SRS resource.

In some embodiments, the first antenna port of the SRS resource is mapped to different sets of frequency domain units on multiple first time units, and is mapped to the same set of frequency domain units on all second time units being mapped to within the same first time unit.

In some embodiments, the different sets of frequency domain units include a same number of frequency domain units.

In some embodiments, a number of frequency domain units included in any set of frequency domain units is equal to a ratio of a number of frequency domain units included in a full hopping bandwidth of the SRS resource to a number of second time units to which the first antenna port is mapped within a single first time unit.

In some embodiments, the SRS resource is not configured for performing frequency hopping transmission, and/or a value of the repetition factor of the SRS resource is equal to the number of second time units occupied by the SRS resource within a single first time unit.

In some embodiments, the SRS resource is configured for performing frequency hopping transmission, and a value of the repetition factor of the SRS resource is equal to a number of second time units to which the first antenna port is mapped within a single first time unit.

In some embodiments, the SRS resource is configured for performing frequency hopping transmission, and/or a value of the repetition factor of the SRS resource is 1.

In some embodiments, the SRS resource is configured for performing frequency hopping transmission, and/or a value of the repetition factor of the SRS resource is greater than or equal to 2.

In some embodiments, a frequency hopping mode used by a frequency domain resource to which a first antenna port of the SRS resource is mapped is a first frequency hopping mode, a second frequency hopping mode, or a third frequency hopping mode,

where the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;

the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and

the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, where R is a value of the repetition factor of the SRS resource.

In some embodiments, the number of antenna port groups included in the SRS resource, or the number of third time unit groups to which all antenna ports of the SRS resource are mapped, or the minimum number of third time units required for all antenna ports of the SRS resource being mapped once, is determined based on any of:

the number of antenna ports of the SRS resource and the number of SRS antenna ports mapped on a single third time unit; or

the number of antenna ports of the SRS resource and the number of SRS antenna ports respectively mapped on multiple third time units; or

the number of antenna ports of the SRS resource and the number of antenna ports of the SRS resource mapped on a single third time unit; or

the number of antenna ports of the SRS resource and the number of antenna ports of the SRS resource respectively mapped on multiple third time units; or

the number of second time units occupied by the SRS resource within a single first time unit, the repetition factor of the SRS resource, and the number of frequency hops of a single antenna port of the SRS resource within a single third time unit; or

the number of second time units occupied by the SRS resource within a single first time unit, the repetition factor of the SRS resource, and the number of frequency hops of multiple antenna ports of the SRS resource within a single third time unit respectively; or

the number of second time units occupied by the SRS resource within a single first time unit, the repetition factor of the SRS resource, and the number of frequency hops included in a single frequency hopping period of the SRS resource; or

the number of second time units occupied by the SRS resource within a single first time unit and the number of second time units to which a single antenna port of the SRS resource is mapped within a single first time unit; or

the number of second time units occupied by the SRS resource within a single first time unit and the number of second time units to which multiple antenna ports of the SRS resource are respectively mapped within a single first time unit.

In some embodiments, the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or

the number of second time units occupied by the SRS resource within a single first time unit, the number of antenna ports of the SRS resource, and the number of SRS antenna ports respectively mapped on multiple third time units; or

the number of antenna ports of the SRS resource mapped on a single third time unit, the number of second time units occupied by the SRS resource within a single first time unit, and the number of antenna ports of the SRS resource; or

the number of antenna ports of the SRS resource respectively mapped on multiple third time units, the number of second time units occupied by the SRS resource within a single first time unit, and the number of antenna ports of the SRS resource; or

the repetition factor of the SRS resource and the number of frequency hops of a single antenna port of the SRS resource within a single third time unit; or

the repetition factor of the SRS resource and the number of frequency hops of multiple antenna ports of the SRS resource within a single third time unit respectively; or

the repetition factor of the SRS resource and the number of frequency hops included in a single frequency hopping period of the SRS resource; or

the number of second time units occupied by the SRS resource within a single first time unit and the number of third time unit groups to which all antenna ports of the SRS resource are mapped; or

the number of second time units occupied by the SRS resource within a single first time unit and the minimum number of third time units required for all antenna ports of the SRS resource being mapped once.

In some embodiments, the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource and the number of antenna port groups included in the SRS resource; or

the number of antenna ports of the SRS resource and the number of third time unit groups to which all antenna ports of the SRS resource are mapped; or

the number of antenna ports of the SRS resource and the minimum number of third time units required for all antenna ports of the SRS resource being mapped once; or

the number of second time units occupied by the SRS resource within a single first time unit, the number of antenna ports of the SRS resource, the repetition factor of the SRS resource, and the number of frequency hops of a single antenna port of the SRS resource within a single third time unit; or

the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or

the number of second time units occupied by the SRS resource within a single first time unit, the number of antenna ports of the SRS resource, the repetition factor of the SRS resource, and the number of frequency hops included in a single frequency hopping period of the SRS resource; or

the number of second time units occupied by the SRS resource within a single first time unit, the number of antenna ports of the SRS resource, and the number of second time units to which a single antenna port of the SRS resource is mapped within a single first time unit; or

the number of second time units occupied by the SRS resource within a single first time unit, the number of antenna ports of the SRS resource, and the number of second time units to which multiple antenna ports of the SRS resource are respectively mapped within a single first time unit.

In some embodiments, determining, based on the first information, the time domain resource and/or the frequency domain resource to which multiple antenna ports of the SRS resource are mapped includes:

based on the number of antenna ports of the SRS resource and/or indication information sent from a network device to the terminal, determining, based on the first information, the time domain resource and/or the frequency domain resource to which multiple antenna ports of the SRS resource are mapped.

In some embodiments, the apparatus further includes:

a second determining unit, used for determining, based on the time domain resource and/or the frequency domain resource to which multiple antenna ports of the SRS resource are mapped, the second information; and
a second sending unit, used for sending the second information to the terminal.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

The above-mentioned apparatuses provided by the embodiments of the present application may implement all the method steps implemented by the above-mentioned method embodiment, and may achieve the same effects. The same parts and beneficial effects in the embodiments as those in the method embodiments are not described in detail.

An embodiment of the present application further provides a computer-readable storage medium, where the computer-readable storage medium stores a computer program, and the computer program is used to cause a computer to perform the method for SRS transmission provided by the above embodiments.

It should be noted here that the computer-readable storage medium provided by the embodiments of the present application may implement all the method steps implemented by the above-mentioned method embodiment, and may achieve the same effects. The same parts and beneficial effects in the embodiments as those in the method embodiments are not described in detail.

The computer-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions according to the embodiments of the present application may be applicable to various systems, especially 5th generation (5G) systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device. The systems may further include a core network part, such as an evolved packet system (EPS), a 5G system (5GS), and the like.

The terminal involved in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device involved in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the base station and the terminal by using one or more antennas. The MIMO transmission may be single-user MIMO (SU-MIMO) or multiuser MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for sounding reference signal, SRS, transmission, performed by a terminal, comprising:

   determining, based on first information, a time domain resource and/or a frequency domain resource to which multiple antenna ports of an SRS resource are mapped, wherein at least two antenna ports among the multiple antenna ports of the SRS resource are mapped to different time domain resources; and

sending, based on the time domain resource and/or the frequency domain resource, an SRS corresponding to the SRS resource to a network device,

wherein the first information comprises one or more of:

a number of antenna ports of the SRS resource; or

a number of second time units occupied by the SRS resource within a single first time unit; or

a repetition factor of the SRS resource; or a number of SRS antenna ports mapped on a single third time unit, or a number of SRS antenna ports respectively mapped on multiple third time units; or

a number of antenna ports of the SRS resource mapped on a single third time unit, or a number of antenna ports of the SRS resource respectively mapped on multiple third time units; or

a number of second time units to which a single antenna port of the SRS resource is mapped within a single first time unit, or a number of second time units to which multiple antenna ports of the SRS resource are respectively mapped within a single first time unit; or

a number of antenna port groups comprised in the SRS resource; or

a number of third time unit groups to which all antenna ports of the SRS resource are mapped; or

a minimum number of third time units required for all antenna ports of the SRS resource being mapped once; or

a number of frequency hops of a single antenna port of the SRS resource within a single third time unit, or a number of frequency hops of multiple antenna ports of the SRS resource within a single third time unit respectively; or

a number of frequency hops comprised in a single frequency hopping period of the SRS resource; or

a second time unit to which one or more antenna ports of the SRS resource are mapped within a single first time unit.

2. The method of claim 1, wherein a number of second time units to which each antenna port of the SRS resource is mapped within a single first time unit is the same.

3. The method of claim 2, wherein the number of second time units to which each antenna port of the SRS resource is mapped within a single first time unit is a first value, and the first value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

the number of second time units to which a single antenna port of the SRS resource is mapped within a single first time unit; or

a value determined based on the number of second time units to which multiple antenna ports of the SRS resource are respectively mapped within a single first time unit; or

a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops comprised in a single frequency hopping period of the SRS resource; or

a value determined based on the repetition factor of the SRS resource and a value agreed by a protocol.

4. The method of claim 1, wherein at least two antenna ports of the SRS resource are mapped to different numbers of second time units within a single first time unit.

5. The method of claim 4, wherein a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops comprised in a single frequency hopping period of the SRS resource; or

a value determined based on the repetition factor of the SRS resource and a value agreed by a protocol.

6. The method of claim 5, wherein a number of second time units to which a second part of antenna ports of the SRS resource are mapped within a single first time unit is a third value, and the third value is any of:

a value determined based on the number of second time units occupied by the SRS resource within a single first time unit, the number of antenna port groups comprised in the SRS resource, and the second value; or

a value determined based on the number of second time units occupied by the SRS resource within a single first time unit, the number of third time unit groups to which all antenna ports of the SRS resource are mapped, and the second value; or

a value determined based on the number of second time units occupied by the SRS resource within a single first time unit, the minimum number of third time units required for all antenna ports of the SRS resource being mapped once, and the second value; or

a value determined based on the number of second time units occupied by the SRS resource within a single first time unit, the number of antenna ports of the SRS resource, the number of SRS antenna ports mapped on a single third time unit, and the second value; or

a value determined based on the number of second time units occupied by the SRS resource within a single first time unit, the number of antenna ports of the SRS resource, the number of SRS antenna ports respectively mapped on multiple third time units, and the second value; or

a value determined based on the number of second time units occupied by the SRS resource within a single first time unit, the number of antenna ports of the SRS resource, the number of antenna ports of the SRS resource mapped on a single third time unit, and the second value; or

a value determined based on the number of second time units occupied by the SRS resource within a single first time unit, the number of antenna ports of the SRS resource, the number of antenna ports of the SRS resource respectively mapped on multiple third time units, and the second value.

7. The method of any of claims 1 to 6, wherein a first antenna port of the SRS resource is mapped to a same set of frequency domain units on all second time units being mapped to within a single first time unit.

8. The method of any of claims 1 to 6, wherein a first antenna port of the SRS resource is mapped to different sets of frequency domain units on different second time units being mapped to within a single first time unit.

9. The method of any of claims 1 to 6, wherein all second time units to which a first antenna port of the SRS resource is mapped within a single first time unit are divided into multiple symbol groups, each symbol group comprises R second time units, and the first antenna port is mapped to different sets of frequency domain units on different symbol groups, and is mapped to a same set of frequency domain units on R second time units within a same symbol group, wherein R is a value of the repetition factor of the SRS resource.

10. The method of claim 7, wherein the same set of frequency domain units is a set consisting of frequency domain units comprised in a full hopping bandwidth of the SRS resource.

11. The method of claim 7, wherein the first antenna port of the SRS resource is mapped to different sets of frequency domain units on multiple first time units, and is mapped to the same set of frequency domain units on all second time units being mapped to within the same first time unit.

12. The method of claim 8, 9 or 11, wherein the different sets of frequency domain units comprise a same number of frequency domain units.

13. The method of claim 12, wherein a number of frequency domain units comprised in any set of frequency domain units is equal to a ratio of a number of frequency domain units comprised in a full hopping bandwidth of the SRS resource to a number of second time units to which the first antenna port is mapped within a single first time unit.

14. The method of claim 10, wherein the SRS resource is not configured for performing frequency hopping transmission, and/or a value of the repetition factor of the SRS resource is equal to the number of second time units occupied by the SRS resource within a single first time unit.

15. The method of claim 11, wherein the SRS resource is configured for performing frequency hopping transmission, and a value of the repetition factor of the SRS resource is equal to a number of second time units to which the first antenna port is mapped within a single first time unit.

16. The method of claim 8, wherein the SRS resource is configured for performing frequency hopping transmission, and/or a value of the repetition factor of the SRS resource is 1.

17. The method of claim 9, wherein the SRS resource is configured for performing frequency hopping transmission, and/or a value of the repetition factor of the SRS resource is greater than or equal to 2.

18. The method of claim 1, wherein a frequency hopping mode used by a frequency domain resource to which a first antenna port of the SRS resource is mapped is a first frequency hopping mode, a second frequency hopping mode, or a third frequency hopping mode,

wherein the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;

the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and

the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, wherein R is a value of the repetition factor of the SRS resource.

19. The method of any of claims 1 to 6, wherein the number of antenna port groups comprised in the SRS resource, or the number of third time unit groups to which all antenna ports of the SRS resource are mapped, or the minimum number of third time units required for all antenna ports of the SRS resource being mapped once, is determined based on any of:

the number of antenna ports of the SRS resource and the number of SRS antenna ports mapped on a single third time unit; or
the number of antenna ports of the SRS resource and the number of SRS antenna ports respectively mapped on multiple third time units; or
the number of antenna ports of the SRS resource and the number of antenna ports of the SRS resource mapped on a single third time unit; or
the number of antenna ports of the SRS resource and the number of antenna ports of the SRS resource respectively mapped on multiple third time units; or
the number of second time units occupied by the SRS resource within a single first time unit, the repetition factor of the SRS resource, and the number of frequency hops of a single antenna port of the SRS resource within a single third time unit; or
the number of second time units occupied by the SRS resource within a single first time unit, the repetition factor of the SRS resource, and the number of frequency hops of multiple antenna ports of the SRS resource within a single third time unit respectively; or
the number of second time units occupied by the SRS resource within a single first time unit, the repetition factor of the SRS resource, and the number of frequency hops comprised in a single frequency hopping period of the SRS resource; or

the number of second time units occupied by the SRS resource within a single first time unit and the number of second time units to which a single antenna port of the SRS resource is mapped within a single first time unit; or
the number of second time units occupied by the SRS resource within a single first time unit and the number of second time units to which multiple antenna ports of the SRS resource are respectively mapped within a single first time unit.

20. The method of any of claims 1 to 6, wherein the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or
the number of second time units occupied by the SRS resource within a single first time unit, the number of antenna ports of the SRS resource, and the number of SRS antenna ports respectively mapped on multiple third time units; or
the number of antenna ports of the SRS resource mapped on a single third time unit, the number of second time units occupied by the SRS resource within a single first time unit, and the number of antenna ports of the SRS resource; or
the number of antenna ports of the SRS resource respectively mapped on multiple third time units, the number of second time units occupied by the SRS resource within a single first time unit, and the number of antenna ports of the SRS resource; or
the repetition factor of the SRS resource and the number of frequency hops of a single antenna port of the SRS resource within a single third time unit; or
the repetition factor of the SRS resource and the number of frequency hops of multiple antenna ports of the SRS resource within a single third time unit respectively; or
the repetition factor of the SRS resource and the number of frequency hops comprised in a single frequency hopping period of the SRS resource; or
the number of second time units occupied by the SRS resource within a single first time unit and the number of third time unit groups to which all antenna ports of the SRS resource are mapped; or

the number of second time units occupied by the SRS resource within a single first time unit and the minimum number of third time units required for all antenna ports of the SRS resource being mapped once.

21. The method of any of claims 1 to 6, wherein the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource and the number of antenna port groups comprised in the SRS resource; or
the number of antenna ports of the SRS resource and the number of third time unit groups to which all antenna ports of the SRS resource are mapped; or
the number of antenna ports of the SRS resource and the minimum number of third time units required for all antenna ports of the SRS resource being mapped once; or
the number of second time units occupied by the SRS resource within a single first time unit, the number of antenna ports of the SRS resource, the repetition factor of the SRS resource, and the number of frequency hops of a single antenna port of the SRS resource within a single third time unit; or
the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or
the number of second time units occupied by the SRS resource within a single first time unit, the number of antenna ports of the SRS resource, the repetition factor of the SRS resource, and the number of frequency hops comprised in a single frequency hopping period of the SRS resource; or
the number of second time units occupied by the SRS resource within a single first time unit, the number of antenna ports of the SRS resource, and the number of second time units to which a single antenna port of the SRS resource is mapped within a single first time unit; or
the number of second time units occupied by the SRS resource within a single first time unit, the number of antenna ports of the SRS resource, and the number of second time units to which multiple antenna ports of the SRS resource are respectively mapped within a single first time unit.

22. The method of any of claims 1 to 21, wherein determining, based on the first information, the time domain resource and/or the frequency domain resource to which multiple antenna ports of the SRS resource are mapped comprises:
based on the number of antenna ports of the SRS resource and/or indication information sent from the network device, determining, based on the first information, the time domain resource and/or the frequency domain resource to which multiple antenna ports of the SRS resource are mapped.

23. The method of any of claims 1 to 21, further comprising:
receiving second information sent from the network device, wherein the second information is used to indicate one or more items of the first information.

24. A method for sounding reference signal, SRS, transmission, performed by a network device, comprising:

receiving, based on a time domain resource and/or a frequency domain resource to which multiple antenna ports of an SRS resource are mapped, an SRS corresponding to the SRS resource sent from a terminal, wherein the time domain resource and/or the frequency domain resource is determined based on first information, or the time domain resource and/or the frequency domain resource is used to determine second information, and the second information is used to indicate one or more items of the first information,
wherein among the multiple antenna ports of the SRS resource, at least two antenna ports are mapped to different time units; and
wherein the first information comprises one or more of:

a number of antenna ports of the SRS resource; or
a number of second time units occupied by the SRS resource within a single first time unit; or
a repetition factor of the SRS resource; or
a number of SRS antenna ports mapped on a single third time unit, or a number of SRS antenna ports respectively mapped on multiple third time units; or
a number of antenna ports of the SRS resource mapped on a single third time unit, or a number of antenna ports of the SRS resource respectively mapped on multiple third time units; or

a number of second time units to which a single antenna port of the SRS resource is mapped within a single first time unit, or a number of second time units to which multiple antenna ports of the SRS resource are respectively mapped within a single first time unit; or

a number of antenna port groups comprised in the SRS resource; or

a number of third time unit groups to which all antenna ports of the SRS resource are mapped; or

a minimum number of third time units required for all antenna ports of the SRS resource being mapped once; or

a number of frequency hops of a single antenna port of the SRS resource within a single third time unit, or a number of frequency hops of multiple antenna ports of the SRS resource within a single third time unit respectively; or

a number of frequency hops comprised in a single frequency hopping period of the SRS resource; or

a second time unit to which one or more antenna ports of the SRS resource are mapped within a single first time unit.

25. The method of claim 24, wherein a number of second time units to which each antenna port of the SRS resource is mapped within a single first time unit is the same.

26. The method of claim 25, wherein the number of second time units to which each antenna port of the SRS resource is mapped within a single first time unit is a first value, and the first value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

the number of second time units to which a single antenna port of the SRS resource is mapped within a single first time unit; or

a value determined based on the number of second time units to which multiple antenna ports of the SRS resource are respectively mapped within a single first time unit; or

a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops comprised in a single frequency hopping period of the SRS resource; or

a value determined based on the repetition factor of the SRS resource and a value agreed by a protocol.

27. The method of claim 24, wherein at least two antenna ports of the SRS resource are mapped to different numbers of second time units within a single first time unit.

28. The method of claim 27, wherein a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops comprised in a single frequency hopping period of the SRS resource; or

a value determined based on the repetition factor of the SRS resource and a value agreed by a protocol.

29. The method of claim 28, wherein a number of second time units to which a second part of antenna ports of the SRS resource are mapped within a single first time unit is a third value, and the third value is any of:

a value determined based on the number of second time units occupied by the SRS resource within a single first time unit, the number of antenna port groups comprised in the SRS resource, and the second value; or

a value determined based on the number of second time units occupied by the SRS resource within a single first time unit, the number of third time unit groups to which all antenna ports of the SRS resource are mapped, and the second value; or

a value determined based on the number of second time units occupied by the SRS resource within a single first time unit, the minimum number of third time units required for all antenna ports of the SRS resource being mapped once, and the second value; or

a value determined based on the number of second time units occupied by the SRS resource within a single first time unit, the number of antenna ports of the SRS resource, the number of SRS antenna ports mapped on a single third time unit, and the second value; or

a value determined based on the number of second time units occupied by the SRS resource within a single first time unit, the number of antenna ports of the SRS resource, the number of SRS antenna ports respectively mapped on multiple third time units, and the second value; or

a value determined based on the number of second time units occupied by the SRS resource within a single first time unit, the number of antenna ports of the SRS resource, the number of antenna ports of the SRS resource mapped on a single third time unit, and the second value; or

a value determined based on the number of second time units occupied by the SRS resource within a single first time unit, the number of antenna ports of the SRS resource, the number of antenna ports of the SRS resource respectively mapped on multiple third time units, and the second value.

30. The method of any of claims 24 to 29, wherein a first antenna port of the SRS resource is mapped to a same set of frequency domain units on all second time units being mapped to within a single first time unit.

31. The method of any of claims 24 to 29, wherein a first antenna port of the SRS resource is mapped to different sets of frequency domain units on different second time units being mapped to within a single first time unit.

32. The method of any of claims 24 to 29, wherein all second time units to which a first antenna port of the SRS resource is mapped within a single first time unit are divided into multiple symbol groups, each symbol group comprises R second time units, and the first antenna port is mapped to different sets of frequency domain units on different symbol groups, and is mapped to a same set of frequency domain units on R second time units within a same symbol group, wherein R is a value of the repetition factor of the SRS resource.

33. The method of claim 30, wherein the same set of frequency domain units is a set consisting of frequency domain units comprised in a full hopping bandwidth of the SRS resource.

34. The method of claim 30, wherein the first antenna port of the SRS resource is mapped to different sets of frequency domain units on multiple first time units, and is mapped to the same set of frequency domain units on all second time units being mapped to within the same first time unit.

35. The method of claim 31, 32 or 34, wherein the different sets of frequency domain units comprise a same number of frequency domain units.

36. The method of claim 35, wherein a number of frequency domain units comprised in any set of frequency domain units is equal to a ratio of a number of frequency domain units comprised in a full hopping bandwidth of the SRS resource to a number of second time units to which the first antenna port is mapped within a single first time unit.

37. The method of claim 33, wherein the SRS resource is not configured for performing frequency hopping transmission, and/or a value of the repetition factor of the SRS resource is equal to the number of second time units occupied by the SRS resource within a single first time unit.

38. The method of claim 34, wherein the SRS resource is configured for performing frequency hopping transmission, and a value of the repetition factor of the SRS resource is equal to a number of second time units to which the first antenna port is mapped within a single first time unit.

39. The method of claim 31, wherein the SRS resource is configured for performing frequency hopping transmission, and/or a value of the repetition factor of the SRS resource is 1.

40. The method of claim 32, wherein the SRS resource is configured for performing frequency hopping transmission, and/or a value of the repetition factor of the SRS resource is greater than or equal to 2.

41. The method of claim 24, wherein a frequency hopping mode used by a frequency domain resource to which a first antenna port of the SRS resource is mapped is a first frequency hopping mode, a second frequency hopping mode, or a third frequency hopping mode,

   wherein the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;
   the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and
   the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, wherein R is a value of the repetition factor of the SRS resource.

42. The method of any of claims 24 to 29, wherein the number of antenna port groups comprised in the SRS resource, or the number of third time unit groups to which all antenna ports of the SRS resource are mapped, or the minimum number of third time units required for all antenna ports of the SRS resource being mapped once, is determined based on any of:

   the number of antenna ports of the SRS resource and the number of SRS antenna ports mapped on a single third time unit; or

the number of antenna ports of the SRS resource and the number of SRS antenna ports respectively mapped on multiple third time units; or

the number of antenna ports of the SRS resource and the number of antenna ports of the SRS resource mapped on a single third time unit; or

the number of antenna ports of the SRS resource and the number of antenna ports of the SRS resource respectively mapped on multiple third time units; or

the number of second time units occupied by the SRS resource within a single first time unit, the repetition factor of the SRS resource, and the number of frequency hops of a single antenna port of the SRS resource within a single third time unit; or

the number of second time units occupied by the SRS resource within a single first time unit, the repetition factor of the SRS resource, and the number of frequency hops of multiple antenna ports of the SRS resource within a single third time unit respectively; or

the number of second time units occupied by the SRS resource within a single first time unit, the repetition factor of the SRS resource, and the number of frequency hops comprised in a single frequency hopping period of the SRS resource; or

the number of second time units occupied by the SRS resource within a single first time unit and the number of second time units to which a single antenna port of the SRS resource is mapped within a single first time unit; or

the number of second time units occupied by the SRS resource within a single first time unit and the number of second time units to which multiple antenna ports of the SRS resource are respectively mapped within a single first time unit.

43. The method of any of claims 24 to 29, wherein the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or

the number of second time units occupied by the SRS resource within a single first time unit, the number of antenna ports of the SRS resource, and the number of SRS antenna ports respectively mapped on multiple third time units; or

the number of antenna ports of the SRS resource mapped on a single third time unit, the number of second time units occupied by the SRS resource within a single first time unit, and the number of antenna ports of the SRS resource; or

the number of antenna ports of the SRS resource respectively mapped on multiple third time units, the number of second time units occupied by the SRS resource within a single first time unit, and the number of antenna ports of the SRS resource; or

the repetition factor of the SRS resource and the number of frequency hops of a single antenna port of the SRS resource within a single third time unit; or

the repetition factor of the SRS resource and the number of frequency hops of multiple antenna ports of the SRS resource within a single third time unit respectively; or

the repetition factor of the SRS resource and the number of frequency hops comprised in a single frequency hopping period of the SRS resource; or

the number of second time units occupied by the SRS resource within a single first time unit and the number of third time unit groups to which all antenna ports of the SRS resource are mapped; or

the number of second time units occupied by the SRS resource within a single first time unit and the minimum number of third time units required for all antenna ports of the SRS resource being mapped once.

44. The method of any of claims 24 to 29, wherein the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource and the number of antenna port groups comprised in the SRS resource; or

the number of antenna ports of the SRS resource and the number of third time unit groups to which all antenna ports of the SRS resource are mapped; or

the number of antenna ports of the SRS resource and the minimum number of third time units required for all antenna ports of the SRS resource being mapped once; or

the number of second time units occupied by the SRS resource within a single first time unit, the number of antenna ports of the SRS resource, the repetition factor of the SRS resource, and the number of frequency hops of a single antenna port of the SRS resource within a single third time unit; or

the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or

the number of second time units occupied by the SRS resource within a single first time unit, the number of antenna ports of the SRS resource, the repetition factor of the SRS resource, and the number of frequency hops comprised in a single frequency hopping period of the SRS resource; or

the number of second time units occupied by the SRS resource within a single first time unit, the number of antenna ports of the SRS resource, and the number of second time units to which a single antenna port of the SRS resource is mapped within a single first time unit; or

the number of second time units occupied by the SRS resource within a single first time unit, the number of antenna ports of the SRS resource, and the number of second time units to which multiple antenna ports of the SRS resource are respectively mapped within a single first time unit.

45. The method of any of claims 24 to 44, wherein determining, based on the first information, the time domain resource and/or the frequency domain resource to which multiple antenna ports of the SRS resource are mapped comprises:

based on the number of antenna ports of the SRS resource and/or indication information sent from the network device to the terminal, determining, based on the first information, the time domain resource and/or the frequency domain resource to which multiple antenna ports of the SRS resource are mapped.

46. The method of any of claims 24 to 44, wherein before receiving the SRS corresponding to the SRS resource sent from the terminal, the method further comprises:

determining, based on the time domain resource and/or the frequency domain resource to which multiple antenna ports of the SRS resource are mapped, the second information; and
sending the second information to the terminal.

47. A terminal, comprising: a memory, a transceiver and a processor,

wherein the memory is used for storing a computer program, the transceiver is used for receiving and sending data under control of the processor, and the processor is used for reading the computer program in the memory and performing the following operations:

determining, based on first information, a time domain resource and/or a frequency domain resource to which multiple antenna ports of a sounding reference signal, SRS, resource are mapped, wherein at least two antenna ports among the multiple antenna ports of the SRS resource are mapped to different time domain resources; and

sending, based on the time domain resource and/or the frequency domain resource, an SRS corresponding to the SRS resource to a network device,

wherein the first information comprises one or more of:

a number of antenna ports of the SRS resource; or

a number of second time units occupied by the SRS resource within a single first time unit; or

a repetition factor of the SRS resource; or

a number of SRS antenna ports mapped on a single third time unit, or a number of SRS antenna ports respectively mapped on multiple third time units; or

a number of antenna ports of the SRS resource mapped on a single third time unit, or a number of antenna ports of the SRS resource respectively mapped on multiple third time units; or

a number of second time units to which a single antenna port of the SRS resource is mapped within a single first time unit, or a number of second time units to which multiple antenna ports of the SRS resource are respectively mapped within a single first time unit; or

a number of antenna port groups comprised in the SRS resource; or

a number of third time unit groups to which all antenna ports of the SRS resource are mapped; or

a minimum number of third time units required for all antenna ports of the SRS resource being mapped once; or

a number of frequency hops of a single antenna port of the SRS resource within a single third time unit, or a number of frequency hops of multiple antenna ports of the SRS resource within a single third time unit respectively; or

a number of frequency hops comprised in a single frequency hopping period of the SRS resource; or

a second time unit to which one or more antenna ports of the SRS resource are mapped within a single first time unit.

48. The terminal of claim 47, wherein a number of second time units to which each antenna port of the SRS resource is mapped within a single first time unit is the same.

49. The terminal of claim 48, wherein the number of second time units to which each antenna port of the SRS resource is mapped within a single first time unit is a first value, and the first value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

the number of second time units to which a single antenna port of the SRS resource is mapped within a single first time unit; or

a value determined based on the number of second time units to which multiple antenna ports of the SRS resource are respectively mapped within a single first time unit; or

a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops comprised in a single frequency hopping period of the SRS resource; or

a value determined based on the repetition factor of the SRS resource and a value agreed by a protocol.

50. The terminal of claim 47, wherein at least two antenna ports of the SRS resource are mapped to different numbers of second time units within a single first time unit.

51. The terminal of claim 50, wherein a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops comprised in a single frequency hopping period of the SRS resource; or

a value determined based on the repetition factor of the SRS resource and a value agreed by a protocol.

**52.** The terminal of claim 51, wherein a number of second time units to which a second part of antenna ports of the SRS resource are mapped within a single first time unit is a third value, and the third value is any of:

a value determined based on the number of second time units occupied by the SRS resource within a single first time unit, the number of antenna port groups comprised in the SRS resource, and the second value; or

a value determined based on the number of second time units occupied by the SRS resource within a single first time unit, the number of third time unit groups to which all antenna ports of the SRS resource are mapped, and the second value; or

a value determined based on the number of second time units occupied by the SRS resource within a single first time unit, the minimum number of third time units required for all antenna ports of the SRS resource being mapped once, and the second value; or

a value determined based on the number of second time units occupied by the SRS resource within a single first time unit, the number of antenna ports of the SRS resource, the number of SRS antenna ports mapped on a single third time unit, and the second value; or

a value determined based on the number of second time units occupied by the SRS resource within a single first time unit, the number of antenna ports of the SRS resource, the number of SRS antenna ports respectively mapped on multiple third time units, and the second value; or

a value determined based on the number of second time units occupied by the SRS resource within a single first time unit, the number of antenna ports of the SRS resource, the number of antenna ports of the SRS resource mapped on a single third time unit, and the second value; or

a value determined based on the number of second time units occupied by the SRS resource within a single first time unit, the number of antenna ports of the SRS resource, the number of antenna ports of the SRS resource respectively mapped on multiple third time units, and the second value.

**53.** The terminal of any of claims 47 to 52, wherein a first antenna port of the SRS resource is mapped to a same set of frequency domain units on all second time units being mapped to within a single first time unit.

**54.** The terminal of any of claims 47 to 52, wherein a first antenna port of the SRS resource is mapped to different sets of frequency domain units on different second time units being mapped to within a single first time unit.

**55.** The terminal of any of claims 47 to 52, wherein all second time units to which a first antenna port of the SRS resource is mapped within a single first time unit are divided into multiple symbol groups, each symbol group comprises R second time units, and the first antenna port is mapped to different sets of frequency domain units on different symbol groups, and is mapped to a same set of frequency domain units on R second time units within a same symbol group, wherein R is a value of the repetition factor of the SRS resource.

56. The terminal of claim 53, wherein the same set of frequency domain units is a set consisting of frequency domain units comprised in a full hopping bandwidth of the SRS resource.

57. The terminal of claim 53, wherein the first antenna port of the SRS resource is mapped to different sets of frequency domain units on multiple first time units, and is mapped to the same set of frequency domain units on all second time units being mapped to within the same first time unit.

58. The terminal of claim 54, 55 or 57, wherein the different sets of frequency domain units comprise a same number of frequency domain units.

59. The method of claim 58, wherein a number of frequency domain units comprised in any set of frequency domain units is equal to a ratio of a number of frequency domain units comprised in a full hopping bandwidth of the SRS resource to a number of second time units to which the first antenna port is mapped within a single first time unit.

60. The terminal of claim 56, wherein the SRS resource is not configured for performing frequency hopping transmission, and/or a value of the repetition factor of the SRS resource is equal to the number of second time units occupied by the SRS resource within a single first time unit.

61. The terminal of claim 57, wherein the SRS resource is configured for performing frequency hopping transmission, and a value of the repetition factor of the SRS resource is equal to a number of second time units to which the first antenna port is mapped within a single first time unit.

62. The terminal of claim 54, wherein the SRS resource is configured for performing frequency hopping transmission, and/or a value of the repetition factor of the SRS resource is 1.

63. The terminal of claim 55, wherein the SRS resource is configured for performing frequency hopping transmission, and/or a value of the repetition factor of the SRS resource is greater than or equal to 2.

64. The terminal of claim 47, wherein a frequency hopping mode used by a frequency domain resource to which a first antenna port of the SRS resource is mapped is a first frequency hopping mode, a second frequency hopping mode, or a third frequency hopping mode,

wherein the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;

the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and

the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, wherein R is a value of the repetition factor of the SRS resource.

65. The terminal of any of claims 47 to 52, wherein the number of antenna port groups comprised in the SRS resource, or the number of third time unit groups to which all antenna ports of the SRS resource are mapped, or the minimum number of third time units required for all antenna ports of the SRS resource being mapped once, is determined based on any of:

the number of antenna ports of the SRS resource and the number of SRS antenna ports mapped on a single third time unit; or
the number of antenna ports of the SRS resource and the number of SRS antenna ports respectively mapped on multiple third time units; or
the number of antenna ports of the SRS resource and the number of antenna ports of the SRS resource mapped on a single third time unit; or
the number of antenna ports of the SRS resource and the number of antenna ports of the SRS resource respectively mapped on multiple third time units; or
the number of second time units occupied by the SRS resource within a single first time unit, the repetition factor of the SRS resource, and the number of frequency hops of a single antenna port of the SRS resource within a single third time unit; or

the number of second time units occupied by the SRS resource within a single first time unit, the repetition factor of the SRS resource, and the number of frequency hops of multiple antenna ports of the SRS resource within a single third time unit respectively; or

the number of second time units occupied by the SRS resource within a single first time unit, the repetition factor of the SRS resource, and the number of frequency hops comprised in a single frequency hopping period of the SRS resource; or

the number of second time units occupied by the SRS resource within a single first time unit and the number of second time units to which a single antenna port of the SRS resource is mapped within a single first time unit; or

the number of second time units occupied by the SRS resource within a single first time unit and the number of second time units to which multiple antenna ports of the SRS resource are respectively mapped within a single first time unit.

66. The terminal of any of claims 47 to 52, wherein the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or

the number of second time units occupied by the SRS resource within a single first time unit, the number of antenna ports of the SRS resource, and the number of SRS antenna ports respectively mapped on multiple third time units; or

the number of antenna ports of the SRS resource mapped on a single third time unit, the number of second time units occupied by the SRS resource within a single first time unit, and the number of antenna ports of the SRS resource; or

the number of antenna ports of the SRS resource respectively mapped on multiple third time units, the number of second time units occupied by the SRS resource within a single first time unit, and the number of antenna ports of the SRS resource; or

the repetition factor of the SRS resource and the number of frequency hops of a single antenna port of the SRS resource within a single third time unit; or

the repetition factor of the SRS resource and the number of frequency hops of multiple antenna ports of the SRS resource within a single third time unit respectively; or

the repetition factor of the SRS resource and the number of frequency hops comprised in a single frequency hopping period of the SRS resource; or

the number of second time units occupied by the SRS resource within a single first time unit and the number of third time unit groups to which all antenna ports of the SRS resource are mapped; or

the number of second time units occupied by the SRS resource within a single first time unit and the minimum number of third time units required for all antenna ports of the SRS resource being mapped once.

67. The terminal of any of claims 47 to 52, wherein the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource and the number of antenna port groups comprised in the SRS resource; or

the number of antenna ports of the SRS resource and the number of third time unit groups to which all antenna ports of the SRS resource are mapped; or

the number of antenna ports of the SRS resource and the minimum number of third time units required for all antenna ports of the SRS resource being mapped once; or

the number of second time units occupied by the SRS resource within a single first time unit, the number of antenna ports of the SRS resource, the repetition factor of the SRS resource, and the number of frequency hops of a single antenna port of the SRS resource within a single third time unit; or

the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or

the number of second time units occupied by the SRS resource within a single first time unit, the number of antenna ports of the SRS resource, the repetition factor of the SRS resource, and the number of frequency hops comprised in a single frequency hopping period of the SRS resource; or

the number of second time units occupied by the SRS resource within a single first time unit, the number of antenna ports of the SRS resource, and the number of second time units to which a single antenna port of the SRS resource is mapped within a single first time unit; or

the number of second time units occupied by the SRS resource within a single first time unit, the number of antenna ports of the SRS resource, and the number of second time units to which multiple antenna ports of the SRS resource are respectively mapped within a single first time unit.

68. The terminal of any of claims 47 to 67, wherein determining, based on the first information, the time domain resource and/or the frequency domain resource to which multiple antenna ports of the SRS resource are mapped comprises:

based on the number of antenna ports of the SRS resource and/or indication information sent from the network device, determining, based on the first information, the time domain resource and/or the frequency domain resource to which multiple antenna ports of the SRS resource are mapped.

69. The terminal of any of claims 47 to 67, wherein the operations further comprise:

receiving second information sent from the network device, wherein the second information is used to indicate one or more items of the first information.

70. A network device, comprising: a memory, a transceiver and a processor,

wherein the memory is used for storing a computer program, the transceiver is used for receiving and sending data under control of the processor, and the processor is used for reading the computer program in the memory and performing the following operations:

receiving, based on a time domain resource and/or a frequency domain resource to which multiple antenna ports of a sounding reference signal, SRS, resource are mapped, an SRS corresponding to the SRS resource sent from a terminal, wherein the time domain resource and/or the frequency domain resource is determined based on first information, or the time domain resource and/or the frequency domain resource is used to determine second information, and the second information is used to indicate one or more items of the first information, wherein among the multiple antenna ports of the SRS resource, at least two antenna ports are mapped to different time units; and

wherein the first information comprises one or more of:

a number of antenna ports of the SRS resource; or

a number of second time units occupied by the SRS resource within a single first time unit; or

a repetition factor of the SRS resource; or a number of SRS antenna ports mapped on a single third time unit, or a number of SRS antenna ports respectively mapped on multiple third time units; or

a number of antenna ports of the SRS resource mapped on a single third time unit, or a number of antenna ports of the SRS resource respectively mapped on multiple third time units; or

a number of second time units to which a single antenna port of the SRS resource is mapped within a single first time unit, or a number of second time units to which multiple antenna ports of the SRS resource are respectively mapped within a single first time unit; or

a number of antenna port groups comprised in the SRS resource; or

a number of third time unit groups to which all antenna ports of the SRS resource are mapped; or

a minimum number of third time units required for all antenna ports of the SRS resource being mapped once; or

a number of frequency hops of a single antenna port of the SRS resource within a single third time unit, or a number of frequency hops of multiple antenna ports of the SRS resource within a single third time unit respectively; or

a number of frequency hops comprised in a single frequency hopping period of the SRS resource; or

a second time unit to which one or more antenna ports of the SRS resource are mapped within a single first time unit.

71. The network device of claim 70, wherein a number of second time units to which each antenna port of the SRS resource is mapped within a single first time unit is the same.

72. The network device of claim 71, wherein the number of second time units to which each antenna port of the SRS resource is mapped within a single first time unit is a first value, and the first value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

the number of second time units to which a single antenna port of the SRS resource is mapped within a single first time unit; or

a value determined based on the number of second time units to which multiple antenna ports of the SRS resource are respectively mapped within a single first time unit; or

a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops comprised in a single frequency hopping period of the SRS resource; or

a value determined based on the repetition factor of the SRS resource and a value agreed by a protocol.

73. The network device of claim 70, wherein at least two antenna ports of the SRS resource are mapped to different numbers of second time units within a single first time unit.

74. The network device of claim 73, wherein a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops comprised in a single frequency hopping period of the SRS resource; or

a value determined based on the repetition factor of the SRS resource and a value agreed by a protocol.

75. The network device of claim 74, wherein a number of second time units to which a second part of antenna ports of the SRS resource are mapped within a single first time unit is a third value, and the third value is any of:

a value determined based on the number of second time units occupied by the SRS resource within a single first time unit, the number of antenna port groups comprised in the SRS resource, and the second value; or

a value determined based on the number of second time units occupied by the SRS resource within a single first time unit, the number of third time unit groups to which all antenna ports of the SRS resource are mapped, and the second value; or

a value determined based on the number of second time units occupied by the SRS resource within a single first time unit, the minimum number of third time units required for all antenna ports of the SRS resource being mapped once, and the second value; or

a value determined based on the number of second time units occupied by the SRS resource within a single first time unit, the number of antenna ports of the SRS resource, the number of SRS antenna ports mapped on a single third time unit, and the second value; or

a value determined based on the number of second time units occupied by the SRS resource within a single first time unit, the number of antenna ports of the SRS resource, the number of SRS antenna ports respectively mapped on multiple third time units, and the second value; or

a value determined based on the number of second time units occupied by the SRS resource within a single first time unit, the number of antenna ports of the SRS resource, the number of antenna ports of the SRS resource mapped on a single third time unit, and the second value; or

a value determined based on the number of second time units occupied by the SRS resource within a single first time unit, the number of antenna ports of the SRS resource, the number of antenna ports of the SRS resource respectively mapped on multiple third time units, and the second value.

76. The network device of any of claims 70 to 75, wherein a first antenna port of the SRS resource is mapped to a same set of frequency domain units on all second time units being mapped to within a single first time unit.

77. The network device of any of claims 70 to 75, wherein a first antenna port of the SRS resource is mapped to different sets of frequency domain units on different second time units being mapped to within a single first time unit.

78. The network device of any of claims 70 to 75, wherein all second time units to which a first antenna port of the SRS resource is mapped within a single first time unit are divided into multiple symbol groups, each symbol group comprises R second time units, and the first antenna port is mapped to different sets of frequency domain units on different symbol groups, and is mapped to a same set of frequency domain units on R second time units within a same symbol group, wherein R is a value of the repetition factor of the SRS resource.

79. The network device of claim 76, wherein the same set of frequency domain units is a set consisting of frequency domain units comprised in a full hopping bandwidth of the SRS resource.

80. The network device of claim 76, wherein the first antenna port of the SRS resource is mapped to different sets of frequency domain units on multiple first time units, and is mapped to the same set of frequency domain units on all second time units being mapped to within the same first time unit.

81. The network device of claim 77, 78 or 80, wherein the different sets of frequency domain units comprise a same number of frequency domain units.

82. The method of claim 81, wherein a number of frequency domain units comprised in any set of frequency domain units is equal to a ratio of a number of frequency domain units comprised in a full hopping bandwidth of the SRS resource to a number of second time units to which the first antenna port is mapped within a single first time unit.

83. The network device of claim 79, wherein the SRS resource is not configured for performing frequency hopping transmission, and/or a value of the repetition factor of the SRS resource is equal to the number of second time units occupied by the SRS resource within a single first time unit.

84. The network device of claim 80, wherein the SRS resource is configured for performing frequency hopping transmission, and a value of the repetition factor of the SRS resource is equal to a number of second time units to which the first antenna port is mapped within a single first time unit.

85. The network device of claim 77, wherein the SRS resource is configured for performing frequency hopping transmission, and/or a value of the repetition factor of the SRS resource is 1.

86. The network device of claim 78, wherein the SRS resource is configured for performing frequency hopping transmission, and/or a value of the repetition factor of the SRS resource is greater than or equal to 2.

87. The network device of claim 70, wherein a frequency hopping mode used by a frequency domain resource to which a first antenna port of the SRS resource is mapped is a first frequency hopping mode, a second frequency hopping mode, or a third frequency hopping mode,

wherein the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;
the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and
the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, wherein R is a value of the repetition factor of the SRS resource.

88. The network device of any of claims 70 to 75, wherein the number of antenna port groups comprised in the SRS resource, or the number of third time unit groups to which all antenna ports of the SRS resource are mapped, or the minimum number of third time units required for all antenna ports of the SRS resource being mapped once, is determined based on any of:

the number of antenna ports of the SRS resource and the number of SRS antenna ports mapped on a single third time unit; or
the number of antenna ports of the SRS resource and the number of SRS antenna ports respectively mapped on multiple third time units; or
the number of antenna ports of the SRS resource and the number of antenna ports of the SRS resource mapped on a single third time unit; or
the number of antenna ports of the SRS resource and the number of antenna ports of the SRS resource respectively mapped on multiple third time units; or
the number of second time units occupied by the SRS resource within a single first time unit, the repetition factor of the SRS resource, and the number of frequency hops of a single antenna port of the SRS resource within a single third time unit; or
the number of second time units occupied by the SRS resource within a single first time unit, the repetition factor of the SRS resource, and the number of frequency hops of multiple antenna ports of the SRS resource within a single third time unit respectively; or
the number of second time units occupied by the SRS resource within a single first time unit, the repetition factor of the SRS resource, and the number of frequency hops comprised in a single frequency hopping period of the SRS resource; or

the number of second time units occupied by the SRS resource within a single first time unit and the number of second time units to which a single antenna port of the SRS resource is mapped within a single first time unit; or

the number of second time units occupied by the SRS resource within a single first time unit and the number of second time units to which multiple antenna ports of the SRS resource are respectively mapped within a single first time unit.

89. The network device of any of claims 70 to 75, wherein the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or

the number of second time units occupied by the SRS resource within a single first time unit, the number of antenna ports of the SRS resource, and the number of SRS antenna ports respectively mapped on multiple third time units; or

the number of antenna ports of the SRS resource mapped on a single third time unit, the number of second time units occupied by the SRS resource within a single first time unit, and the number of antenna ports of the SRS resource; or

the number of antenna ports of the SRS resource respectively mapped on multiple third time units, the number of second time units occupied by the SRS resource within a single first time unit, and the number of antenna ports of the SRS resource; or

the repetition factor of the SRS resource and the number of frequency hops of a single antenna port of the SRS resource within a single third time unit; or

the repetition factor of the SRS resource and the number of frequency hops of multiple antenna ports of the SRS resource within a single third time unit respectively; or

the repetition factor of the SRS resource and the number of frequency hops comprised in a single frequency hopping period of the SRS resource; or

the number of second time units occupied by the SRS resource within a single first time unit and the number of third time unit groups to which all antenna ports of the SRS resource are mapped; or

the number of second time units occupied by the SRS resource within a single first time unit and the minimum number of third time units required for all antenna ports of the SRS resource being mapped once.

90. The network device of any of claims 70 to 75, wherein the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource and the number of antenna port groups comprised in the SRS resource; or

the number of antenna ports of the SRS resource and the number of third time unit groups to which all antenna ports of the SRS resource are mapped; or

the number of antenna ports of the SRS resource and the minimum number of third time units required for all antenna ports of the SRS resource being mapped once; or

the number of second time units occupied by the SRS resource within a single first time unit, the number of antenna ports of the SRS resource, the repetition factor of the SRS resource, and the number of frequency hops of a single antenna port of the SRS resource within a single third time unit; or

the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or

the number of second time units occupied by the SRS resource within a single first time unit, the number of antenna ports of the SRS resource, the repetition factor of the SRS resource, and the number of frequency hops comprised in a single frequency hopping period of the SRS resource; or

the number of second time units occupied by the SRS resource within a single first time unit, the number of antenna ports of the SRS resource, and the number of second time units to which a single antenna port of the SRS resource is mapped within a single first time unit; or

the number of second time units occupied by the SRS resource within a single first time unit, the number of antenna ports of the SRS resource, and the number of second time units to which multiple antenna ports of the SRS resource are respectively mapped within a single first time unit.

**91.** The network device of any of claims 70 to 90, wherein determining, based on the first information, the time domain resource and/or the frequency domain resource to which multiple antenna ports of the SRS resource are mapped comprises:
based on the number of antenna ports of the SRS resource and/or indication information sent from the network device to the terminal, determining, based on the first information, the time domain resource and/or the frequency domain resource to which multiple antenna ports of the SRS resource are mapped.

**92.** The network device of any of claims 70 to 90, wherein before receiving the SRS corresponding to the SRS resource sent from the terminal, the operations further comprise:

determining, based on the time domain resource and/or the frequency domain resource to which multiple antenna ports of the SRS resource are mapped, the second information; and
sending the second information to the terminal.

**93.** An apparatus for sounding reference signal, SRS, transmission, comprising:

a first determining unit, used for determining, based on first information, a time domain resource and/or a frequency domain resource to which multiple antenna ports of an SRS resource are mapped, wherein at least two antenna ports among the multiple antenna ports of the SRS resource are mapped to different time domain resources; and
a first sending unit, used for sending, based on the time domain resource and/or the frequency domain resource, an SRS corresponding to the SRS resource to a network device,
wherein the first information comprises one or more of:

a number of antenna ports of the SRS resource; or
a number of second time units occupied by the SRS resource within a single first time unit; or
a repetition factor of the SRS resource; or
a number of SRS antenna ports mapped on a single third time unit, or a number of SRS antenna ports respectively mapped on multiple third time units; or
a number of antenna ports of the SRS resource mapped on a single third time unit, or a number of antenna ports of the SRS resource respectively mapped on multiple third time units; or
a number of second time units to which a single antenna port of the SRS resource is mapped within a single first time unit, or a number of second time units to which multiple antenna ports of the SRS resource are respectively mapped within a single first time unit; or
a number of antenna port groups comprised in the SRS resource; or
a number of third time unit groups to which all antenna ports of the SRS resource are mapped; or
a minimum number of third time units required for all antenna ports of the SRS resource being mapped once; or
a number of frequency hops of a single antenna port of the SRS resource within a single third time unit, or a number of frequency hops of multiple antenna ports of the SRS resource within a single third time unit respectively; or
a number of frequency hops comprised in a single frequency hopping period of the SRS resource; or
a second time unit to which one or more antenna ports of the SRS resource are mapped within a single first time unit.

**94.** The apparatus of claim 93, wherein a number of second time units to which each antenna port of the SRS resource is mapped within a single first time unit is the same.

**95.** The apparatus of claim 94, wherein the number of second time units to which each antenna port of the SRS resource is mapped within a single first time unit is a first value, and the first value is any of:

a value determined based on the number of second time units occupied by the SRS resource within a single first time unit and the number of third time unit groups to which all antenna ports of the SRS resource are mapped; or
a value determined based on the number of second time units occupied by the SRS resource within a single first time unit and the minimum number of third time units required for all antenna ports of the SRS resource being mapped once; or
a value determined based on the number of second time units occupied by the SRS resource within a single first time unit and a value agreed by a protocol; or
the number of second time units to which a single antenna port of the SRS resource is mapped within a single first time unit; or

a value determined based on the number of second time units to which multiple antenna ports of the SRS resource are respectively mapped within a single first time unit; or

a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops comprised in a single frequency hopping period of the SRS resource; or

a value determined based on the repetition factor of the SRS resource and a value agreed by a protocol.

96. The apparatus of claim 94, wherein at least two antenna ports of the SRS resource are mapped to different numbers of second time units within a single first time unit.

97. The apparatus of claim 96, wherein a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops comprised in a single frequency hopping period of the SRS resource; or

a value determined based on the repetition factor of the SRS resource and a value agreed by a protocol.

98. The apparatus of claim 97, wherein a number of second time units to which a second part of antenna ports of the SRS resource are mapped within a single first time unit is a third value, and the third value is any of:

a value determined based on the number of second time units occupied by the SRS resource within a single first time unit, the number of antenna port groups comprised in the SRS resource, and the second value; or

a value determined based on the number of second time units occupied by the SRS resource within a single first time unit, the number of third time unit groups to which all antenna ports of the SRS resource are mapped, and the second value; or

a value determined based on the number of second time units occupied by the SRS resource within a single first time unit, the minimum number of third time units required for all antenna ports of the SRS resource being mapped once, and the second value; or

a value determined based on the number of second time units occupied by the SRS resource within a single first time unit, the number of antenna ports of the SRS resource, the number of SRS antenna ports mapped on a single third time unit, and the second value; or

a value determined based on the number of second time units occupied by the SRS resource within a single first time unit, the number of antenna ports of the SRS resource, the number of SRS antenna ports respectively mapped on multiple third time units, and the second value; or

a value determined based on the number of second time units occupied by the SRS resource within a single first time unit, the number of antenna ports of the SRS resource, the number of antenna ports of the SRS resource mapped on a single third time unit, and the second value; or

a value determined based on the number of second time units occupied by the SRS resource within a single first time unit, the number of antenna ports of the SRS resource, the number of antenna ports of the SRS resource respectively mapped on multiple third time units, and the second value.

99. The apparatus of any of claims 93 to 98, wherein a first antenna port of the SRS resource is mapped to a same set of frequency domain units on all second time units being mapped to within a single first time unit.

100. The apparatus of any of claims 93 to 98, wherein a first antenna port of the SRS resource is mapped to different sets of frequency domain units on different second time units being mapped to within a single first time unit.

101. The apparatus of any of claims 93 to 98, wherein all second time units to which a first antenna port of the SRS resource is mapped within a single first time unit are divided into multiple symbol groups, each symbol group comprises R second time units, and the first antenna port is mapped to different sets of frequency domain units on different symbol groups, and is mapped to a same set of frequency domain units on R second time units within a same symbol group, wherein R is a value of the repetition factor of the SRS resource.

102. The apparatus of claim 99, wherein the same set of frequency domain units is a set consisting of frequency domain units comprised in a full hopping bandwidth of the SRS resource.

103. The apparatus of claim 99, wherein the first antenna port of the SRS resource is mapped to different sets of frequency domain units on multiple first time units, and is mapped to the same set of frequency domain units on all second time units being mapped to within the same first time unit.

104. The apparatus of claim 100, 101 or 103, wherein the different sets of frequency domain units comprise a same number of frequency domain units.

105. The apparatus of claim 104, wherein a number of frequency domain units comprised in any set of frequency domain units is equal to a ratio of a number of frequency domain units comprised in a full hopping bandwidth of the SRS resource to a number of second time units to which the first antenna port is mapped within a single first time unit.

106. The apparatus of claim 102, wherein the SRS resource is not configured for performing frequency hopping transmission, and/or a value of the repetition factor of the SRS resource is equal to the number of second time units occupied by the SRS resource within a single first time unit.

**107.**
The apparatus of claim 103, wherein the SRS resource is configured for performing frequency hopping transmission, and a value of the repetition factor of the SRS resource is equal to a number of second time units to which the first antenna port is mapped within a single first time unit.

**108.**
The apparatus of claim 100, wherein the SRS resource is configured for performing frequency hopping transmission, and/or a value of the repetition factor of the SRS resource is 1.

**109.**
The apparatus of claim 101, wherein the SRS resource is configured for performing frequency hopping transmission, and/or a value of the repetition factor of the SRS resource is greater than or equal to 2.

**110.**
The apparatus of claim 93, wherein a frequency hopping mode used by a frequency domain resource to which a first antenna port of the SRS resource is mapped is a first frequency hopping mode, a second frequency hopping mode, or a third frequency hopping mode,

wherein the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;
the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and
the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, wherein R is a value of the repetition factor of the SRS resource.

**111.** The apparatus of any of claims 93 to 98, wherein the number of antenna port groups comprised in the SRS resource, or the number of third time unit groups to which all antenna ports of the SRS resource are mapped, or the minimum number of third time units required for all antenna ports of the SRS resource being mapped once, is determined based on any of:

the number of antenna ports of the SRS resource and the number of SRS antenna ports mapped on a single third time unit; or
the number of antenna ports of the SRS resource and the number of SRS antenna ports respectively mapped on multiple third time units; or
the number of antenna ports of the SRS resource and the number of antenna ports of the SRS resource mapped on a single third time unit; or
the number of antenna ports of the SRS resource and the number of antenna ports of the SRS resource respectively mapped on multiple third time units; or
the number of second time units occupied by the SRS resource within a single first time unit, the repetition factor of the SRS resource, and the number of frequency hops of a single antenna port of the SRS resource within a single third time unit; or
the number of second time units occupied by the SRS resource within a single first time unit, the repetition factor of the SRS resource, and the number of frequency hops of multiple antenna ports of the SRS resource within a single third time unit respectively; or
the number of second time units occupied by the SRS resource within a single first time unit, the repetition factor of the SRS resource, and the number of frequency hops comprised in a single frequency hopping period of the SRS resource; or
the number of second time units occupied by the SRS resource within a single first time unit and the number of second time units to which a single antenna port of the SRS resource is mapped within a single first time unit; or
the number of second time units occupied by the SRS resource within a single first time unit and the number of second time units to which multiple antenna ports of the SRS resource are respectively mapped within a single first time unit.

**112.**

The apparatus of any of claims 93 to 98, wherein the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or

the number of second time units occupied by the SRS resource within a single first time unit, the number of antenna ports of the SRS resource, and the number of SRS antenna ports respectively mapped on multiple third time units; or

the number of antenna ports of the SRS resource mapped on a single third time unit, the number of second time units occupied by the SRS resource within a single first time unit, and the number of antenna ports of the SRS resource; or

the number of antenna ports of the SRS resource respectively mapped on multiple third time units, the number of second time units occupied by the SRS resource within a single first time unit, and the number of antenna ports of the SRS resource; or

the repetition factor of the SRS resource and the number of frequency hops of a single antenna port of the SRS resource within a single third time unit; or

the repetition factor of the SRS resource and the number of frequency hops of multiple antenna ports of the SRS resource within a single third time unit respectively; or

the repetition factor of the SRS resource and the number of frequency hops comprised in a single frequency hopping period of the SRS resource; or

the number of second time units occupied by the SRS resource within a single first time unit and the number of third time unit groups to which all antenna ports of the SRS resource are mapped; or

the number of second time units occupied by the SRS resource within a single first time unit and the minimum number of third time units required for all antenna ports of the SRS resource being mapped once.

**113.**

The apparatus of any of claims 93 to 98, wherein the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource and the number of antenna port groups comprised in the SRS resource; or

the number of antenna ports of the SRS resource and the number of third time unit groups to which all antenna ports of the SRS resource are mapped; or

the number of antenna ports of the SRS resource and the minimum number of third time units required for all antenna ports of the SRS resource being mapped once; or

the number of second time units occupied by the SRS resource within a single first time unit, the number of antenna ports of the SRS resource, the repetition factor of the SRS resource, and the number of frequency hops of a single antenna port of the SRS resource within a single third time unit; or

the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or

the number of second time units occupied by the SRS resource within a single first time unit, the number of antenna ports of the SRS resource, the repetition factor of the SRS resource, and the number of frequency hops comprised in a single frequency hopping period of the SRS resource; or

the number of second time units occupied by the SRS resource within a single first time unit, the number of antenna ports of the SRS resource, and the number of second time units to which a single antenna port of the SRS resource is mapped within a single first time unit; or

the number of second time units occupied by the SRS resource within a single first time unit, the number of antenna ports of the SRS resource, and the number of second time units to which multiple antenna ports of the SRS resource are respectively mapped within a single first time unit.

**114.**

The apparatus of any of claims 93 to 113, wherein determining, based on the first information, the time domain resource and/or the frequency domain resource to which multiple antenna ports of the SRS resource are mapped comprises:

based on the number of antenna ports of the SRS resource and/or indication information sent from the network device, determining, based on the first information, the time domain resource and/or the frequency domain resource to which multiple antenna ports of the SRS resource are mapped.

**115.**

The apparatus of any of claims 93 to 113, further comprising:
a first receiving unit, used for receiving second information sent from the network device, wherein the second information is used to indicate one or more items of the first information.

**116.**

An apparatus for sounding reference signal, SRS, transmission, comprising:

a second receiving unit, used for receiving, based on a time domain resource and/or a frequency domain resource to which multiple antenna ports of an SRS resource are mapped, an SRS corresponding to the SRS resource sent from a terminal, wherein the time domain resource and/or the frequency domain resource is determined based on first information, or the time domain resource and/or the frequency domain resource is used to determine second information, and the second information is used to indicate one or more items of the first information,

wherein among the multiple antenna ports of the SRS resource, at least two antenna ports are mapped to different time units; and

wherein the first information comprises one or more of:

a number of antenna ports of the SRS resource; or
a number of second time units occupied by the SRS resource within a single first time unit; or
a repetition factor of the SRS resource; or
a number of SRS antenna ports mapped on a single third time unit, or a number of SRS antenna ports respectively mapped on multiple third time units; or
a number of antenna ports of the SRS resource mapped on a single third time unit, or a number of antenna ports of the SRS resource respectively mapped on multiple third time units; or
a number of second time units to which a single antenna port of the SRS resource is mapped within a single first time unit, or a number of second time units to which multiple antenna ports of the SRS resource are respectively mapped within a single first time unit; or
a number of antenna port groups comprised in the SRS resource; or
a number of third time unit groups to which all antenna ports of the SRS resource are mapped; or
a minimum number of third time units required for all antenna ports of the SRS resource being mapped once; or
a number of frequency hops of a single antenna port of the SRS resource within a single third time unit, or a number of frequency hops of multiple antenna ports of the SRS resource within a single third time unit respectively; or
a number of frequency hops comprised in a single frequency hopping period of the SRS resource; or
a second time unit to which one or more antenna ports of the SRS resource are mapped within a single first time unit.

**117.**

The apparatus of claim 116, wherein a number of second time units to which each antenna port of the SRS resource is mapped within a single first time unit is the same.

**118.**

The apparatus of claim 117, wherein the number of second time units to which each antenna port of the SRS resource is mapped within a single first time unit is a first value, and the first value is any of:

a value determined based on the number of second time units occupied by the SRS resource within a single first time unit and the number of third time unit groups to which all antenna ports of the SRS resource are mapped; or
a value determined based on the number of second time units occupied by the SRS resource within a single first time unit and the minimum number of third time units required for all antenna ports of the SRS resource being mapped once; or
a value determined based on the number of second time units occupied by the SRS resource within a single first time unit and a value agreed by a protocol; or
the number of second time units to which a single antenna port of the SRS resource is mapped within a single first time unit; or
a value determined based on the number of second time units to which multiple antenna ports of the SRS resource are respectively mapped within a single first time unit; or
a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops comprised in a single frequency hopping period of the SRS resource; or

a value determined based on the repetition factor of the SRS resource and a value agreed by a protocol.

**119.**
The apparatus of claim 116, wherein at least two antenna ports of the SRS resource are mapped to different numbers of second time units within a single first time unit.

**120.**
The apparatus of claim 119, wherein a number of second time units to which a first part of antenna ports of the SRS resource are mapped within a single first time unit is a second value, and the second value is any of:

a value determined based on the number of second time units occupied by the SRS resource within a single first time unit and the number of third time unit groups to which all antenna ports of the SRS resource are mapped; or

a value determined based on the number of second time units occupied by the SRS resource within a single first time unit and the minimum number of third time units required for all antenna ports of the SRS resource being mapped once; or

a value determined based on the number of second time units occupied by the SRS resource within a single first time unit and a value agreed by a protocol; or

a value determined based on the number of SRS antenna ports mapped on a single third time unit, the number of second time units occupied by the SRS resource within a single first time unit, and the number of antenna ports of the SRS resource; or

a value determined based on the number of SRS antenna ports respectively mapped on multiple third time units, the number of second time units occupied by the SRS resource within a single first time unit, and the number of antenna ports of the SRS resource; or

a value determined based on the number of antenna ports of the SRS resource mapped on a single third time unit, the number of second time units occupied by the SRS resource within a single first time unit, and the number of antenna ports of the SRS resource; or

a value determined based on the number of antenna ports of the SRS resource respectively mapped on multiple third time units, the number of second time units occupied by the SRS resource within a single first time unit, and the number of antenna ports of the SRS resource; or

a value determined based on a value agreed by a protocol, the number of second time units occupied by the SRS resource within a single first time unit, and the number of antenna ports of the SRS resource; or

a value determined based on the repetition factor of the SRS resource and the number of frequency hops of a single antenna port of the SRS resource within a single third time unit; or

a value determined based on the repetition factor of the SRS resource and the number of frequency hops of multiple antenna ports of the SRS resource within a single third time unit respectively; or

a value determined based on the repetition factor of the SRS resource and the number of frequency hops comprised in a single frequency hopping period of the SRS resource; or

a value determined based on the repetition factor of the SRS resource and a value agreed by a protocol.

**121.**

The apparatus of claim 120, wherein a number of second time units to which a second part of antenna ports of the SRS resource are mapped within a single first time unit is a third value, and the third value is any of:

a value determined based on the number of second time units occupied by the SRS resource within a single first time unit, the number of antenna port groups comprised in the SRS resource, and the second value; or

a value determined based on the number of second time units occupied by the SRS resource within a single first time unit, the number of third time unit groups to which all antenna ports of the SRS resource are mapped, and the second value; or

a value determined based on the number of second time units occupied by the SRS resource within a single first time unit, the minimum number of third time units required for all antenna ports of the SRS resource being mapped once, and the second value; or

a value determined based on the number of second time units occupied by the SRS resource within a single first time unit, the number of antenna ports of the SRS resource, the number of SRS antenna ports mapped on a single third time unit, and the second value; or

a value determined based on the number of second time units occupied by the SRS resource within a single first time unit, the number of antenna ports of the SRS resource, the number of SRS antenna ports respectively mapped on multiple third time units, and the second value; or

a value determined based on the number of second time units occupied by the SRS resource within a single first time unit, the number of antenna ports of the SRS resource, the number of antenna ports of the SRS resource mapped on a single third time unit, and the second value; or

a value determined based on the number of second time units occupied by the SRS resource within a single first time unit, the number of antenna ports of the SRS resource, the number of antenna ports of the SRS resource respectively mapped on multiple third time units, and the second value.

**122.**

The apparatus of any of claims 116 to 121, wherein a first antenna port of the SRS resource is mapped to a same set of frequency domain units on all second time units being mapped to within a single first time unit.

**123.**

The apparatus of any of claims 116 to 121, wherein a first antenna port of the SRS resource is mapped to different sets of frequency domain units on different second time units being mapped to within a single first time unit.

**124.**

The apparatus of any of claims 116 to 121, wherein all second time units to which a first antenna port of the SRS resource is mapped within a single first time unit are divided into multiple symbol groups, each symbol group comprises R second time units, and the first antenna port is mapped to different sets of frequency domain units on different symbol groups, and is mapped to a same set of frequency domain units on R second time units within a same symbol group, wherein R is a value of the repetition factor of the SRS resource.

**125.**

The apparatus of claim 122, wherein the same set of frequency domain units is a set consisting of frequency domain units comprised in a full hopping bandwidth of the SRS resource.

**126.**

The apparatus of claim 122, wherein the first antenna port of the SRS resource is mapped to different sets of frequency domain units on multiple first time units, and is mapped to the same set of frequency domain units on all second time units being mapped to within the same first time unit.

**127.**

The apparatus of claim 123, 124 or 126, wherein the different sets of frequency domain units comprise a same number of frequency domain units.

**128.**

The apparatus of claim 127, wherein a number of frequency domain units comprised in any set of frequency domain units is equal to a ratio of a number of frequency domain units comprised in a full hopping bandwidth of the SRS resource to a number of second time units to which the first antenna port is mapped within a single first time unit.

**129.**

The apparatus of claim 125, wherein the SRS resource is not configured for performing frequency hopping transmission, and/or a value of the repetition factor of the SRS resource is equal to the number of second time units occupied by the SRS resource within a single first time unit.

**130.**

The apparatus of claim 126, wherein the SRS resource is configured for performing frequency hopping transmission, and a value of the repetition factor of the SRS resource is equal to a number of second time units to which the first antenna port is mapped within a single first time unit.

**131.**

The apparatus of claim 123, wherein the SRS resource is configured for performing frequency hopping transmission, and/or a value of the repetition factor of the SRS resource is 1.

**132.**

The apparatus of claim 124, wherein the SRS resource is configured for performing frequency hopping transmission, and/or a value of the repetition factor of the SRS resource is greater than or equal to 2.

**133.**

The apparatus of claim 116, wherein a frequency hopping mode used by a frequency domain resource to which a first antenna port of the SRS resource is mapped is a first frequency hopping mode, a second frequency hopping mode, or a third frequency hopping mode,

wherein the first frequency hopping pattern is: among multiple third time units to which the first antenna port is mapped, a first hop of the first antenna port is mapped to a first third time unit, a second hop of the first antenna port is mapped to a second third time unit, and so on, until all hops are mapped, and in case that a remaining unmapped third time unit exists, a same frequency hopping pattern continues to the remaining third time unit;

the second frequency hopping pattern is: among multiple third time units to which the first antenna port is mapped, a first hop of the first antenna port is mapped to a first third time unit and a second third time unit, a second hop of the first antenna port is mapped to a third third time unit and a fourth third time unit, and so on, until all hops are mapped, and in case that a remaining unmapped third time unit exists, a same frequency hopping pattern continues to the remaining third time unit; and

the third frequency hopping mode is: among multiple third time units to which the first antenna port is mapped, a first hop of the first antenna port is mapped to first R third time units, a second hop of the first antenna port is mapped to (R+1)-th to (2*R)-th third time units, and so on, until all hops are mapped, and in case that a remaining unmapped third time unit exists, a same frequency hopping pattern continues to the remaining third time unit, wherein R is a value of the repetition factor of the SRS resource.

**134.**

The apparatus of any of claims 116 to 121, wherein the number of antenna port groups comprised in the SRS resource, or the number of third time unit groups to which all antenna ports of the SRS resource are mapped, or the minimum number of third time units required for all antenna ports of the SRS resource being mapped once, is determined based on any of:

the number of antenna ports of the SRS resource and the number of SRS antenna ports mapped on a single third time unit; or
the number of antenna ports of the SRS resource and the number of SRS antenna ports respectively mapped on multiple third time units; or
the number of antenna ports of the SRS resource and the number of antenna ports of the SRS resource mapped on a single third time unit; or
the number of antenna ports of the SRS resource and the number of antenna ports of the SRS resource respectively mapped on multiple third time units; or
the number of second time units occupied by the SRS resource within a single first time unit, the repetition factor of the SRS resource, and the number of frequency hops of a single antenna port of the SRS resource within a single third time unit; or
the number of second time units occupied by the SRS resource within a single first time unit, the repetition factor of the SRS resource, and the number of frequency hops of multiple antenna ports of the SRS resource within a single third time unit respectively; or
the number of second time units occupied by the SRS resource within a single first time unit, the repetition factor of the SRS resource, and the number of frequency hops comprised in a single frequency hopping period of the SRS resource; or
the number of second time units occupied by the SRS resource within a single first time unit and the number of second time units to which a single antenna port of the SRS resource is mapped within a single first time unit; or
the number of second time units occupied by the SRS resource within a single first time unit and the number of second time units to which multiple antenna ports of the SRS resource are respectively mapped within a single first time unit.

**135.**

The apparatus of any of claims 116 to 121, wherein the number of second time units to which a single antenna port of the SRS resource is mapped within a single first time unit, or the number of second time units to which multiple antenna ports of the SRS resource are respectively mapped within a single first time unit, is determined based on any of:

the number of SRS antenna ports mapped on a single third time unit, the number of second time units occupied by the SRS resource within a single first time unit, and the number of antenna ports of the SRS resource; or

the number of second time units occupied by the SRS resource within a single first time unit, the number of antenna ports of the SRS resource, and the number of SRS antenna ports respectively mapped on multiple third time units; or

the number of antenna ports of the SRS resource mapped on a single third time unit, the number of second time units occupied by the SRS resource within a single first time unit, and the number of antenna ports of the SRS resource; or

the number of antenna ports of the SRS resource respectively mapped on multiple third time units, the number of second time units occupied by the SRS resource within a single first time unit, and the number of antenna ports of the SRS resource; or

the repetition factor of the SRS resource and the number of frequency hops of a single antenna port of the SRS resource within a single third time unit; or

the repetition factor of the SRS resource and the number of frequency hops of multiple antenna ports of the SRS resource within a single third time unit respectively; or

the repetition factor of the SRS resource and the number of frequency hops comprised in a single frequency hopping period of the SRS resource; or

the number of second time units occupied by the SRS resource within a single first time unit and the number of third time unit groups to which all antenna ports of the SRS resource are mapped; or

the number of second time units occupied by the SRS resource within a single first time unit and the minimum number of third time units required for all antenna ports of the SRS resource being mapped once.

**136.**

The apparatus of any of claims 116 to 121, wherein the number of SRS antenna ports mapped on a single third time unit, or the number of SRS antenna ports respectively mapped on multiple third time units, or the number of antenna ports of the SRS resource mapped on a single third time unit, or the number of antenna ports of the SRS resource respectively mapped on multiple third time units, is determined based on any of:

the number of antenna ports of the SRS resource and the number of antenna port groups comprised in the SRS resource; or

the number of antenna ports of the SRS resource and the number of third time unit groups to which all antenna ports of the SRS resource are mapped; or

the number of antenna ports of the SRS resource and the minimum number of third time units required for all antenna ports of the SRS resource being mapped once; or

the number of second time units occupied by the SRS resource within a single first time unit, the number of antenna ports of the SRS resource, the repetition factor of the SRS resource, and the number of frequency hops of a single antenna port of the SRS resource within a single third time unit; or

the number of second time units occupied by the SRS resource within a single first time unit, the number of antenna ports of the SRS resource, the repetition factor of the SRS resource, and the number of frequency hops of multiple antenna ports of the SRS resource within a single third time unit respectively; or

the number of second time units occupied by the SRS resource within a single first time unit, the number of antenna ports of the SRS resource, the repetition factor of the SRS resource, and the number of frequency hops comprised in a single frequency hopping period of the SRS resource; or

the number of second time units occupied by the SRS resource within a single first time unit, the number of antenna ports of the SRS resource, and the number of second time units to which a single antenna port of the SRS resource is mapped within a single first time unit; or

the number of second time units occupied by the SRS resource within a single first time unit, the number of antenna ports of the SRS resource, and the number of second time units to which multiple antenna ports of the SRS resource are respectively mapped within a single first time unit.

**137.**

The apparatus of any of claims 116 to 136, wherein determining, based on the first information, the time domain resource and/or the frequency domain resource to which multiple antenna ports of the SRS resource are mapped comprises:

based on the number of antenna ports of the SRS resource and/or indication information sent from a network device to the terminal, determining, based on the first information, the time domain resource and/or the frequency domain resource to which multiple antenna ports of the SRS resource are mapped.

**138.**

The apparatus of any of claims 116 to 136, wherein before receiving the SRS corresponding to the SRS resource sent from the terminal, the apparatus further comprises:

a second determining unit, used for determining, based on the time domain resource and/or the frequency domain resource to which multiple antenna ports of the SRS resource are mapped, the second information; and
a second sending unit, used for sending the second information to the terminal.

**139.**

A computer-readable storage medium, wherein the computer-readable storage medium stores a computer program, and the computer program is used to cause a computer to perform the method of any of claims 1 to 23, or to perform the method of any of claims 24 to 46.

Determining, based on first information, a time domain
resource and/or a frequency domain resource to which multiple
antenna ports of an SRS resource are mapped, wherein at least
two antenna ports among the multiple antenna ports of the SRS
resource are mapped to different time domain resources

— 100

Sending, based on the time domain resource and/or the
frequency domain resource, an SRS corresponding to the SRS
resource to a network device

— 101

FIG. 1

Receiving, based on a time domain resource and/or a frequency
domain resource to which multiple antenna ports of an SRS
resource are mapped, an SRS corresponding to the SRS resource
sent from a terminal, where the time domain resource and/or the
frequency domain resource is determined based on first
information, or the time domain resource and/or the frequency
domain resource is used to determine second information, and the
second information is used to indicate one or more items of the
first information, where among the multiple antenna ports of the
SRS resource, at least two antenna ports are mapped to different
time units

— 200

FIG. 2

Terminal

Processor ~300

Bus interface

~310
Transceiver

~320
Memory

~330
User interface

FIG. 3

Network device

Processor ~400

Bus interface

~410
Transceiver

~420
Memory

FIG. 4

~500
First determining unit

~510
First sending unit

FIG. 5

~600
Second receiving unit

FIG. 6

## INTERNATIONAL SEARCH REPORT

| International application No. |
|---|
| **PCT/CN2024/075730** |

---

**A.    CLASSIFICATION OF SUBJECT MATTER**

H04L5/00(2006.01)i

According to International Patent Classification (IPC) or to both national classification and IPC

**B.    FIELDS SEARCHED**

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

CNTXT, ENTXTC, WPABS, VEN, ENTXT, CNKI, 3GPP: 探测参考, 天线, 端口, 时, 频, 资源, 两, 多, 不同, 各, SRS, resource, RB, two, multi+, each, different, N, antenna, port, time, frequency

**C.    DOCUMENTS CONSIDERED TO BE RELEVANT**

| Category* | Citation of document, with indication, where appropriate, of the relevant passages | Relevant to claim No. |
|---|---|---|
| X | CN 111726868 A (RESEARCH INSTITUTE OF CHINA MOBILE COMMUNICATIONS CORPORATION et al.) 29 September 2020 (2020-09-29) claims 1-22, and description, paragraphs [0043]-[0122] | 1-139 |
| X | CN 114785467 A (HUAWEI TECHNOLOGIES CO., LTD.) 22 July 2022 (2022-07-22) claims 1-26, and description, paragraphs [0111]-[0381] | 1-139 |
| A | US 2022239420 A1 (QUALCOMM INC.) 28 July 2022 (2022-07-28) entire document | 1-139 |
| A | NOKIA et al. "SRS transmission for beam management" *3GPP TSG RAN WG1 Meeting #89 R1-1708912*, 19 May 2017 (2017-05-19), entire document | 1-139 |

☐ Further documents are listed in the continuation of Box C.    ☑ See patent family annex.

| | | |
|---|---|---|
| *   Special categories of cited documents: | "T" | later document published after the international filing date or priority date and not in conflict with the application but cited to understand the principle or theory underlying the invention |
| "A"   document defining the general state of the art which is not considered to be of particular relevance | | |
| "D"   document cited by the applicant in the international application | "X" | document of particular relevance; the claimed invention cannot be considered novel or cannot be considered to involve an inventive step when the document is taken alone |
| "E"   earlier application or patent but published on or after the international filing date | | |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&" | document member of the same patent family |
| "P"   document published prior to the international filing date but later than the priority date claimed | | |

| Date of the actual completion of the international search | Date of mailing of the international search report |
|---|---|
| **10 April 2024** | **18 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/075730**

| Patent document cited in search report | | | Publication date (day/month/year) | Patent family member(s) | | | Publication date (day/month/year) |
|---|---|---|---|---|---|---|---|
| CN | 111726868 | A | 29 September 2020 | None | | | |
| CN | 114785467 | A | 22 July 2022 | JP | 2021503819 | A | 12 February 2021 |
| | | | | WO | 2019096248 | A1 | 23 May 2019 |
| | | | | US | 2020374074 | A1 | 26 November 2020 |
| | | | | EP | 3672102 | A1 | 24 June 2020 |
| | | | | US | 2022140973 | A1 | 05 May 2022 |
| | | | | EP | 4054088 | A1 | 07 September 2022 |
| | | | | US | 2020052853 | A1 | 13 February 2020 |
| | | | | CN | 109802801 | A | 24 May 2019 |
| | | | | CN | 111295847 | A | 16 June 2020 |
| US | 2022239420 | A1 | 28 July 2022 | WO | 2022159257 | A2 | 28 July 2022 |
| | | | | EP | 4282080 | A2 | 29 November 2023 |
| | | | | CN | 116848792 | A | 03 October 2023 |

Form PCT/ISA/210 (patent family annex) (July 2022)

**EP 4 668 644 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310181174